# EUROPEAN PATENT APPLICATION

(11) **EP 4 023 386 A1**
(43) Date of publication of application: **06.07.2022**
(21) Application number: 20859129.7
(22) Date of filing: 27.08.2020
(51) Int. Cl.: B23K 26/02, B23K 26/00, B23K 26/082

(54) **PROCESSING SYSTEM**

(30) Priority: 30.08.2019 WO PCT/JP2019/034089
(71) Applicant: NIKON CORPORATION, Minato-ku Tokyo 108-6290 (JP)
(72) Inventor: SATO, Shinji, Tokyo 108-6290 (JP)
(74) Representative: Hoffmann Eitle
(86) International application number: PCT/JP2020/032294
(87) International publication number: WO 2021/039881

(57) **Abstract**

A process system is a process system performing a processing process on an object by irradiating at least a part of the object with processing light from a processing light source, and includes a combining optical system combining optical path of measurement light from a measurement light source and optical path of the processing light from the processing light source; an irradiation optical system irradiating the object with the processing light and the measurement light from the combining optical system; a position change apparatus changing a relative positional relationship between the object and a light concentration position of the processing light from the irradiation optical system; an light reception apparatus receiving, through the irradiation optical system, light generated by the measurement light with which a surface of the object is irradiated; and a control apparatus controlling the position change apparatus by using output from the light reception apparatus.

## Description

### Technical Field

The present invention relates to a technical field of a process system that performs a process on an object.

### Background Art

A processing system that is configured to process an object is one example of a process system that performs a process the target of which is the object. For example, a Patent Literature 1 discloses a processing system that forms a structure by irradiating a surface of an object with a processing light. This type of process system is required to properly control a relative positional relationship between the object and a member that is used to perform the process the target of which is the object.

### Citation List

### Patent Literature

Patent Literature 1: US4,994,639B

### Summary of Invention

A first aspect provide a process system that performs a processing process on an object by irradiating at least a part of the object with a processing light from a processing light source,
the process system including: a division optical system that divides a measurement light from a measurement light source into a first light propagating on a first optical path and a second light propagating on a second optical path; an irradiation optical system that irradiates a surface of the object with the processing light and irradiates the surface of the object with the second light; a position change apparatus that changes a relative positional relationship between the object and the irradiation optical system; a detection apparatus that detects an interfering light generated by an interference between the first light and a third light, which propagates on a third optical path, of a light generated due to the second light with which the surface of the object is irradiated; and a control apparatus that controls the position change apparatus by using an output from the detection apparatus.

A second aspect provides a process system that performs a processing process on an object by irradiating at least a part of the object with a processing light from a processing light source, the process system including: a division optical system that divides a measurement light from a measurement light source into a first light propagating on a first optical path and a second light propagating on a second optical path; an irradiation optical system that irradiates at least a part of a surface of the object with the processing light and irradiates the surface of the object with the second light; a position change apparatus that changes a relative positional relationship between the object and a condensed position of the processing light; a detection apparatus that detects an interfering light generated by an interference between the first light and a third light, which propagates on a third optical path, of a light generated due to the second light with which the surface of the object is irradiated; and a control apparatus that controls the position change apparatus by using an output from the detection apparatus.

A third aspect provides a process system that performs at least one process of a process using an affection member that affects an object and a process using an obtaining member that obtains an information of the object, the process system including: a division optical system that divides a measurement light from a measurement light source into a first light propagating on a first optical path and a second light propagating on a second optical path; an irradiation optical system that irradiates a surface of the object with the second light; a detection apparatus that detects an interfering light generated by an interference between the first light and a third light, which propagates on a third optical path, of a light generated due to the second light with which the surface of the object is irradiated; a position change apparatus that changes a relative positional relationship between the object and at least one of the affection member and the obtaining member; and a control apparatus that controls the position change apparatus by using an output from the detection apparatus.

### Brief Description of Drawings

[FIG. 1] FIG. 1 is a cross-sectional view that schematically illustrates an entire structure of a processing system in a first embodiment.
[FIG. 2] FIG. 2 is a system configuration diagram that illustrates a system configuration of the processing system in the first embodiment.
[FIG. 3] FIG. 3 is a cross-sectional view that illustrates a structure of a processing head in the first embodiment.
[FIG. 4] FIG. 4 is a timing chart that illustrates the measurement light entering a detector and an interfering light detected by the detector.
[FIG. 5] FIG. 5 is a cross-sectional view that illustrates a structure of a head driving system.
[FIG. 6] FIG. 6 is a cross-sectional view that illustrates a structure of a second driving system of the head driving system.
[FIG. 7] FIG. 7A is a planar view that illustrates a plurality of irradiation areas on a workpiece and FIG. 7B is a perspective view that illustrates the plurality of irradiation areas on the workpiece.
[FIG. 8] FIG. 8A and FIG. 8B are cross-sectional views that illustrate the processing head and the workpiece a positional relationship between which is controlled so that distances between the plurality of irradiation areas and the processing head are equal to each other.
[FIG. 9] FIG. 9 is a cross-sectional view that illustrates a processed area on which a removal processing is already performed and a non-processed area on which the removal processing is not performed.
[FIG. 10] FIG. 10 is a cross-sectional view that illustrates the processing head and the workpiece the positional relationship between which is controlled so that a distance between the processed area and the processing head is equal to a distance between the non-processed area and the processing head.
[FIG. 11] FIG. 11 is a cross-sectional view that illustrates a processed area on which an additive processing is already performed and a non-processed area on which the additive processing is not performed.
[FIG. 12] FIG. 12 is a cross-sectional view that illustrates the processing head and the workpiece the positional relationship between which is controlled so that a distance between the processed area and the processing head is equal to a distance between the non-processed area and the processing head.
[FIG. 13] FIG. 13 is a planar view that illustrates the plurality of irradiation areas on the workpiece.
[FIG. 14] FIG. 14 is a planar view that illustrates the plurality of irradiation areas on the workpiece.
[FIG. 15] FIG. 15 is a planar view that illustrates one example of a moving trajectory of a target irradiation area of a measurement light.
[FIG. 16] FIG. 16 is a planar view that illustrates one example of a positional relationship between a target shot area and a measurement shot area.
[FIG. 17] FIG. 17 is a planar view that illustrates the workpiece that is irradiated with a processing light.
[FIG. 18] FIG. 18A is a top view that illustrates one example of the workpiece and FIG. 18B is a perspective view that illustrates one example of the workpiece.
[FIG. 19] FIG. 19 is a planar view that illustrates the plurality of irradiation areas on the workpiece in a case where a third alignment operation is performed.
[FIG. 20] FIG. 20 is a planar view that illustrates the workpiece on which an alignment mark is formed.
[FIG. 21] FIG. 21 is a cross-sectional view that schematically illustrates an entire structure of a processing system in a second embodiment.
[FIG. 22] FIG. 22 is a cross-sectional view that illustrates one example of a structure of a processing apparatus including an end effector.

### Description of Embodiments

Next, with reference to drawings, embodiments of a process system, a robot system, a control apparatus and a computer program will be described. In the below described description, the embodiments of the process system, the robot system, the control apparatus and the computer program will be described by using a processing system SYS that processes a workpiece W (namely, that performs a process a target of which is the workpiece W) by using a processing light EL. However, the present invention is not limited to the below described embodiments.

Moreover, in the below described description, a positional relationship of various components included in the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially a vertical direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Processing System SYSa in First Embodiment

Firstly, a processing system SYS in a first embodiment (in the below described description, the processing system SYS in the first embodiment is referred to as a "processing system SYSa") will be described.

### (1-1) Structure of Processing System SYSa

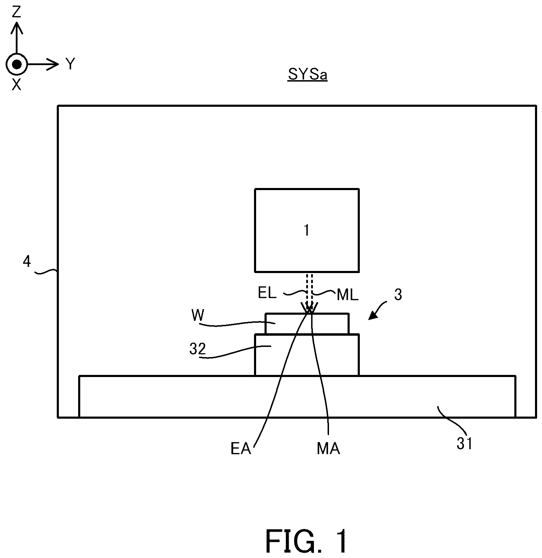

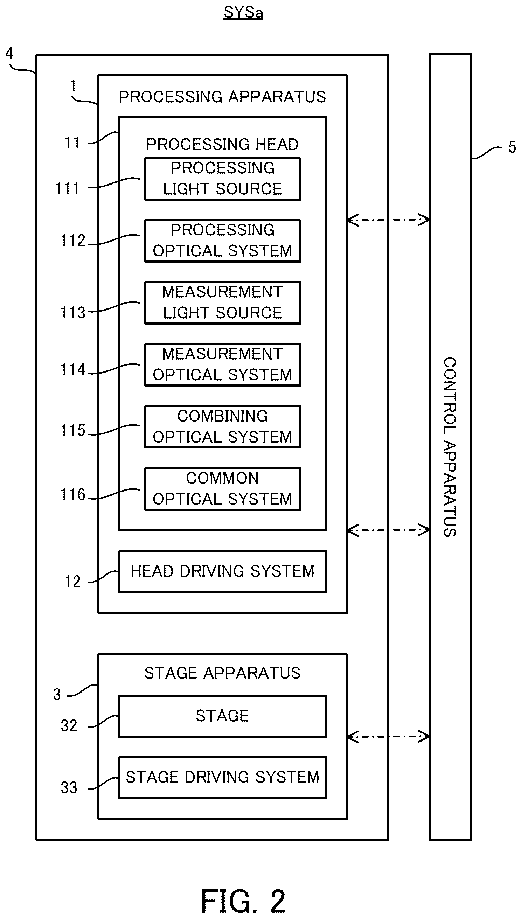

Firstly, with reference to FIG. 1 and FIG. 2, a structure of the processing system SYSa in the first embodiment will be described. FIG. 1 is a cross-sectional view that schematically illustrates the structure of the processing system SYSa in the first embodiment. FIG. 2 is a system configuration diagram that illustrates a system configuration of the processing system SYSa in the first embodiment.

As illustrated in FIG. 1 and FIG. 2, the processing system SYSa includes a processing apparatus 1, a stage apparatus 3 and a control apparatus 5. The processing apparatus 1 and the stage apparatus 3 are housed in a housing 4. However, thee processing apparatus 1 and the stage apparatus 3 may not be housed in the housing 4. Namely, the processing system SYSa may not include the housing for containing the processing apparatus 1 and the stage apparatus 3.

The processing apparatus 1 is configured to process the workpiece W under the control of the control apparatus 5. The processing apparatus 1 is configured to perform a processing process on the workpiece W under the control of the control apparatus 5. The workpiece W may be a metal, may be an alloy (for example, a duralumin and the like), may be a semiconductor (for example, a silicon), may be a resin (for example, CFRP (Carbon Fiber Reinforced Plastic), a painting material (as one example a film of painting material that is coated on a base member) and the like), may be a glass or may be an object that is made from any other material, for example.

The processing apparatus 1 irradiates the workpiece W with the processing light EL in order to process the workpiece W. The processing light EL may be any type of light, as long as the workpiece W is processed by irradiating the workpiece W with it. In the first embodiment, an example in which the processing light EL is a laser light will be described, however, the processing light EL may be a light that is different from the laser light. Furthermore, a wavelength of the processing light EL may be any wavelength, as long as the workpiece W is processed by irradiating the workpiece W with it. For example, the processing light EL may be a visible light, or may be an invisible light (for example, at least one of infrared light, ultraviolet light and the like). The processing light EL includes a pulsed light, however, may not include the pulsed light. In other words, the processing light EL may be a continuous light.

The processing apparatus 1 may perform a removal processing (typically, a cutting processing or a grinding processing) for removing a part of the workpiece W by irradiating the workpiece W with the processing light EL. When the removal processing is performed, the processing apparatus 1 may form a riblet structure on the workpiece W. The riblet structure is a structure by which a resistance (especially, a frictional resistance, a turbulent frictional resistance) of the surface of the workpiece W to a fluid is reducible. The riblet structure may include a structure in which a plurality of grooves each of which extends along a first direction (for example, the Y axis direction) that is along a surface of the workpiece W are arranged along a second direction (for example, the X axis direction) that is along the surface of the workpiece W and that intersects with the first direction, for example. When the workpiece W includes a base member and a coat of paint (a paint layer) that is coated on the base member, the processing apparatus 1 may remove a part of the coat of paint so that the base member is not exposed from the coat of paint to thereby form the riblet structure of the unremoved remaining coat of paint on the surface of the base member.

The processing apparatus 1 may perform an additive processing for adding new structural object to the workpiece W by irradiating the workpiece W with the processing light EL, in addition to or instead of the removal processing. In this case, the processing apparatus 1 may form the above described riblet structure on the surface of the workpiece W by performing the additive processing. The processing apparatus 1 may perform a marking processing for forming a desired mark on the surface of the workpiece W by irradiating the workpiece W with the processing light EL, in addition to or instead of at least one of the removal processing and the additive processing.

Furthermore, the processing apparatus 1 is configured to measure the workpiece W under the control of the control apparatus 5. The processing apparatus 1 irradiates the workpiece W with a measurement light ML in order to measure the workpiece W. The measurement light ML may be any type of light, as long as the workpiece W is measurable by irradiating the workpiece W with it. In the first embodiment, an example in which the measurement light ML is a laser light will be described, however, the measurement light ML may be a light that is different from the laser light. Furthermore, a wavelength of the measurement light ML may be any wavelength, as long as the workpiece W is measurable by irradiating the workpiece W with it. For example, the measurement light ML may be a visible light, or may be an invisible light (for example, at least one of infrared light, ultraviolet light and the like). The measurement light ML includes a pulsed light.

The wavelength of the measurement light ML may be different from the wavelength of the processing light EL. For example, the wavelength of the measurement light ML may be shorter than the wavelength of the processing light EL. As one example, a light having a wavelength of 266 nm or 355 nm may be used as the measurement light ML and a light having a wavelength of 532 nm, 1 µm or 10 µm may be used as the processing light EL. In this case, a diameter of a spot of the measurement light ML on the workpiece W is smaller than a diameter of a spot of the processing light EL on the workpiece W. As a result, a measurement resolution by the measurement light ML is higher than a processing resolution by the processing light EL. However, the wavelength of the measurement light ML may not be shorter than the wavelength of the processing light EL. The wavelength of the measurement light ML may be same as the wavelength of the processing light EL.

The processing apparatus 1 may be configured to measure a state of the workpiece W. The state of the workpiece W may include a position of the workpiece W. The position of the workpiece W may include a position of the surface of the workpiece W. The position of the surface of the workpiece W may include a position of each surface part, which is obtained by segmentalizing the surface of the workpiece W, in at least one of the X axis direction, the Y axis direction and the Z axis direction. The state of the workpiece W may include a distance D between a processing head 11 described below and the workpiece W. The distance D between the processing head 11 and the workpiece W may mean a distance in a direction along the Z axis that is an axis connecting the processing head 11 and the workpiece W. The distance D between the processing head 11 and the workpiece W is typically a distance between a reference part of the processing head 11 and the surface of the workpiece W. The distance between the reference part of the processing head 11 and the surface of the workpiece W may include a distance between the reference part of the processing head 11 and each surface part that is obtained by segmentalizing the surface of the workpiece W. The state of the workpiece W may include the shape (for example, a three-dimensional shape) of the workpiece W. The shape of the workpiece W may include the shape of the surface of the workpiece W. The shape of the surface of the workpiece W may include a direction of each surface part, which is obtained by segmentalizing the surface of the workpiece W (for example, a direction of a normal line of each surface part, and it is substantially equivalent to an inclined amount of each surface part with respect to at least one of the X axis, the Y axis and the Z axis), in addition to or instead of the above described position of the surface of the workpiece W. The state of the workpiece W may include a size (for example, a size in at least one of the X axis direction, the Y axis direction and the Z axis direction) of the workpiece W.

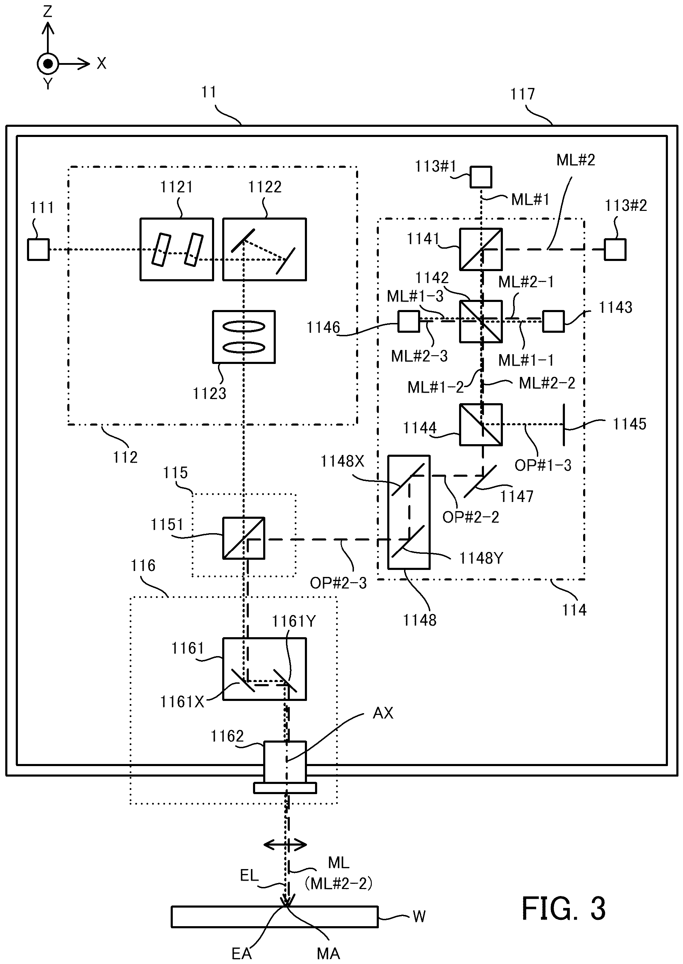

In order to process and measure the workpiece W, the processing apparatus 1 includes the processing head 11 that emits each of the processing light EL and the measurement light ML to the workpiece W and a head driving system 12 that moves the processing head 11. The processing head 11 means any member that is configured to emit each of the processing light EL and the measurement light ML to the workpiece W. Thus, the processing head 11 may not mean a member that is attached to a front edge of a certain member, although it is expressed by a wording of head. Thus, the processing head 11 may be referred to as a processing member. It can be said that the processing head 11 is an apparatus that performs a processing process on the workpiece W. It can be said that the processing head 11 is an apparatus that measures the workpiece W. Furthermore, the processing head 11 includes a processing light source 111, a processing optical system 112, a measurement light source 113, a measurement optical system 114, a combining optical system 115 and a common optical system 116. Note that the structures of the processing head 11 and the head driving system 12 will be described later in detail with reference to FIG. 3 to FIG. 6. However, the processing head 11 may have any structure as long as it is configured to emit each of the processing light EL and the measurement light ML toward the workpiece W. The processing head 11 may not include at last one of the processing light source 111, the processing optical system 112, the measurement light source 113, the measurement optical system 114, the combining optical system 115 and the common optical system 116 as long as it is configured to emit each of the processing light EL and the measurement light ML toward the workpiece W.

The head driving system 12 moves the processing head 11 along at least one of the X axis, the Y axis, the Z axis, the θX direction, the θY direction and the θZ direction. When the processing head 11 moves, a positional relationship between a stage 32 described below (furthermore, the workpiece W placed on the stage 32) and the processing head 11 changes. Namely, when the processing head 11 moves, a relative position between the processing head 11 and each of the stage 32 and the workpiece W changes. Therefore, moving the processing mead 11 may be regarded to be equivalent to changing the positional relationship between the processing head 11 and each of the stage 32 and the workpiece W. Furthermore, when the positional relationship between the processing head 11 and each of the stage 32 and the workpiece W changes, a positional relationship between each optical system (namely, at least one of the processing optical system 112, the measurement optical system 114, the combining optical system 115 and the common optical system 116) of the processing head 11 and each of the stage 32 and the workpiece W changes. Therefore, moving the processing mead 11 may be regarded to be equivalent to changing the positional relationship between each optical system of the processing head 11 and each of the stage 32 and the workpiece W. Furthermore, when the positional relationship between the processing head 11 and each of the stage 32 and the workpiece W changes, a positional relationship between a housing 117 of the processing head 11 and each of the stage 32 and the workpiece W changes. Therefore, moving the processing mead 11 may be regarded to be equivalent to changing the positional relationship between the housing 117 of the processing head 11 and each of the stage 32 and the workpiece W. Furthermore, when the positional relationship between the processing head 11 and each of the stage 32 and the workpiece W changes, a position of each of a target irradiation area EA and a target irradiation area MA, which are set on the workpiece W, on the workpiece W changes. Note that the target irradiation area EA is an area that is expected to be irradiated with the processing light EL by the processing head 11. The target irradiation area MA is an area that is expected to be irradiated with the measurement light ML by the processing head 11. Therefore, moving the processing mead 11 may be regarded to be equivalent to changing the position of each of the target irradiation area EA and the target irradiation area MA on the workpiece W. Furthermore, when the positional relationship between the processing head 11 and each of the stage 32 and the workpiece W changes, an irradiation position that is actually irradiated with each of the processing light EL and the measurement light ML on the workpiece W changes. Therefore, moving the processing mead 11 may be regarded to be equivalent to changing the irradiation position of each of the processing light EL and the measurement light ML on the workpiece W.

The stage apparatus 3 includes a surface plate 31 and a stage 32. The surface plate 31 is placed on a bottom surface of the housing 4 (or on a support surface such as a floor surface on which the housing 4 is placed). The stage 32 is placed on the surface plate 31. A non-illustrated vibration isolator may be disposed between the surface plate 31 and the bottom surface of the housing 4 or the support surface such as the floor surface on which the housing 4 is placed. Furthermore, a non-illustrated support frame that supports the processing apparatus 1 may be placed on the plate surface 31.

The workpiece W is placed on the stage 32. The stage 32 may hold the placed workpiece W. For example, the stage 32 may hold the workpiece W by vacuum-sucking and / or electrostatically sucking the workpiece W. Alternatively, the stage 32 may not hold the placed workpiece W.

The stage 32 is movable on the surface plate 31 while the workpiece W being placed thereon under the control of the control apparatus 5. The stage 32 is movable relative to at least one of the surface plate 31 and the processing apparatus 1. The stage 32 is movable along each of the X axis direction and the Y axis direction. In this case, the stage 32 is movable along a stage driving plane (a movement plane) that is parallel to the XY plane. The stage 32 may be further movable along at least one of the Z axis direction, θX direction, the θY direction and the θZ direction. In order to move the stage 32, the stage apparatus 3 includes a stage driving system 33. The stage driving system 33 moves the stage 32 by using any motor (for example, a linear motor and the like). Furthermore, the stage apparatus 3 may include a stage position measurement device for measuring a position of the stage 32. The stage position measurement device 34 may include at least one of an encoder and a laser interferometer, for example.

When the stage 32 moves, the positional relationship between the stage 32 (furthermore, the workpiece W placed on the stage 32) and the processing head 11 changes. Namely, when the stage 32 moves, the relative position between the processing head 11 and each of the stage 32 and the workpiece W changes. Therefore, moving the stage 32 may be regarded to be equivalent to changing the positional relationship between the processing head 11 and each of the stage 32 and the workpiece W. Furthermore, when the positional relationship between the processing head 11 and each of the stage 32 and the workpiece W changes, the positional relationship between each optical system of the processing head 11 and each of the stage 32 and the workpiece W changes. Therefore, moving the stage 32 may be regarded to be equivalent to changing the positional relationship between each optical system of the processing head 11 and each of the stage 32 and the workpiece W. Furthermore, when the positional relationship between the processing head 11 and each of the stage 32 and the workpiece W changes, a positional relationship between the housing 117 of the processing head 11 and each of the stage 32 and the workpiece W changes. Therefore, moving the stage 32may be regarded to be equivalent to changing the positional relationship between the housing 117 of the processing head 11 and each of the stage 32 and the workpiece W. Furthermore, when the positional relationship between the processing head 11 and each of the stage 32 and the workpiece W changes, a position of each of the target irradiation area EA and the target irradiation area MA on the workpiece W changes. Therefore, moving the stage 32 may be regarded to be equivalent to changing the position of each of the target irradiation area EA and the target irradiation area MA on the workpiece W. Furthermore, when the positional relationship between the processing head 11 and each of the stage 32 and the workpiece W changes, the irradiation position that is actually irradiated with each of the processing light EL and the measurement light ML on the workpiece W changes. Therefore, moving the stage 32 may be regarded to be equivalent to changing the irradiation position of each of the processing light EL and the measurement light ML on the workpiece W.

The control apparatus 5 controls the operation of the processing system SYSa. For example, the control apparatus 5 sets a processing condition of the workpiece W and controls the processing apparatus 1 and the stage apparatus 3 so that the workpiece W is processed on the basis of the set processing condition. For example, the control apparatus 5 sets a measurement condition of the workpiece W and controls the processing apparatus 1 and the stage apparatus 3 so that the workpiece W is measured on the basis of the set measurement condition.

The control apparatus 5 may include an arithmetic apparatus and a storage apparatus, for example. The arithmetic apparatus may include at least one of a CPU (Central Processing Unit) and a GPU (Graphical Processing Unit), for example. The control apparatus 5 serves as an apparatus for controlling the operation of the processing system SYSa by means of the arithmetic apparatus executing a computer program. The computer program is a computer program that allows the control apparatus 5 (for example, the arithmetic apparatus) to execute (namely, to perform) a below described operation that should be executed by the control apparatus 5. Namely, the computer program is a computer program that allows the control apparatus 5 to function so as to make the processing system SYSa execute the below described operation. The computer program executed by the arithmetic apparatus may be recorded in the storage apparatus (namely, a recording medium) of the control apparatus 5, or may be recorded in any recording medium (for example, a hard disk or a semiconductor memory) that is built in the control apparatus 5 or that is attachable to the control apparatus 5. Alternatively, the arithmetic apparatus may download the computer program that should be executed from an apparatus disposed at the outside of the control apparatus 5 through a network interface.

The control apparatus 5 may not be disposed in the processing system SYSa, and may be disposed at the outside of the processing system SYSa as a server or the like. In this case, the control apparatus 5 may be connected to the processing system SYSa through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 5 and the processing system SYSa may be configured to transmit and receive various information through the network. Moreover, the control apparatus 5 may be configured to transmit information such as a command and a control parameter to the processing system SYSa through the network. The processing system SYSa may include a receiving apparatus that receives the information such as the command and the control parameter from the control apparatus 5 through the network. Alternatively, a first control apparatus that performs a part of the processing performed by the control apparatus 5 may be disposed in the processing system SYSa and a second control apparatus that performs another part of the processing performed by the control apparatus 5 may be disposed at the outside of the processing system SYSa.

Note that the recording medium recording therein the computer program that should be executed by the arithmetic apparatus may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the control apparatus 5 by means of the control apparatus 5 (namely, a computer) executing the computer program, may be realized by a hardware such as a predetermined gate array (a FPGA, an ASIC) of the control apparatus 5, or may be realized in a form in which the logical process block and a partial hardware module that realizes an partial element of the hardware are combined.

### (1-2) Structure of Processing Head 11

Next, with reference to FIG. 3, one example of the structure of the processing head 11 will be described. FIG. 3 is a cross-sectional view that illustrates one example of the structure of the processing head 11.

As illustrated in FIG. 3, the processing head 11 includes the processing light source 111, the processing optical system 112, the measurement light source 113, the measurement optical system 114, the combining optical system 115 and the common optical system 116. The processing light source 111, the processing optical system 112, the measurement light source 113, the measurement optical system 114, the combining optical system 115 and the common optical system 116 are housed in the housing 117. However, at least one of the processing light source 111, the processing optical system 112, the measurement light source 113, the measurement optical system 114, the combining optical system 115 and the common optical system 116 may not be housed in the housing 117.

Since the processing head 11 includes each optical system (namely, each optical system is provided to the processing head 11), each optical system is disposed at a position that is fixed relative to the processing head (for example, relative to the housing 117). Namely, each optical system also moves in a same manner as the processing head 11 (for example, the housing 117) along with the movement of the processing head 11 by the head driving system 12.

The processing light source 111 is configured to generate the processing light EL. When the processing light EL is the laser light, the processing light source 111 may include a laser diode, for example. Furthermore, the processing light source 111 may be a light source that is configured to pulsed-oscillate. In this case, the processing light source 111 is configured to generate the pulsed light (for example, a pulsed light having an ON time shorter than pico-seconds) as the processing light EL. The processing light source 111 emits the generated processing light EL toward the processing optical system 112.

The processing optical system 112 is an optical system to which the processing light EL emitted from the processing light source 111 enters. The processing optical system 112 is an optical system that emits, toward the combining optical system 115, the processing light EL entering the processing optical system 112. Namely, the processing optical system 112 is an optical system that guides the processing light EL emitted from the processing light source 111 to the combining optical system 115. The workpiece W is irradiated with the processing light EL emitted from the processing optical system 112 through the combining optical system 115 and the common optical system 116. Thus, it can be said that the processing optical system 112 is an optical system that emits (irradiates) the processing light EL toward the workpiece W through the combining optical system 115 and the common optical system 116.

The processing optical system 112 includes a position adjustment optical system 1121, an angle adjustment optical system 1122 and a focus adjustment optical system 1123. The position adjustment optical system 1121 is configured to adjust an emitting position of the processing light EL from the processing optical system 112. The position adjustment optical system 1121 may include a parallel plate that is configured to incline with respect to a propagating direction of the processing light EL, for example, and changes the emitting position of the processing light EL by changing an inclined angle of the parallel plate. In an example illustrated in FIG. 3, the position adjustment optical system 1121 is configured to set the emitting position of the processing light EL to be any position in a YZ plane by using a plurality of parallel plates whose inclined directions are different from each other. When the emitting position of the processing light EL from the processing optical system 112 is changed, an incident angle of the processing light EL (for example, an incident angle relative to the workpiece W) is changed. The angle adjustment optical system 1122 is configured to adjust an emitting angle of the processing light EL from the processing optical system 112. The angle adjustment optical system 1122 may include a mirror that is configured to incline with respect to the propagating direction of the processing light EL, for example, and change the emitting angle of the processing light EL by changing an inclined angle of the mirror. In the example illustrated in FIG. 3, the angle adjustment optical system 1122 is configured to set the emitting angle of the processing light EL to be any angle that allows the processing light EL to be emitted toward any direction around the θX axis and the θY axis by using a plurality of mirrors whose inclined angles are different from each other. When the emitting angle of the processing light EL from the processing optical system 112 is changed, the irradiation position of the processing light EL (for example, the irradiation position on the workpiece W) is changed. The focus adjustment optical system 1123 is configured to adjust (typically, change) a condensed position of the processing light EL. Thus, the focus adjustment optical system 1123 serves as a focus change member that is configured to adjust the condensed position of the processing light EL. The focus adjustment optical system 1123 includes a plurality of lenses at least one of which is movable along an optical axis. The focus adjustment optical system 1123 adjusts the condensed position of the processing light EL relative to the surface of the workpiece W in the optical axis direction by moving at least one lens. Specifically, the focus adjustment optical system 1123 adjusts the condensed position of the processing light EL relative to the surface of the workpiece W in a direction along an optical axis AX of an fθ lens 1162 (in the example illustrated in FIG. 3, the Z axis direction and a direction that intersects with the surface of the workpiece W) by moving at least one lens. Note that the focus adjustment optical system 1123 may typically adjust the condensed position of the processing light EL so that the condensed position of the processing light EL is located at the surface of the workpiece W. However, the processing optical system 112 may not include at least one of the position adjustment optical system 1121, the angle adjustment optical system 1122 and the focus adjustment optical system 1123. The processing optical system 112 may include another optical element or optical member (this may be referred to as an optical system, the same applies to the below described description), in addition to or instead of at least one of the position adjustment optical system 1121, the angle adjustment optical system 1122 and the focus adjustment optical system 1123.

The processing light EL emitted from the processing optical system 112 enters the combining optical system 115. The combining optical system 115 includes a beam splitter (for example, a polarized beam splitter) 1151. The beam splitter 1151 emits, toward the common optical system 116, the processing light EL entering the beam splitter 1151. In the example illustrated in FIG. 3, the processing light EL entering the beam splitter 1151 passes through a polarization split surface to be emitted toward the common optical system 116. Thus, in the example illustrated in FIG. 3, the processing light EL enters the polarization split surface of the beam splitter 1151 in a state where it has a polarized direction by which it is allowed to pass through the polarization split surface (a polarized direction by which it is a p-polarized light with respect to the polarization split surface).

The processing light EL emitted from the combining optical system 115 enters the common optical system 116. The common optical system 116 emits, toward the workpiece W, the processing light EL entering the common optical system 116. The common optical system 116 includes a Galvano mirror 1161 and the fθ lens 1162.

The processing light EL emitted from the combining optical system 115 enters the Galvano mirror 1161. The Galvano mirror 1161 changes the irradiation position of the processing light EL on the workpiece W by deflecting the processing light EL (namely, by changing the emitting angle of the processing light EL). Namely, the Galvano mirror 1161 changes a position of the target irradiation area EA, which is set on the workpiece W or on an optical path of the processing light EL as an area that is expected to be irradiated with the processing light EL, by deflecting the processing light EL. Note that the change of the emitting angle of the processing light EL by the Galvano mirror 1161 is converted into the change of the irradiation position of the processing light EL (namely, the position of the target irradiation area EA) by the fθ lens 1162, because the Galvano mirror 1161 is disposed at or near an incident pupil position of the fθ lens 1162. For example, the Galvano mirror 1161 includes a X scanning mirror 1161X and a Y scanning mirror 1161Y. Each of the X scanning mirror 1161X and the Y scanning mirror 1161Y is an inclined angle variable mirror whose angle relative to the optical path of the processing light EL entering the Galvano mirror 1161 is changed. The X scanning mirror 1161X deflects the processing light EL by swinging or rotating (namely, changing the angle of the X scanning mirror 1161X relative to the optical path of the processing light EL) so as to change the irradiation position along the X axis direction of the processing light EL on the workpiece W. The Y scanning mirror 1161Y deflects the processing light EL by swinging or rotating (namely, changing the angle of the Y scanning mirror 1161Y relative to the optical path of the processing light EL) so as to change the irradiation position along the Y axis direction of the processing light EL on the workpiece W.

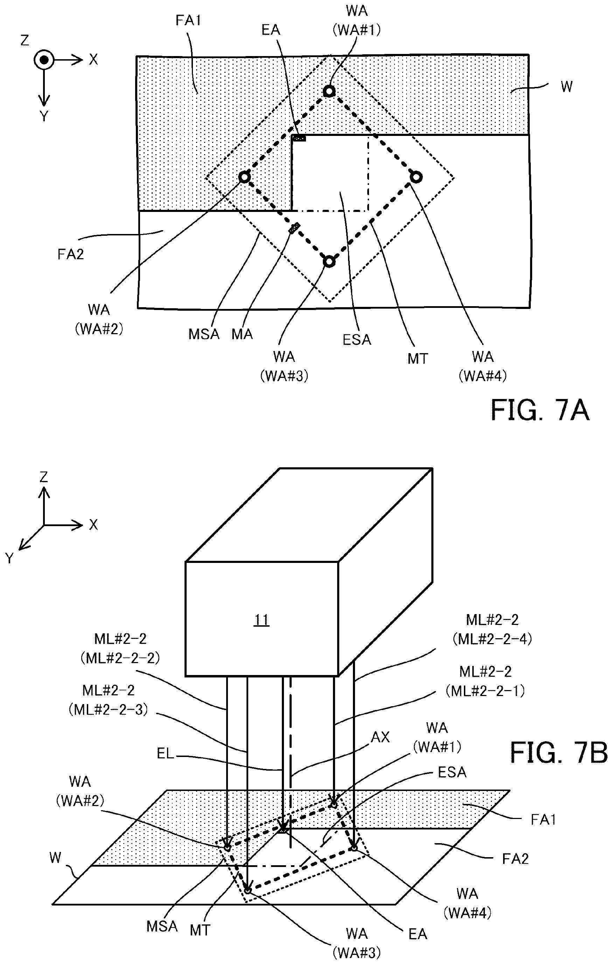

The processing light EL emitted from the Galvano mirror 1161 enters the fθ lens 1162. Thus, the Galvano mirror 1161 is disposed on the optical path of the processing light EL between the combining optical system 115 and the fθ lens 1162. The fθ lens 1162 is disposed on the optical path of the processing light EL between the Galvano mirror 1161 and the workpiece W. The fθ lens 1162 is disposed on the optical path of the processing light EL between the Galvano mirror 1161 and the target irradiation area EA. The fθ lens 1162 is an optical system for irradiating the workpiece W with the processing light EL from the Galvano mirror 1161. The fθ lens 1162 is an optical system for irradiating the target irradiation area EA with the processing light EL from the Galvano mirror 1161. Especially, the fθ lens 1162 is an optical system for condensing the processing light EL from the Galvano mirror 1161 on the workpiece W. Thus, the fθ lens 1162 irradiates the workpiece W with the processing light EL in a converged state. As a result, the workpiece W is processed by the processing light EL. Note that the fθ lens 1162 may be referred to as an irradiation optical system, because it irradiates the workpiece W (especially, irradiates the surface of the workpiece W) with the processing light EL. Note that a moving range of the target irradiation area EA that moves on the workpiece W due to the deflection of the processing light EL by the Galvano mirror 1161 may be referred to as a processing shot area ESA (see FIG. 7 described below). In other words, the target irradiation area EA may be regarded to move in the processing shot area ESA.

Next, the measurement light source 113 is configured to generate the measurement light ML When the measurement light ML is the laser light, the measurement light source 113 may include a laser diode, for example. Especially, since the measurement light ML includes the pulsed light, the measurement light source 113 is a light source that is configured to pulsed-oscillate. In this case, the measurement light source 113 is configured to generate the pulsed light (for example, a pulsed light having an ON time shorter than pico-seconds) as the measurement light ML The measurement light source 113 emits the generated measurement light ML toward the processing optical system 114.

Especially in the first embodiment, the measurement light source 113 includes a light comb light source. The light comb light source is a light source that is configured to generate, as the pulsed light, a light including frequency components that are arranged with equal interval on a frequency axis (hereinafter, it is referred to as a "light frequency comb"). In this case, the measurement light source 113 emits, as the measurement light ML, the pulsed light including the frequency components that are arranged with equal interval on the frequency axis. However, the measurement light source 113 may not include the light comb light source.

In an example illustrated in FIG. 1, the processing head 11 includes a plurality of measurement light sources 113. For example, the processing head 11 includes the measurement light source 113#1 and the measurement light source 113#2. The plurality of measurement light sources 113 emit a plurality of measurement lights ML whose phases are synchronized with each other and that are coherent, respectively. For example, oscillation frequencies of the plurality of measurement light sources 113 may be different. Thus, the plurality of measurement lights ML respectively emitted from the plurality of measurement light sources 113 are the plurality of measurement lights ML having different pulse frequencies (for example, the number of the pulsed light per unit time, and an inverse number of an emitting cycle of the pulsed light). As one example, the measurement light source 113#1 may emit the measurement light ML#1 whose pulse frequency is 25GHz and the measurement light source 113#2 may emit the measurement light ML#2 whose pulse frequency is 25GHz + α (for example, 100Hz). However, the processing head 11 may include a single measurement light source 113.

The measurement optical system 114 is an optical system to which the measurement light ML emitted from the measurement light source 113 enters. The measurement optical system 114 is an optical system that emits, toward the combining optical system 115, the measurement light ML entering the measurement optical system 114. Namely, the measurement optical system 114 is an optical system that guides the measurement light ML emitted from the measurement light source 113 to the combining optical system 115. The workpiece W is irradiated with the measurement light ML emitted from the measurement optical system 114 through the combining optical system 115 and the common optical system 116. Thus, it can be said that the measurement optical system 114 is an optical system that emits the measurement light ML toward the workpiece W through the combining optical system 115 and the common optical system 116.

The measurement optical system 114 is optically separated from the processing optical system 112. Thus, the optical path of the processing light EL between the processing light source 111 and the combining optical system 115 is optically separated from the optical path of the measurement light ML between the measurement light source 113 and the combining optical system 115. Note that a state where one optical system is optically separated from another optical system may mean a state where an optical path of one optical system does not overlap with an optical path of another optical system.

The measurement optical system 114 includes a beam splitter 1141, a beam splitter 1142, a detector 1143, a beam splitter 1144, a mirror 1145, a detector 1146, a mirror 1147 and a Galvano mirror 1148, for example.

The measurement light ML emitted from the measurement light source 113 enters the beam splitter 1141. Specifically, the measurement light ML emitted from the measurement light source 113#1 (hereinafter, it is referred to as the "measurement light ML#1") and the measurement light ML emitted from the measurement light source 113#2 (hereinafter, it is referred to as the "measurement light ML#2") enter the beam splitter 1141. The beam splitter 1141 emits, toward the beam splitter 1142, the measurement lights ML#1 and ML#2 entering the beam splitter 1141.

The beam splitter 1142 reflects, toward the detector 1143, a measurement light ML#1-1 that is a part of the measurement light ML#1 entering the beam splitter 1142. The beam splitter 1142 emits, toward the beam splitter 1144, a measurement light ML#1-2 that is another part of the measurement light ML#1 entering the beam splitter 1142. Namely, the beam splitter 1142 serves as a division optical system that divides the measurement light ML#1 into the measurement light ML#1-1 that propagates in an optical path extending from the beam splitter 1142 to the detector 1143 and the measurement light ML#1-2 that propagates in an optical path extending from the beam splitter 1142 to the beam splitter 1144. The beam splitter 1142 reflects, toward the detector 1143, a measurement light ML#2-1 that is a part of the measurement light ML#2 entering the beam splitter 1142. The beam splitter 1142 emits, toward the beam splitter 1144, a measurement light ML#2-2 that is another part of the measurement light ML#2 entering the beam splitter 1142. Namely, the beam splitter 1142 serves as a division optical system that divides the measurement light ML#2 into the measurement light ML#2-1 that propagates in an optical path extending from the beam splitter 1142 to the detector 1143 and the measurement light ML#2-2 that propagates in an optical path extending from the beam splitter 1142 to the beam splitter 1144.

The measurement lights ML#1-1 and ML#2-1 emitted from the beam splitter 1142 enter the detector 1143. The detector 1143 detects an interfering light generated by an interference between the measurement light ML#1-1 and the measurement light ML#2-1. Namely, the detector 1143 detects an interfering signal based on the interfering light generated by the interference between the measurement light ML#1-1 and the measurement light ML#2-1. Specifically, the detector 1143 detects the interfering light by optically receiving the interfering light. Thus, the detector 1143 may include a light reception element (a light reception part and typically a photoelectron conversion element) that is configured to optically receive a light. A detected result by the detector 1143 is outputted to the control apparatus 5.

The measurement lights ML#1-2 and ML#2-2 emitted from the beam splitter 1142 enter the beam splitter 1144. The beam splitter 1144 emits, toward the mirror 1145, at least a part of the measurement light ML#1-2 entering the beam splitter 1144. The beam splitter 1144 emits, toward the mirror 1147, at least a part of the measurement light ML#2-2 entering the beam splitter 1144. Namely, the beam splitter 1144 serves as a division optical system that divides the measurement lights ML#1-2 and ML#2-2 (namely, substantially, the measurement light ML from the measurement light source 113), which enters the beam splitter 1144 from the same direction, into the measurement light ML#1-2 that propagates in an optical path extending from the beam splitter 1144 to the mirror 1145 and the measurement light ML#2-2 that propagates in an optical path extending from the beam splitter 1144 to the mirror 1147.

The measurement light ML#1-2 emitted from the beam splitter 1144 enters the mirror 1145. The measurement light ML#1-2 entering the mirror 1145 is reflected by a reflection surface (the reflection surface may be referred to as a reference surface) of the mirror 1145. Specifically, the mirror 1145 reflects, toward the beam splitter 1144, the measurement light ML#1-2 entering the mirror 1145. Namely, the mirror 1145 emits (returns) the measurement light ML#1-2, which enters the mirror 1145, toward the beam splitter 1144 as a measurement light ML#1-3 that is a reflection light thereof. The measurement light ML#1-3 emitted from the mirror 1145 enters the beam splitter 1144. The beam splitter 1144 emits, toward the beam splitter 1142, the measurement light ML#1-3 entering the beam splitter 1144. The measurement light ML#1-3 emitted from the beam splitter 1144 enters the beam splitter 1142. The beam splitter 1142 emits, toward the detector 1146, the measurement light ML#1-3 entering the beam splitter 1142.

On the other hand, the measurement light ML#2-2 emitted from the beam splitter 1144 enters the mirror 1147. The mirror 1147 reflects, toward the Galvano mirror 1148, the measurement light ML#2-2 entering the mirror 1147. Namely, the mirror 1147 emits, toward the Galvano mirror 1148, the measurement light ML#2-2 entering the mirror 1147.

The Galvano mirror 1148 changes an irradiation position of the measurement light ML#2-2 on the workpiece W by deflecting the measurement light ML#2-2 (namely, by changing an emitting angle of the measurement light ML#2-2). Namely, the Galvano mirror 1148 changes a position of the target irradiation area MA, which is set on the workpiece W or on an optical path of the measurement light ML#2-2 as an area that is expected to be irradiated with the measurement light ML#2-2, by deflecting the measurement light ML#2-2. For example, the Galvano mirror 1148 includes a X scanning mirror 1148X and a Y scanning mirror 1148Y. Each of the X scanning mirror 1148X and the Y scanning mirror 1148Y is an inclined angle variable mirror whose angle relative to the optical path of the measurement light ML#2-2 entering the Galvano mirror 1148 is changed. The X scanning mirror 1148X deflects the measurement light ML#2-2 by swinging or rotating (namely, changing the angle of the X scanning mirror 1148X relative to the optical path of the measurement light ML#2-2) so as to change the irradiation position along the X axis direction of the measurement light ML#2-2 on the workpiece W. The Y scanning mirror 1148Y deflects the measurement light ML#2-2 by swinging or rotating (namely, changing the angle of the Y scanning mirror 1148Y relative to the optical path of the measurement light ML#2-2) so as to change the irradiation position along the Y axis direction of the measurement light ML#2-2 on the workpiece W. Note that the Galvano mirror 1148 may be referred to as an irradiation position change optical system, because the irradiation position of the measurement light ML#2-2 is changed by the Galvano mirror 1148.

The Galvano mirror 1148 emits the deflected measurement light ML#2-2 toward the combining optical system 115. The measurement light ML#2-2 emitted from the Galvano mirror 1148 enters the combining optical system 115. The beam splitter 1151 of the combining optical system 115 emits, toward the common optical system 116, the measurement light ML#2-2 entering the beam splitter 1151. In the example illustrated in FIG. 3, the measurement light ML#2-2 entering the beam splitter 1151 is reflected by the polarization split surface to be emitted toward the common optical system 116. Thus, in the example illustrated in FIG. 3, the measurement light ML#2-2 enters the polarization split surface of the beam splitter 1151 in a state where it has a polarized direction by which it is allowed to be reflected by the polarization split surface (a polarized direction by which it is a s-polarized light with respect to the polarization split surface).

Here, not only the measurement light ML#2-2 but also the processing light EL enter the beam splitter 1151 as described above. Namely, both of the measurement light ML#2-2 and the processing light EL pass through the beam splitter 1151. The beam splitter 1151 emits, toward same direction (namely, toward the same common optical system 116), the processing light EL and the measurement light ML#2-2 that respectively enter the beam splitter 1151 from different directions. Therefore, the beam splitter 1151 substantially serves as an optical system that combines the processing light EL and the measurement light ML#2-2. Note that a direction in which each of the processing light EL and the measurement light ML#2-2 is emitted from the above described beam splitter 1151 may be a direction in which each of the processing light EL and the measurement light ML#2-2 is emitted so that the processing light EL and the measurement light ML#2-2 enter the common optical system 116 that is located at an emission side of the combining optical system 115. The directions in which the processing light EL and the measurement light ML#2-2 are emitted may be slightly different as long as the processing light EL and the measurement light ML#2-2 enter the common optical system 116.

Note that the combining optical system 115 may have any structure as long as it is configured to combine the processing light EL and the measurement light ML#2-2. For example, the combining optical system 115 may combine the processing light EL and the measurement light ML#2-2 by using a dichroic mirror that reflects a light in a certain wavelength band and through which a light in another wavelength band passes, in addition to or instead of the beam splitter 1151.

The measurement light ML#2-2 emitted from the combining optical system 115 enters the common optical system 116. The common optical system 116 emits, toward the workpiece W, the measurement light ML#2-2 entering the common optical system 116.

Specifically, the measurement light ML#2-2 emitted from the combining optical system 115 enters the Galvano mirror 1161. The Galvano mirror 1161 changes the irradiation position of the measurement light ML#2-2 on the workpiece W by deflecting the measurement light ML#2-2. Namely, the Galvano mirror 1161 changes a position of the target irradiation area MA, which is set on the workpiece W or on an optical path of the measurement light ML#2-2 as an area that is irradiated with the measurement light ML#2-2, by deflecting the measurement light ML#2-2. Note that a change of an emitting angle of the measurement light ML#2-2 by the Galvano mirror 1161 is converted into the change of the irradiation position of the measurement light ML#2-2 (namely, the position of the target irradiation area MA) by the fθ lens 1162, because the Galvano mirror 1161 is disposed at or near the incident pupil position of the fθ lens 1162. The X scanning mirror 1161X deflects the measurement light ML#2-2 by swinging or rotating (namely, changing the angle of the X scanning mirror 1161X relative to the optical path of the measurement light ML#2-2) so as to change the irradiation position along the X axis direction of the measurement light ML#2-2 on the workpiece W. The Y scanning mirror 1161Y deflects the measurement light ML#2-2 by swinging or rotating (namely, changing the angle of the Y scanning mirror 1161Y relative to the optical path of the measurement light ML#2-2) so as to change the irradiation position along the Y axis direction of the measurement light ML#2-2 on the workpiece W. Note that the Galvano mirror 1161 may be referred to as an irradiation position change optical system, because the irradiation position of the measurement light ML#2-2 (furthermore, the irradiation position of the processing light EL) is changed by the Galvano mirror 1161.

The measurement light ML#2-2 emitted from the Galvano mirror 1161 enters the fθ lens 1162. The fθ lens 1162 is an optical system for condensing the measurement light ML#2-2 from the Galvano mirror 1161 on the workpiece W. The fθ lens 1162 is an optical system for irradiating the workpiece W with the measurement light ML#2-2 from the Galvano mirror 1161. The fθ lens 1162 is an optical system for irradiating the target irradiation area MA with the measurement light ML#2-2 from the Galvano mirror 1161. Thus, the fθ lens 1162 is disposed on the optical path of the measurement light ML#2-2 between the Galvano mirror 1161 and the target irradiation area MA. Especially, the fθ lens 1162 irradiates the workpiece W with the measurement light ML#2-2 in a converged state. As a result, the workpiece W is measured by the measurement light ML (specifically, the measurement light ML#2-2). Note that the fθ lens 1162 may be referred to as an irradiation optical system, because it irradiates the workpiece W (especially, irradiates the surface of the workpiece W) with the measurement light ML#2-2. Note that a moving range of the target irradiation area MA that moves on the workpiece W due to the deflection of the measurement light ML#2-2 by the Galvano mirror 1161 may be referred to as a measurement shot area MSA (see FIG. 7 described below). In other words, the target irradiation area MA may be regarded to move in the measurement shot area MSA.

Here, not only the measurement light ML#2-2 but also the processing light EL enter the common optical system 116 as described above. Namely, the processing light EL and the measurement light ML#2-2 combined by the combining optical system 115 enters the common optical system 116. Therefore, both of the processing light EL and the measurement light ML#2-2 pass through the same common optical system 116 (specifically, the same Galvano mirror 1161 and the same fθ lens 1162).

Thus, the Galvano mirror 1161 may change the irradiation position of the processing light EL on the workpiece W and the irradiation position of the measurement light ML#2-2 on the workpiece W in synchronization with each other. The Galvano mirror 1161 may change the irradiation position of the processing light EL on the workpiece W and the irradiation position of the measurement light ML#2-2 on the workpiece W in conjunction with each other. Namely, the Galvano mirror 1161 may change the relative position of the target irradiation area EA relative to the workpiece W and the relative position of the target irradiation area MA relative to the workpiece W in synchronization with and / or in conjunction with each other.

Moreover, the fθ lens 1162 emits, toward a direction from the fθ lens 1162 to the workpiece W, both of the processing light EL and the measurement light ML in order to irradiate the workpiece W with both of the processing light EL and the measurement light ML Namely, the fθ lens 1162 emits both of the processing light EL and the measurement light ML toward the same direction. The fθ lens 1162 emits the measurement light ML toward a direction that is same as a direction in which the processing light EL is emitted from the fθ lens 1162. The fθ lens 1162 emits the processing light EL toward a direction that is same as a direction in which the measurement light ML is emitted from the fθ lens 1162.

On the other hand, as described above, the measurement light ML#2-2 is emitted toward the workpiece W through the Galvano mirror 1148 and the processing light EL is emitted toward the workpiece W without passing though the Galvano mirror 1148. Thus, the processing system SYSa may move the irradiation position of the measurement light ML#2-2 on the workpiece W independently relative to the irradiation position of the processing light EL on the workpiece W. The processing system SYSa may move the target irradiation area MA of the measurement light ML#2-2 independently relative to the target irradiation area EA of the processing light EL. The processing system SYSa may change the irradiation position of the processing light EL on the workpiece W and the irradiation position of the measurement light ML#2-2 on the workpiece W independently. The processing system SYSa may change the position of the target irradiation area EA and the position of the target irradiation area MA independently. The processing system SYSa may change a positional relationship between the irradiation position of the processing light EL on the workpiece W and the irradiation position of the measurement light ML#2-2 on the workpiece W.

When the workpiece W is irradiated with the measurement light ML#2-2, a light due to the irradiation of the measurement light ML#2-2 is generated from the workpiece W. Namely, when the workpiece W is irradiated with the measurement light ML#2-2, the light due to the irradiation of the measurement light ML#2-2 is emitted from the workpiece W. The light emitted from the workpiece W due to the irradiation of the measurement light ML#2-2 (namely, the light due to the irradiation of the measurement light ML#2-2) may include at least one of the measurement light ML#2-2 reflected by the workpiece W (namely, the reflection light), the measurement light ML#2-2 scattered by the workpiece W (namely, a scattering light), the measurement light ML#2-2 diffracted by the workpiece W (namely, a diffraction light) and the measurement light ML#2-2 passing through the workpiece W (namely, a transmitted light).

At least a part of the light emitted from the workpiece W due to the irradiation of the measurement light ML#2-2 (hereinafter, this light is referred to as a "measurement light ML#2-3) enters the common optical system 116. The measurement light ML#2-3 entering the common optical system 116 enters the combining optical system 115 through the fθ lens 1162 and the Galvano mirror 1161. The beam splitter 1151 of the combining optical system 115 emits, toward the measurement optical system 114, the measurement light ML#2-3 entering the beam splitter 1151. In the example illustrated in FIG. 3, the measurement light ML#2-3 entering the beam splitter 1151 is reflected by the polarization split surface to be emitted toward the measurement optical system 114. Thus, in the example illustrated in FIG. 3, the measurement light ML#2-3 enters the polarization split surface of the beam splitter 1151 in a state where it has a polarized direction by which it is allowed to be reflected by the polarization split surface.

The measurement light ML#2-3 emitted from the combining optical system 115 enters the mirror 1147 through the Galvano mirror 1148 of the measurement optical system 114. The mirror 1147 reflects, toward the beam splitter 1144, the measurement light ML#2-3 entering the mirror 1147. The beam splitter 1144 emits, toward the beam splitter 1142, at least a part of the measurement light ML#2-3 entering the beam splitter 1144. The beam splitter 1142 emits, toward the detector 1146, the measurement light ML#2-3 entering the beam splitter 1142. Namely, at least a part of the light generated due to the measurement light ML#2-2, which propagates in an optical path OP#2-2 reaching the workpiece W after passing through the mirror 1147, the Galvano mirror 1148, the combining optical system 115 and the common optical system 116 in this sequence from the beam splitter 1144, with which the surface of the workpiece W is irradiated enters the detector 1146 as the measurement light ML#2-3. The measurement light ML#2-3, which is the light generated due to the measurement light ML#2-2 which propagates in the optical path OP#2-2 and with which the surface of the workpiece W is irradiated, that reaches the detector 1146 by passing through an optical path OP#2-3 reaching the detector 1146 after passing through the common optical system 116, the combining optical system 115, the Galvano mirror 1148, the mirror 1147, the beam splitter 1144 and the beam splitter 1142 in this sequence enters the detector 1146. Note that the measurement light ML#2-3 may be referred to as a measuring light or an object light.

Furthermore, as described above, not only the measurement light ML#2-3 but also the measurement light ML#1-3 enter the detector 1146. Specifically, the measurement light ML#1-3 that reaches the detector 1146 by passing through an optical path OP#1-3 reaching the detector 1146 after passing through the mirror 1145, the beam splitter 1144 and the beam splitter 1142 from the beam splitter 1144 in this sequence enters the detector 1146. The measurement light ML#1-3 that reaches the detector 1146 by passing through the optical path OP#1-3 that is generated by the mirror 1145 (in other words, the optical path OP#1-3 that is through the mirror 1145) enters the detector 1146. Note that the measurement light ML#1-3 may be referred to as a reference light.

Here, the measurement light ML#1-3 and the measurement light ML#2-3 correspond to the plurality of measurement lights ML (especially, the plurality of light frequency combs) whose phases are synchronized with each other and that are coherent. This is because the measurement light sources 113#1 and 113#2 emit the measurement lights ML#1 and ML#2 whose phases are synchronized with each other and that are coherent, respectively, as described above. As a result, the detector 1146 detects an interfering light generated by an interference between the measurement light ML#1-3 and the measurement light ML#2-3. Namely, the detector 1146 detects an interfering signal based on the interfering light generated by the interference between the measurement light ML#1-3 and the measurement light ML#2-3. Specifically, the detector 1146 detects the interfering light by optically receiving the interfering light. Thus, the detector 1146 may include a light reception element (a light reception part) that is configured to optically receive a light. A detected result by the detector 1146 is outputted to the control apparatus 5.

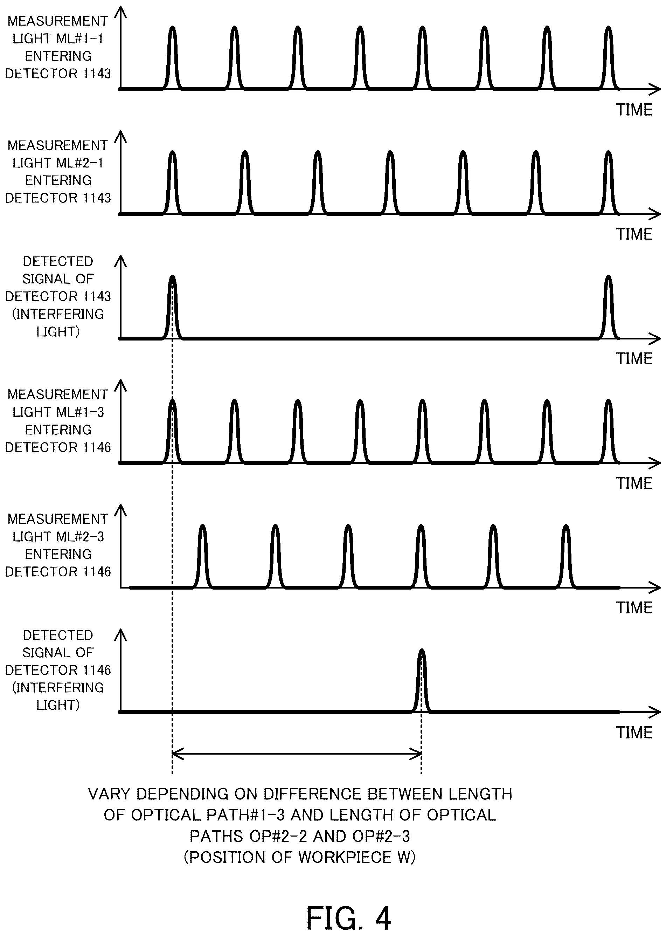

The control apparatus 5 calculates the state of the workpiece W on the basis of the detected result by the detector 1143 (namely, an output of the detector 1143) and the detected result by the detector 1146 (namely, an output of the detector 1146). Here, with reference to FIG. 4, a principle for calculating the state of the workpiece W on the basis of the detected result by the detector 1143 and the detected result by the detector 1146 will be described.

FIG. 4 is a timing chart that illustrates the measurement light ML#1-1 entering the detector 1143, the measurement light ML#2-1 entering the detector 1143, the interfering light detected by the detector 1143, the measurement light ML#1-3 entering the detector 1146, the measurement light ML#2-3 entering the detector 1146 and the interfering light detected by the detector 1146. Since the pulse frequency of the measurement light ML#1 is different from the pulse frequency of the measurement light ML#2, a pulse frequency of the measurement light ML#1-1 is different from a pulse frequency of the measurement light ML#2-1. Therefore, the interfering light generated by the interference between the measurement light ML#1-1 and the measurement light ML#2-1 is an interfering light in which a pulsed light appears in synchronization with a timing at which the pulsed light of the measurement light ML#1-1 and the pulsed light of the measurement light ML#2-1 enter the detector 1143 at the same time. Similarly, a pulse frequency of the measurement light ML#1-3 is different from a pulse frequency of the measurement light ML#2-3. Therefore, the interfering light generated by the interference between the measurement light ML#1-3 and the measurement light ML#2-3 is an interfering light in which a pulsed light appears in synchronization with a timing at which the pulsed light of the measurement light ML#1-3 and the pulsed light of the measurement light ML#2-3 enter the detector 1146 at the same time.

Here, a position (a position along a time axis) of the pulsed light of the interfering light detected by the detector 1146 changes depending on a difference between a length of the optical path OP#1-3 including an optical path through which the measurement light ML#1-3 passes and a length of the optical paths OP#2-2 and OP#2-3 including an optical path through which the measurement light ML#2-3 passes. Furthermore, the length of the optical paths OP#2-2 and OP#2-3 changes depending on a positional relationship between the measurement optical system 114 (especially, the detector 1146) and the workpiece W and the length of the optical path OP#1-3 does not change depending on the positional relationship between the measurement optical system 114 (especially, the detector 1146) and the workpiece W. This is because the measurement light ML#2-3 enters the detector 1146 through the workpiece W and the measurement light ML#1-3 enters the detector 1146 without going through the workpiece W. As a result, the position of the pulsed light of the interfering light detected by the detector 1146 changes depending on the positional relationship between the measurement optical system 114 (especially, the detector 1146) and the workpiece W. On the other hand, a position (a position along a time axis) of the pulsed light of the interfering light detected by the detector 1143 does not change depending on the positional relationship between the measurement optical system 114 and the workpiece W. This is because the measurement lights ML#1-1 and ML#2-1 enter the detector 1143 without going through the workpiece W. Therefore, it can be said that a difference in time between the pulsed light of the interfering light detected by the detector 1143 and the pulsed light of the interfering light detected by the detector 1146 indirectly indicates the positional relationship between the measurement optical system 114 and the workpiece W (typically, a distance between the measurement optical system 114 and the workpiece W). Furthermore, since each optical system of the measurement optical system 114 is disposed in the housing 117 of the processing head 11 (namely, the position of each optical system is fixed relative to the processing head 11), it can be said that the difference in time between the pulsed light of the interfering light detected by the detector 1143 and the pulsed light of the interfering light detected by the detector 1146 indirectly indicates the positional relationship between the processing head 11 and the workpiece W (typically, a distance D between the processing head 11 and the workpiece W). For example, it can be said that the difference in time between the pulsed light of the interfering light detected by the detector 1143 and the pulsed light of the interfering light detected by the detector 1146 indirectly indicates a positional relationship between the fθ lens 1162 of the processing head 11 and the workpiece W (typically, a distance D between the fθ lens 1162 and the workpiece W).

Thus, the control apparatus 5 may calculate the state of the workpiece W on the basis of the difference in time between the pulsed light of the interfering light detected by the detector 1143 and the pulsed light of the interfering light detected by the detector 1146. Specifically, the control apparatus 5 may calculate the difference between the length of the optical path OP#1-3 and the length of the optical paths OP#2-2 and OP#2-3 on the basis of the difference in time between the pulsed light of the interfering light detected by the detector 1146 and the pulsed light of the interfering light detected by the detector 1143. Furthermore, the control apparatus 5 may calculate the state of the workpiece W on the basis of the optical path difference information related to the calculated difference (namely, a measured amount of the difference between the length of the optical path OP#1-3 and the length of the optical paths OP#2-2 and OP#2-3). More specifically, the control apparatus 5 may calculate the relative positional relationship between the workpiece W and the processing head 11 on the basis of the optical path difference information. For example, the control apparatus 5 may calculate a distance between the processing head 11 and an irradiation area WA (an irradiated part, the same applies to the below described description) of the workpiece W that is irradiated with the measurement light ML#2-2 on the basis of the optical path difference information. Namely, the control apparatus 5 may obtain an information related to a position of the irradiation area WA of the workpiece W that is irradiated with the measurement light ML#2-2. Furthermore, when a plurality of parts of the workpiece W are irradiated with the measurement light ML#2-2 and / or the surface of the workpiece W is swept by the measurement light ML#2-2, the control apparatus 5 may calculate the shape of at least a part of the workpiece W on the basis of the distance D between the processing head 11 and each of the plurality of irradiation areas WA on the workpiece W.

A distance information related to the distance D between the workpiece W and the processing head 11 that is calculated on the basis of the optical path difference information (namely, a position information related to the relative positional relationship between the workpiece W and the processing head 11 that is calculated on the basis of the optical path difference information, the same applies to the below described description) may be used to control the processing system SYSa. Specifically, the distance information may be used to control the processing apparatus 1. The distance information may be used to control the processing head 11. The distance information may be used to control the head driving system 12. The distance information may be used to control the stage apparatus 3. The distance information may be used to control the stage driving system 33.

For example, the control apparatus 5 may control the relative positional relationship between the workpiece W and the processing head 11 on the basis of the distance information. Namely, the control apparatus 5 may control, on the basis of the distance information, an apparatus that is configured to control (typically, that is configured to change) the relative positional relationship between the workpiece W and the processing head 11. At least one of the head driving system 12 and the stage driving system 33 is one example of the apparatus that is configured to control the relative positional relationship between the workpiece W and the processing head 11. Note that an operation for controlling the relative positional relationship between the workpiece W and the processing head 11 may be regarded to be substantially equivalent to an operation for controlling the positional relationship between the workpiece W and each optical system of the processing head 11, because the processing head 11 includes each optical system (for example, at least one of the processing optical system 112, the measurement optical system 114, the combining optical system 115 and the common optical system 116). Especially, the operation for controlling the relative positional relationship between the workpiece W and the processing head 11 may be regarded to be substantially equivalent to an operation for controlling the positional relationship between the workpiece W and the fθ lens 1162.

The operation for controlling the relative positional relationship between the workpiece W and the processing head 11 may include an operation for controlling (typically, changing) the positional relationship between the workpiece W and the processing head 11 to allow the relative positional relationship between the workpiece W and the processing head 11, which is not a predetermined positional relationship, to be the predetermined positional relationship. The operation for controlling the relative positional relationship between the workpiece W and the processing head 11 may include an operation for controlling the positional relationship between the workpiece W and the processing head 11 to maintain the relative positional relationship between the workpiece W and the processing head 11, which is already the predetermined positional relationship, in the predetermined positional relationship.

When the relative positional relationship between the workpiece W and the processing head 11 is maintained in the predetermined positional relationship, the processing head 11 may irradiate the workpiece W that is substantially stationary relative to the processing head 11 with the processing light EL. Namely, the processing head 11 may process the workpiece W that is substantially stationary relative to the processing head 11. Thus, a processing quality (for example, a processing accuracy) of the workpiece W improves, compared to a case where the workpiece W that is not substantially stationary relative to the processing head 11 (for example, that moves) is processed. Note that a positional relationship that allows the processing shot area ESA set at a desired position on the workpiece W to be properly irradiated with the processing light EL is one example of the "predetermined positional relationship". The processing shot area ESA indicates the moving range of the target irradiation area EA by the Galvano mirror 1161, as described above. Namely, the processing shot area ESA indicates an area on the workpiece W that is scannable with the processing light EL by the Galvano mirror 1161 without moving the processing head 11 and the stage 32.

In this case, the processing system SYSa may process the workpiece W by a below described procedure. Firstly, the processing system SYSa changes the relative positional relationship between the workpiece W and the processing head 11 by using the head driving system 12 and / or the stage driving system 33 so that a first processing shot area ESA is set at a first position on the workpiece W. Then, the processing system SYSa irradiates a desired area in the first processing shot area ESA with the processing light EL by using the Galvano mirror 1161 while controlling the head driving system 12 and / or the stage driving system 33 so as to maintain a state in which the first processing shot area ESA is allowed to be properly irradiated with the processing light EL. Namely, the processing system SYSa irradiates the desired area in the first processing shot area ESA with the processing light EL by using the Galvano mirror 1161 while controlling the head driving system 12 and / or the stage driving system 33 so that the relative positional relationship between the workpiece W and the processing head 11 is maintained in a first positional relationship that allows the first processing shot area ESA set at the first position on the workpiece W to be properly irradiated with the processing light EL. As a result, the first processing shot area ESA is processed. Then, the relative positional relationship between the workpiece W and the processing head 11 is changed by using the head driving system 12 and / or the stage driving system 33 so that a second processing shot area ESA is set at a second position on the workpiece W that is different from the first position. Then, the processing system SYSa irradiates a desired area in the second processing shot area ESA with the processing light EL by using the Galvano mirror 1161 while controlling the head driving system 12 and / or the stage driving system 33 so as to maintain a state in which the second processing shot area ESA is allowed to be properly irradiated with the processing light EL. Namely, the processing system SYSa irradiates the desired area in the second processing shot area ESA with the processing light EL by using the Galvano mirror 1161 while controlling the head driving system 12 and / or the stage driving system 33 so that the relative positional relationship between the workpiece W and the processing head 11 is maintained in a second positional relationship that allows the second processing shot area ESA set at the second position on the workpiece W to be properly irradiated with the processing light EL. As a result, the second processing shot area ESA is processed. Then, same operation is repeated until the processing of the workpiece W is completed.

Note that an operation for irradiating the workpiece W with the measurement light ML, calculating the difference between the length of the optical path OP#1-3 and the length of the optical paths OP#2-2 and OP#2-3 on the basis of the detected result of the measurement light ML (namely, the detected results by the detectors 1143 and 1146), and controlling the relative positional relationship between the workpiece W and the processing head 11 on the basis of the optical path difference information related to the calculated difference is referred to as "an alignment operation" in the first embodiment. Especially in the below described description, an example in which the alignment operation is an operation for irradiating the workpiece W with the measurement light ML, calculating the distance D between the processing head 11 and the workpiece W on the basis of the detected result of the measurement light ML (namely, optical path difference information calculated from the detected result of the measurement light ML), and controlling the relative positional relationship between the workpiece W and the processing head 11 on the basis of the distance information related to the calculated distance D will be described for convenience of description. Note that the alignment operation will be described later in detail with reference to FIG. 7 and so on. Here, the distance D between the processing head 11 and the workpiece W may be a distance from an optical surface at the workpiece W side of an optical member, which is disposed at a position closest to the workpiece W in optical members of the fθ lens 1162 that is the irradiation optical system, to the workpiece W along a direction parallel to the optical axis AX of the fθ lens 1162. Note that the distance D may be a length from any optical surface of any optical member, which is included in optical members of the irradiation optical system (the fθ lens 1162) and the measurement optical system 114, to the workpiece W in a direction along the optical path of the measurement light ML Moreover, the distance D may be a length from any position in the optical path of the measurement light ML to the workpiece W in the direction along the optical path of the measurement light ML In this manner, the distance D may be an amount obtained by adding a known offset is added to the difference between the optical paths calculated from the detected result of the measurement light ML

The processing system SYSa may perform the alignment operation in at least a part of a processing period at which the processing system SYSa processes the workpiece W. The processing system SYSa may irradiate the workpiece W with the measurement light ML, calculate the distance D between the processing head 11 and the workpiece W, and controlling the relative positional relationship between the workpiece W and the processing head 11 on the basis of the distance information related to the calculated distance D in at least a part of the processing period at which the processing system SYSa processes the workpiece W. The processing period may include a period in which the processing system SYSa performs the processing process on the workpiece W. The processing period may include a period from a time at which the processing system SYSa starts the processing process on the workpiece W to a time at which the processing process ends. However, the processing system SYSa may perform the alignment operation in at least a part of a period that is different from the processing period.

More specifically, the processing system SYSa may perform, as a part of the alignment operation, an operation for maintain the relative positional relationship between the workpiece W and the processing head 11 in the predetermined positional relationship in at least a part of a processing shot period at which the processing system SYSa processes the processing shot area ESA. On the other hand, the processing system SYSa may perform, as a part of the alignment operation, an operation for changing the relative positional relationship between the workpiece W and the processing head 11 from a positional relationship that allows the processing head 11 to process one processing shot area ESA to a positional relationship that allows the processing head 11 to process next processing shot area ESA in at least a part of a period from a time at which the processing of the one processing shot area ESA is completed to a time at which the processing of the next processing shot area ESA is started.

Moreover, as described above, when the relative positional relationship between the workpiece W and the processing head 11 changes, the position of the target irradiation area EA on the workpiece W (namely, the irradiation position that is actually irradiated with the processing light EL on the workpiece W) changes. Thus, the alignment operation may include an operation for irradiating the workpiece W with the measurement light ML, calculating the distance D between the processing head 11 and the workpiece W on the basis of the detected result of the measurement light ML, and controlling the position of the target irradiation area EA on the workpiece W (namely, the irradiation position of the processing light EL on the workpiece W) on the basis of the distance information related to the calculated distance D. In this case, the control apparatus 5 may change the position of the target irradiation area EA on the workpiece W (namely, the irradiation position of the processing light EL on the workpiece W) on the basis of the distance information so that the target irradiation area EA is set at the desired position on the workpiece W (namely, it is irradiated with the processing light EL). Namely, the control apparatus 5 may control, on the basis of the distance information, an apparatus that is configured to change the position of the target irradiation area EA on the workpiece W (namely, the irradiation position of the processing light EL on the workpiece W) so that the target irradiation area EA is set at the desired position on the workpiece W. At least one of the angle adjustment optical system 1122 of the processing optical system 112, the focus adjustment optical system 1123 of the processing optical system 112, the Galvano mirror 1161 of the common optical system 116, the head driving system 12 and the stage driving system 33 is one example of the apparatus that is configured to change the position of the target irradiation area EA on the workpiece W (namely, the irradiation position of the processing light EL on the workpiece W).

Moreover, as described above, when the relative positional relationship between the workpiece W and the processing head 11 changes, the position of the target irradiation area MA on the workpiece W (namely, the irradiation position that is actually irradiated with the measurement light ML on the workpiece W) changes. Thus, the alignment operation may include an operation for irradiating the workpiece W with the measurement light ML, calculating the distance D between the processing head 11 and the workpiece W on the basis of the detected result of the measurement light ML, and controlling the position of the target irradiation area MA on the workpiece W (namely, the irradiation position of the measurement light ML on the workpiece W) on the basis of the distance information related to the calculated distance D. In this case, the control apparatus 5 may change the position of the target irradiation area MA on the workpiece W (namely, the irradiation position of the measurement light ML on the workpiece W) on the basis of the distance information so that the target irradiation area MA is set at the desired position on the workpiece W (namely, it is irradiated with the measurement light ML). Namely, the control apparatus 5 may control, on the basis of the distance information, an apparatus that is configured to change the position of the target irradiation area MA on the workpiece W (namely, the irradiation position of the measurement light ML on the workpiece W) so that the target irradiation area MA is set at the desired position on the workpiece W. At least one of the Galvano mirror 1161 of the common optical system 116, the Galvano mirror 1148 of the measurement optical system 114, the head driving system 12 and the stage driving system 33 is one example of the apparatus that is configured to change the position of the target irradiation area MA on the workpiece W (namely, the irradiation position of the measurement light ML on the workpiece W).

### (1-3) Structure of Head Driving System 12

### (1-3-1) Entire Structure of Head Driving System 12

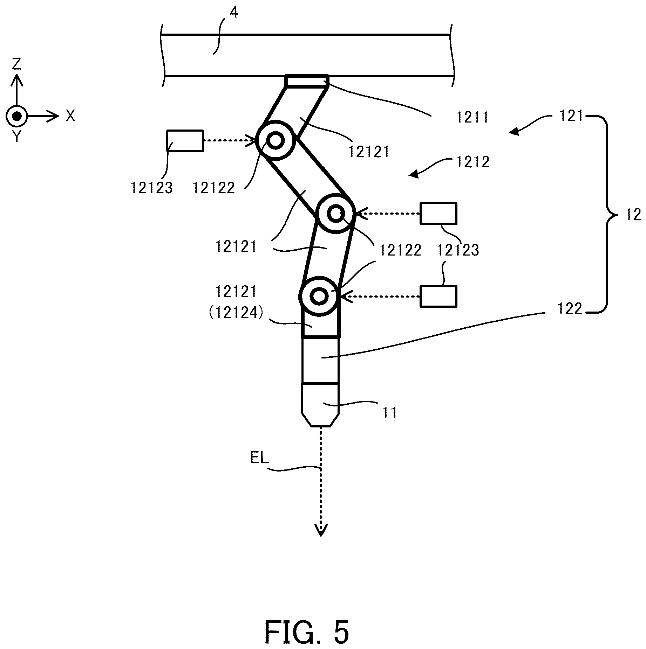

Next, with reference to FIG. 5, one example of the structure of the head driving system 12 will be described. FIG. 5 is a cross-sectional view that illustrates one example of the structure of the head driving system 12.

As illustrated in FIG. 5, the head driving system 12 includes a first driving system 121 and a second driving system 122. The second driving system 122 is attached to the first driving system 121. The first driving system 121 supports the second driving system 122. The processing head 11 is attached to the second driving system 122. The second driving system 122 supports the processing head 11. Thus, the second member 122 may substantially serve as a connecting apparatus that connects the first driving system 121 and the processing head 11.

The first driving system 121 moves the second driving system 122 relative to the workpiece W under the control of the control apparatus 5. Namely, the first driving system 121 serves as a movement apparatus that moves the second driving system 122 relative to the workpiece W. Since the processing head 11 is attached to the second driving system 122, it can be said that the first driving system 121 moves the processing head 11 relative to the workpiece W by moving the second driving system 122. Namely, the first driving system 121 moves the processing head 11 with the second driving system 122. The first driving system 121 moves the processing head 11 through the second driving system 122. The first driving system 121 serves as a driving part that moves (namely, drives) each optical system of the processing head 11 through the second driving system 122.

The second driving system 122 moves the processing head 11 relative to the workpiece W under the control of the control apparatus 5. Namely, the second driving system 122 serves as a movement apparatus that moves the processing head 11 relative to the workpiece W. The second driving system 122 serves as a movement apparatus that moves the processing head 11 relative to the workpiece W. Since the second driving system 122 supports the processing head 11 as described above, it can be said that the second driving system 122 supports the processing head 11 in a state where the processing head 11 is movable relative to the workpiece W. In this case, the second driving system 122 serves as a support part that supports each optical system of the processing head 11 in a state where each optical system of the processing head 11 is movable relative to the workpiece W.

Next, the first driving system 121 and the second driving system 122 described above will be described in sequence.

### (1-3-1-1) Structure of First Driving System 121

As illustrated in FIG. 5, the first driving system 121 includes a base 1211 and an arm driving system 1212.

The base 1211 is attached to the housing 4 (for example, a ceiling member of the housing 4) or the non-illustrated support frame (a support structural body). The arm driving system 1212 is attached to the base 1211. The base 1211 supports the arm driving system 1212. The base 1211 is used as a base member for supporting the arm driving system 1212.

The arm driving system 121 includes a plurality of arm members 12121. The plurality of arm members 12121 are coupled in a pivotable manner through at least one joint member 12122. Therefore, the arm driving system 1212 is a robot that has what we call vertically articulated structure. However, the arm driving system 1212 is not limited to the robot that has the vertically articulated structure, and may be a robot-polar-coordinate robot that has a horizontally articulated structure, a cylindrical coordinate robot, a cartesian coordinate robot, or a parallel-link type of robot, for example. The arm driving system 1212 may include single joint (namely, a driving axis defined by the joint member 12122). Alternatively, the arm driving system 1212 may include a plurality of joints. FIG. 5 illustrates an example in which the arm driving system 1212 includes three joints. Two arm member 12121 that are coupled through each joint pivot by an actuator 12123 corresponding to each joint. FIG. 5 illustrates an example in which the arm driving system 1212 includes three actuators 12123 corresponding to the three joints. As a result, at least one arm member 12121 moves. Thus, at least one arm member 12121 is movable relative to the workpiece W. Namely, at least one arm member 12121 is movable so that a relative positional relationship between at least one arm member 12121 and the workpiece W is changed.

The second driving system 122 is attached to the arm driving system 1212. Specifically, the second driving system 122 is attached to one arm member 12121, which is located at a position that is farthest from the base 1211, of the plurality of arm members 12121. In the below described description, one arm member 12121 to which the second driving system 122 is attached is referred to as a tip arm member 12124 for convenience of the description. The second driving system 122 may be directly attached to the tip arm member 12121, or may be indirectly attached to the tip arm member 12121 through another member.

When the tip arm member 12124 moves by the above described actuator 12123, the second driving system 122 attached to the tip arm member 12124 also moves. Thus, the arm driving system 1212 (namely, the first driving system 121) moves the second driving system 122. Specifically, the arm driving system 1212 moves the second driving system 122 relative to the workpiece W. The arm driving system 1212 moves the second driving system 122 so that a relative positional relationship between the second driving system 122 and the workpiece W is changed. Moreover, when the second driving system 122 moves, the processing head 11 attached to the second driving system 122 also moves. Thus, the arm driving system 1212 (namely, the first driving system 121) moves the processing head 11.

Note that the first driving system 121 is not limited to the articulated robot and may have any structure as long as it is allowed to move the second driving system 122 relative to the workpiece W.

### (1-3-1-2) Structure of Second Driving System 122

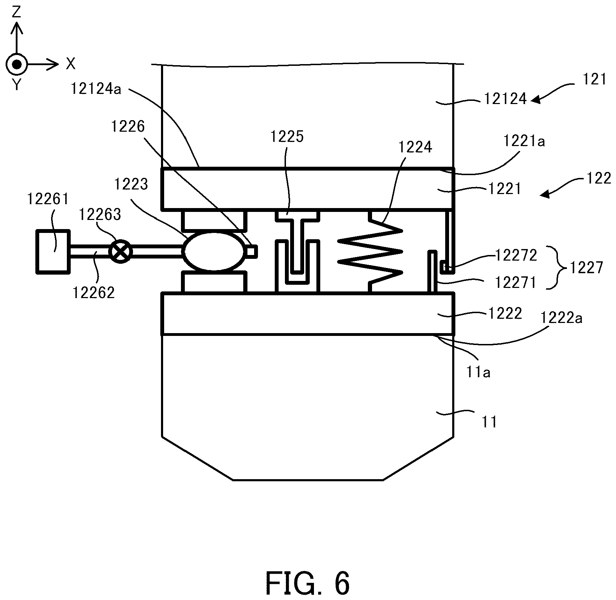

Next, with reference to FIG. 6, the structure of the second driving system 122 will be described. FIG. 6 is a cross-sectional view that illustrates the structure of the second driving system 122.

As illustrated in FIG. 6, the second driving system 122 includes a support member 1221, a support member 1222, an air spring 1223, a damper member 1224 and a driving member 1225.

The support member 1221 is attached to the first driving system 121. Specifically, the support member 1221 is attached to the tip arm member 12124 of the first driving system 121. The support member 1222 is attached to the processing head 11.

The support member 1221 is coupled (in other words, interlocked or connected) to the support member 1222 through the air spring 1223, the damper member 1224 and the driving member 1225. Namely, each of the air spring 1223, the damper member 1224 and the driving member 1225 is attached to the support members 1221 and 1222 to couple the support member 1221 and the support member 1222. Since the first driving system 121 is attached to the support member 1221 and the processing head 11 is attached to the support member 1222, it can be said that each of the air spring 1223, the damper member 1224 and the driving member 1225 is substantially attached to the support members 1221 and 1222 to couple the first driving system 121 and the processing head 11.

The air spring 1223 applies an elastic force caused by a pressure of gas (as one example, air) to at least one of the support members 1221 and 1222 under the control of the control apparatus 5. The air spring 1223 applies the elastic force caused by the pressure of the gas to at least one of the first driving system 121 and the processing head 11 through at least one of the support members 1221 and 1222 under the control of the control apparatus 5. Especially, the air spring 1223 may apply the elastic force caused by the pressure of the gas to at least one of the support members 1221 and 1222 along a direction (the Z axis direction and the gravity direction in the example illustrated in FIG. 6) in which the support member 1221 and the support member 1222 are arranged. Namely, the air spring 1223 may apply the elastic force caused by the pressure of the gas to at least one of the first driving system 121 and the processing head 11 through at least one of the support members 1221 and 1222 along a direction (the Z axis direction and the gravity direction in the example illustrated in FIG. 6) in which the first driving system 121 (especially, the tip arm member 12124) and the processing head 11 are arranged. Note that the air spring 1223 may be referred to as an elastic member.

In order to apply the elastic force caused by the pressure of the gas, the gas is supplied to the air spring 1223 from a gas supply apparatus 12261 through a pipe 12262 and a valve 12263. The control apparatus 5 controls at least one of the gas supply apparatus 12261 and the valve 12263 on the basis of a measured result by a pressure sensor 1226 that measures a pressure of the gas in the air spring 1223. Note that the air supply apparatus 12261, the pipe 12262 and the valve 12263 may not be provided. In this case, the air spring 1223 may apply the elastic force caused by the pressure therein to at least one of the support members 1221 and 1222 regardless of the control of the control apparatus 5.

The air spring 1223 may support a weight of the support member 1222 by using the elastic force under the control of the control apparatus 5. Specifically, the air spring 1223 may support the weight of the support member 1222 along a direction in which the support member 1221 and the support member 1222 are arranged by using the elastic force. Since the processing head 11 is attached to the support member 1222, the air spring 1223 may support a weight of the processing head 11 attached to the support member 1222 by using the elastic force. Specifically, the air spring 1223 may support the weight of the processing head 11 along a direction in which the first driving system 121 (especially, the tip arm member 12124) and the processing head 11 are arranged by using the elastic force. In this case, the air spring 1223 may serve as a weight canceler that cancels the weight of the processing head 11. Note that the air spring 1223 may support the weight of the support member 1222 by using the elastic force regardless of the control of the control apparatus 5.

The air spring 1223 may reduce a vibration, which is transmitted between the first driving system 121 and the processing head 11 through the second driving system 122, by using the elastic force under the control of the control apparatus 5. Namely, the air spring 1223 may damp the vibration, which is transmitted between the first driving system 121 and the processing head 11 through the second driving system 122, by using the elastic force. Specifically, the air spring 1223 may reduce (damp) the vibration, which propagates (is transmitted) from the first driving system 121 to the processing head 11 through the second driving system 122, by using the elastic force. Namely, the air spring 1223 may reduce (damp) the vibration, which propagates (is transmitted) from a part of the first driving system 121 (namely, the tip arm member 12124) to which the second driving system 122 is attached to a part of the processing head 11 to which the second driving system 122 is attached, by using the elastic force. In this case, the control apparatus 5 may control at least one of the gas supply apparatus 12261 and the valve 12263 on the basis of the measured result by the pressure sensor 1226 so that the vibration that is transmitted between the first driving system 121 and the processing head 11 through the second driving system 122 is reduced (namely, is damped). Note that the air spring 1223 (alternatively, the second driving system 122 including the air spring 1223) may be referred to as a vibration reduction apparatus or a vibration damping apparatus. Note that the air spring 1223 may reduce the vibration, which is transmitted between the first driving system 121 and the processing head 11 through the second driving system 122, by using the elastic force regardless of the control of the control apparatus 5.

The damper member 1224 applies an elastic force caused by a factor different from the pressure of the air to at least one of the support members 1221 and 1222. The damper member 1224 applies the elastic force caused by the factor different from the pressure of the air to at least one of the first driving system 121 and the processing head 11 through at least one of the support members 1221 and 1222. Especially, the damper member 1224 may apply the elastic force to at least one of the support members 1221 and 1222 along a direction (the Z axis direction and the gravity direction in the example illustrated in FIG. 6) in which the support member 1221 and the support member 1222 are arranged. Namely, the damper member 1224 may apply the elastic force to at least one of the first driving system 121 and the processing head 11 through at least one of the support members 1221 and 1222 along a direction (the Z axis direction and the gravity direction in the example illustrated in FIG. 6) in which the first driving system 121 (especially, the tip arm member 12124) and the processing head 11 are arranged. Note that the damper member 1224 may be referred to as an elastic member.

The damper member 1224 may be any member as long as it is configured to apply the elastic force. For example, the damper member 1224 may include a compressed spring coil. For example, the damper member 1224 may include a plate spring.

The damper member 1224 may support a weight of the support member 1222 by using the elastic force. Specifically, the damper member 1224 may support the weight of the support member 1222 along a direction in which the support member 1221 and the support member 1222 are arranged by using the elastic force. Since the processing head 11 is attached to the support member 1222, the damper member 1224 may support a weight of the processing head 11 attached to the support member 1222 by using the elastic force. Specifically, the damper member 1224 may support the weight of the processing head 11 along a direction in which the first driving system 121 (especially, the tip arm member 12124) and the processing head 11 are arranged by using the elastic force. In this case, the damper member 1224 may serve as a weight canceler that cancels the weight of the processing head 11.

The damper member 1224 may reduce a vibration, which is transmitted between the first driving system 121 and the processing head 11 through the second driving system 122, by using the elastic force. Namely, the damper member 1224 may damp the vibration, which is transmitted between the first driving system 121 and the processing head 11 through the second driving system 122, by using the elastic force. Specifically, the damper member 1224 may reduce (damp) the vibration, which propagates (is transmitted) from the first driving system 121 to the processing head 11 through the second driving system 122, by using the elastic force. Thus, the damper member 1224 (alternatively, the second driving system 122 including the damper member 1224) may be referred to as a vibration reduction apparatus or a vibration damping apparatus.

The damper member 1224 may convert the vibration of the air spring 1223 to a damping vibration by using the elastic force. Namely, the damper member 1224 may convert the vibration, which is transmitted between the first driving system 121 and the processing head 11 through the second driving system 122, to the damping vibration by using the elastic force.

The driving member 1225 is configured to generate a driving force under the control of the control apparatus 5. The driving member 1225 is configured to apply the generated driving force to at least one of the support members 1221 and 1222. The driving member 1225 is configured to apply the generated driving force to at least one of the first driving system 121 and the processing head 11 through at least one of the support members 1221 and 1222. The driving member 1225 may have any structure as long as it is configured to generate the driving force. For example, the driving member 1225 may have a structure that is configured to electrically generate the driving force. For example, the driving member 1225 may have a structure that is configured to magnetically generate the driving force. As one example, FIG. 6 illustrates an example in which the driving member 1225 a voice coil motor (VCM: Voice Coil Motor) that is configured to electrically generate the driving force. Note that the driving member 1225 may be a linear motor that is different from the voice coil motor, although the voice coil motor is a type of linear motor. The driving member 1225 may generate the driving force along a linear axis.

Note that the driving member 1225 may have a structure in which a member of the driving member 1225 that is attached to the support member 1221 does not physically contact with a member of the driving member 1225 that is attached to the support member 1222. For example, when the driving member 1225 is the voice coil motor, the member (for example, a member including either one of a coil and a magnetic pole) of the driving member 1225 that is attached to the support member 1221 does not physically contact with a member (for example, a member including the other one of a coil and a magnetic pole) of the driving member 1225 that is attached to the support member 1222.

The driving member 1225 may move at least one of the support members 1221 and 1222 by using the driving force under the control of the control apparatus 5. The driving member 1225 may move at least one of the first driving system 121 and the processing head 11 by moving at least one of the support members 1221 and 1222 by using the driving force under the control of the control apparatus 5. In this case, the driving member 1225 may change a relative position between the first driving system 121 and the processing head 11 by moving at least one of the first driving system 121 and the processing head 11 by using the driving force. In this case, it can be said that the second driving system 122 including the driving member 1225 couples the first driving system 121 and the processing head 11 so that the relative position between the first driving system 121 and the processing head 11 is changeable. Namely, it can be said that the air spring 1223 and the damper member 1224 (furthermore, the driving member 1225) couple the first driving system 121 and the processing head 11 so that the relative position between the first driving system 121 and the processing head 11 is changeable by the driving member 1225. Note that the driving member 1225 may be referred to as a position change apparatus.

The driving member 1225 may change the relative position between the first driving system 121 and the processing head 11 on the basis of a measured result by a position measurement apparatus 1227 of the second driving system 122 under the control of the control apparatus 5. The position measurement apparatus 1227 measures the relative position between the first driving system 121 and the processing head 11. For example, the position measurement apparatus 1227 may be an encoder that includes a detection part 12271 that is attached to the support member 1221 and a scale part 12272 that is attached to the support member 1222. The measured result by the position measurement apparatus 1227 includes information related to the relative position between the support member 1221 and the support member 1222. Since the first driving system 121 is attached to the support member 1221 and the processing head 11 is attached to the support member 1222, the information related to the relative position between the support member 1221 and the support member 1222 includes information related to the relative position between the first driving system 121 and the processing head 11. Therefore, the control apparatus 5 properly determines the relative position between the first driving system 121 and the processing head 11. As a result, the control apparatus 5 properly changes the relative position between the first driving system 121 and the processing head 11 on the basis of the measured result by the position measurement apparatus 1227.

The driving member 1225 may move the processing head 11 relative to the workpiece W by changing the relative position between the first driving system 121 and the processing head 11 (typically, moving the processing head 11 relative to the first driving system 121) under the control of the control apparatus 5. The driving member 1225 may move the processing head 11 so that the relative positional relationship between the processing head 11 and the workpiece W is changed.

The driving member 1225 may reduce the vibration, which is transmitted between the first driving system 121 and the processing head 11 through the second driving system 122, by changing the relative position between the first driving system 121 and the processing head 11 by using the driving force under the control of the control apparatus 5. Namely, the driving member 1225 may damp the vibration, which is transmitted between the first driving system 121 and the processing head 11 through the second driving system 122, by using the driving force. Specifically, the driving member 1225 may reduce (damp) the vibration, which propagates (is transmitted) from the first driving system 121 to the processing head 11 through the second driving system 122, by using the driving force. Thus, the driving member 1225 (alternatively, the second driving system 122 including the driving member 1225) may be referred to as a vibration reduction apparatus or a vibration damping apparatus.

The driving member 1225 may convert the vibration of the air spring 1223 to the damping vibration by changing the relative position between the first driving system 121 and the processing head 11 by using the driving force. Namely, the driving member 1225 may convert the vibration, which is transmitted between the first driving system 121 and the processing head 11 through the second driving system 122, to the damping vibration by using the driving force. In this case, it can be said that the driving member 1225 reduces a relative displaced amount between the first driving system 121 and the processing head 11, which is caused by the vibration propagating from the first driving system 121 to the processing head 11, by using the driving force. Specifically, it can be said that the driving member 1225 reduces a relative displaced amount between a part of the first driving system 121 (namely, the tip arm member 12124) to which the second driving system 122 is attached and a part of the processing head 11 to which the second driving system 122 is attached, which is caused by the vibration propagating from the first driving system 121 to the processing head 11, by using the driving force. Incidentally, when the driving member 1225 is configured to convert the vibration of the air spring 1223 to the damping vibration, the second driving system 122 may not include the damper member 1224. However, even when the driving member 1225 is not configured to convert the vibration of the air spring 1223 to the damping vibration, the second driving system 122 may not include the damper member 1224. Moreover, the number of the air spring 1223, the number of the damper member 1224 and the number of the driving member 1225 may not be equal to one another.

The driving member 1225 may apply the driving force that acts along a direction including a component of the direction in which the air spring 1223 and / or the damper member 1224 applies the elastic force. In an example illustrated in FIG. 6, the driving member 1225 may apply the driving force that acts along a direction including a component of the Z axis direction, because the air spring 1223 and / or the damper member 1224 applies the elastic force along the Z axis direction. When the driving member 1225 generates the driving force that acts along the direction including the component of the direction in which the air spring 1223 and / or the damper member 1224 applies the elastic force, the driving member 1225 may be configured to convert the vibration of the air spring 1223 to the damping vibration by using this driving force. When the vibration of the air spring 1223 is converted to the damping vibration, the driving member 1225 may change a resonance frequency of the air spring 1223 by using the driving force. Typically, the driving member 1225 may increase the resonance frequency of the air spring 1223 by using the driving force.

An apparatus that actively reduces the vibration by using the driving member 1225 and the elastic member such as the air spring 1223 may be referred to as an active vibration isolation apparatus. Thus, the second driving system 122 may be referred to as an active vibration isolation apparatus. The active vibration isolation apparatus may be referred to as an AVIS (Active Vibration Isolation System).

### (1-4) Alignment Operation

Next, the alignment operation will be described. In the first embodiment, the processing system SYSa may perform, as the alignment operation, at least one of a first alignment operation to a fourth alignment operation. Therefore, in the below described description, the first alignment operation to the fourth alignment operation will be described in sequence.

### (1-4-1) First Alignment Operation

The first alignment operation is an operation for irradiating a plurality of any positions on the surface of the workpiece W with the measurement light ML, calculating the distance D between the processing head 11 and the workpiece W on the basis of the detected result of the measurement light ML and controlling the relative positional relationship between the workpiece W and the processing head 11 on the basis of the distance information related to the calculated distance D.

When the first alignment operation is performed, the processing head 11 irradiates each of three or more irradiation areas WA on the workpiece W with the measurement light ML Namely, the processing head 11 irradiates three or more positions on the surface of the workpiece W with the measurement light ML For example, as illustrated in FIG. 7A that is a planar view illustrating a plurality of irradiation areas WA on the workpiece W and FIG. 7B that is a perspective view illustrating a plurality of irradiation areas WA on the workpiece W, the processing head 11 may irradiates each of four irradiation areas WA (specifically, the irradiation areas WA#1 to WA#4) on the workpiece W with the measurement light ML.

Specifically, the processing head 11 irradiates the irradiation area WA#1 with a measurement light ML#2-2-1 that is the measurement light ML#2-2 in a first deflection state by deflecting the measurement light ML#2-2 by using the Galvano mirror 1148. Namely, the processing head 11 irradiates the irradiation area WA#1 with the measurement light ML#2-2-1 that propagates along a direction from the fθ lens 1162 to the irradiation area WA#1. The processing head 11 irradiates the irradiation area WA#2 with a measurement light ML#2-2-2 that is the measurement light ML#2-2 in a second deflection state by deflecting the measurement light ML#2-2 by using the Galvano mirror 1148. Namely, the processing head 11 irradiates the irradiation area WA#2 with the measurement light ML#2-2-2 that propagates along a direction from the fθ lens 1162 to the irradiation area WA#2. The processing head 11 irradiates the irradiation area WA#3 with a measurement light ML#2-2-3 that is the measurement light ML#2-2 in a third deflection state by deflecting the measurement light ML#2-2 by using the Galvano mirror 1148. Namely, the processing head 11 irradiates the irradiation area WA#3 with the measurement light ML#2-2-3 that propagates along a direction from the fθ lens 1162 to the irradiation area WA#3. The processing head 11 irradiates the irradiation area WA#4 with a measurement light ML#2-2-4 that is the measurement light ML#2-2 in a fourth deflection state by deflecting the measurement light ML#2-2 by using the Galvano mirror 1148. Namely, the processing head 11 irradiates the irradiation area WA#4 with the measurement light ML#2-2-4 that propagates along a direction from the fθ lens 1162 to the irradiation area WA#4.

Note that the irradiation area WA may not be set on the workpiece W in advance, and an area on the surface of the workpiece W that is actually irradiated with the measurement light ML may be referred to as the irradiation area WA. Namely, an area on the workpiece W that overlaps with the target irradiation area MA at a timing at which the workpiece W is irradiated with the measurement light ML may be referred to as the irradiation area WA.

The processing head 11 deflects the measurement light ML (actually, the measurement light ML#2-2) by using the Galvano mirror 1148 so that the three or more irradiation areas WA are irradiated with the measurement light ML in sequence. In an example illustrated in FIG. 7A and FIG. 7B, the processing head 11 deflects the measurement light ML by using the Galvano mirror 1148 so that the irradiation areas WA#1 to WA#4 are irradiated with the measurement light ML in sequence In this case, the processing head 11 controls the Galvano mirror 1148 so that the target irradiation area MA overlaps with the irradiation area WA#1 and irradiates the irradiation area WA#1 with the measurement light ML at a timing at which the target irradiation area MA overlaps with the irradiation area WA#1. Then, the processing head 11 controls the Galvano mirror 1148 so that the target irradiation area MA moves from the irradiation area WA#1 to the irradiation area WA#2 and irradiates the irradiation area WA#2 with the measurement light ML at a timing at which the target irradiation area MA overlaps with the irradiation area WA#2. Then, the processing head 11 controls the Galvano mirror 1148 so that the target irradiation area MA moves from the irradiation area WA#2 to the irradiation area WA#3 and irradiates the irradiation area WA#3 with the measurement light ML at a timing at which the target irradiation area MA overlaps with the irradiation area WA#3. Then, the processing head 11 controls the Galvano mirror 1148 so that the target irradiation area MA moves from the irradiation area WA#3 to the irradiation area WA#4 and irradiates the irradiation area WA#4 with the measurement light ML at a timing at which the target irradiation area MA overlaps with the irradiation area WA#4. Then, the processing head 11 controls the Galvano mirror 1148 so that the target irradiation area MA moves from the irradiation area WA#4 to the irradiation area WA#1 and irradiates the irradiation area WA#1 with the measurement light ML at a timing at which the target irradiation area MA overlaps with the irradiation area WA#1. The, same operation may be repeated.

Here, since the measurement light ML includes the pulsed signal, the processing head 11 irradiates the three or more irradiation areas WA with different pulses, respectively. Namely, the processing head 11 irradiates a first irradiation area WA with a first pulse included in the measurement light ML, and irradiates a second irradiation area, which is different from the first irradiation area WA, with a second pulse, which is different from the first pulse, included in the measurement light ML In the example illustrated in FIG. 7A and FIG. 7B, the processing head 11 irradiates the irradiation areas WA#1 to WA#4 with different pulses, respectively. Namely the processing head 11 irradiates the irradiation area WA#1 with a first pulse included in the measurement light ML, irradiates the irradiation area WA#2 with a second pulse included in the measurement light ML, irradiates the irradiation area WA#3 with a third pulse included in the measurement light ML, and irradiates the irradiation area WA#4 with a fourth pulse included in the measurement light ML

When the three or more irradiation areas WA are irradiated with the measurement light ML in this manner, the detector 1146 detects the interfering light generated by the interference between the measurement light ML (specifically, the measurement light ML#2-3) from each of the three or more irradiation areas WA and the reference light (specifically, the measurement light ML#1-3). In the example illustrated in FIG. 7A and FIG. 7B, the detector 1146 detects the interfering light generated by the interference between the measurement light ML#2-3 from the irradiation area WA#1 and the measurement light ML#1-3, the interfering light generated by the interference between the measurement light ML#2-3 from the irradiation area WA#2 and the measurement light ML#1-3, the interfering light generated by the interference between the measurement light ML#2-3 from the irradiation area WA#3 and the measurement light ML#1-3, and the interfering light generated by the interference between the measurement light ML#2-3 from the irradiation area WA#4 and the measurement light ML#1-3.

Then, the control apparatus 5 may calculate the distance between the processing head 11 and each of the three or more irradiation areas WA. In the example illustrated in FIG. 7, the control apparatus 5 may calculate the difference between the length of the optical path OP#1-3 and the length of the optical paths OP#2-2 and OP#2-3 through the irradiation area WA#1 on the basis of detected result of the interfering light generated by the interference between the measurement light ML#2-3 from the irradiation area WA#1 and the measurement light ML#1-3, and calculate the distance D#1 between the irradiation area WA#1 and the processing head 11 on the basis of the calculated difference. The control apparatus 5 may calculate the difference between the length of the optical path OP#1-3 and the length of the optical paths OP#2-2 and OP#2-3 through the irradiation area WA#2 on the basis of detected result of the interfering light generated by the interference between the measurement light ML#2-3 from the irradiation area WA#2 and the measurement light ML#1-3, and calculate the distance D#2 between the irradiation area WA#2 and the processing head 11 on the basis of the calculated difference. The control apparatus 5 may calculate the difference between the length of the optical path OP#1-3 and the length of the optical paths OP#2-2 and OP#2-3 through the irradiation area WA#3 on the basis of detected result of the interfering light generated by the interference between the measurement light ML#2-3 from the irradiation area WA#3 and the measurement light ML#1-3, and calculate the distance D#1 between the irradiation area WA#3 and the processing head 11 on the basis of the calculated difference. The control apparatus 5 may calculate the difference between the length of the optical path OP#1-3 and the length of the optical paths OP#2-2 and OP#2-3 through the irradiation area WA#4 on the basis of detected result of the interfering light generated by the interference between the measurement light ML#2-3 from the irradiation area WA#4 and the measurement light ML#1-3, and calculate the distance D#1 between the irradiation area WA#4 and the processing head 11 on the basis of the calculated difference.

Then, the control apparatus 5 controls the relative positional relationship between the workpiece W and the processing head 11 on the basis of the distance information related to the three or more distances D that correspond to the three or more irradiation areas WA, respectively. For example, as described above, the control apparatus 5 may control the relative positional relationship between the workpiece W and the processing head 11 on the basis of the distance information so that the relative positional relationship between the workpiece W and the processing head 11 is the predetermined positional relationship. The positional relationship that allows the processing shot area ESA set at the desired position on the workpiece W to be properly irradiated with the processing light EL is one example of the "predetermined positional relationship", as described above.

A positional relationship that allows the three or more distances D respectively corresponding to the three or more irradiation areas WA to have a predetermined distance relationship is another example of the "predetermined positional relationship", in addition to or instead of the positional relationship that allows the processing shot area ESA set at the desired position on the workpiece W to be properly irradiated with the processing light EL. In this case, the control apparatus 5 may control the relative positional relationship between the workpiece W and the processing head 11 on the basis of the distance information so that the three or more distances D have the predetermined distance relationship. In the example illustrated in FIG. 7A and FIG. 7B, the control apparatus 5 may control the relative positional relationship between the workpiece W and the processing head 11 so that the distances D#1 to D#4 have the predetermined distance relationship. Here, as illustrated in FIG. 7A and FIG. 7B, the surface of the workpiece W is typically a surface along the XY plane and intersects with the Z axis. In this case, the control apparatus 5 may control the relative positional relationship between the workpiece W and the processing head 11 in each of the Z axis direction, the θX direction and the θY direction by controlling the relative positional relationship between the workpiece W and the processing head 11 so that the three or more distances D have the predetermined distance relationship.

Note that each of at least two irradiation areas WA that are away from each other along the Y axis direction may be irradiated with the measurement light ML in order to control the relative positional relationship between the workpiece W and the processing head 11 in the θX direction. Therefore, when the control apparatus 5 controls the relative positional relationship between the workpiece W and the processing head 11 in the θX direction, the processing head 11 may irradiate each of at least two irradiation areas WA that are away from each other along the Y axis direction with the measurement light ML Similarly, each of at least two irradiation areas WA that are away from each other along the X axis direction may be irradiated with the measurement light ML in order to control the relative positional relationship between the workpiece W and the processing head 11 in the θY direction. Therefore, when the control apparatus 5 controls the relative positional relationship between the workpiece W and the processing head 11 in the θY direction, the processing head 11 may irradiate each of at least two irradiation areas WA that are away from each other along the X axis direction with the measurement light ML.

A relationship that allows the three or more distances D respectively corresponding to the three or more irradiation areas WA to be equal to each other is one example of the predetermined distance relationship. In the example illustrated in FIG. 7A and FIG. 7B, a relationship that allows the distances D#1 to D#4 to be equal to each other is one example of the predetermined distance relationship. This distance relationship may be used when the surface of the workpiece W is a planar surface, for example.

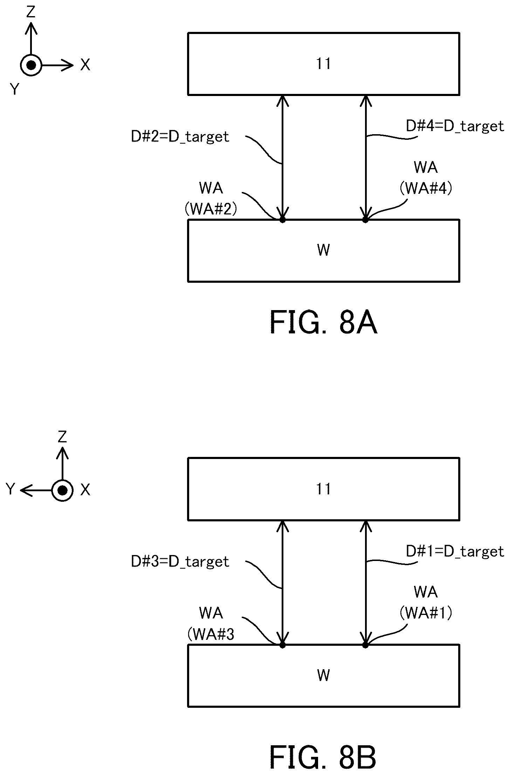

For example, FIG. 8A and FIG. 8B are cross-sectional views illustrating the processing head 11 and the workpiece W the positional relation between which is controlled so that the distances D#1 to D#4 are equal to each other (specifically, are to be a target value D_target). As a result, as illustrated in FIG. 8A and FIG. 8B, the distance D between the processing head 11 and the workpiece W is settable to be the target value D_target.

Incidentally, when the relative positional relationship between the workpiece W and the processing head 11 in the Z axis direction (typically, the above described distance D) changes, the condensed position of the processing light EL relative to the surface of the workpiece W in the Z axis direction changes. Thus, an operation for controlling the relative positional relationship between the workpiece W and the processing head 11 in the Z axis direction may be regarded to be equivalent to an operation for controlling the condensed position of the processing light EL relative to the surface of the workpiece W in the Z axis direction. In this case, the control apparatus 5 may control the condensed position of the processing light EL relative to the surface of the workpiece W in the Z axis direction so that a relative positional relationship between the surface of the workpiece W and the condensed position of the processing light EL in the Z axis direction is same as a relative positional relationship between the surface of the workpiece W and the condensed position of the processing light EL in the Z axis direction in the case where the distance D is the target value D_target, in addition to or instead of controlling the relative positional relationship between the workpiece W and the processing head 11 in the Z axis direction so that the distance D between the processing head 11 and the workpiece W is the target value D_target. Note that the above described focus adjustment optical system 1123 of the processing optical system 112 is one example of an apparatus that is configured to control the condensed position of the processing light EL relative to the surface of the workpiece W in the Z axis direction.

Furthermore, when the three or more distances D respectively corresponding to the three or more irradiation areas WA are equal to each other, an undesired inclination of the processing head 11 relative to the workpiece W is less likely to occur. For example, as illustrated in FIG. 8A, an undesired inclination of the processing head 11 relative to the workpiece W in the θY direction is less likely to occur. Namely, the processing head 11 and the workpiece W have a proper positional relationship in a plane along the XZ plane. Similarly, as illustrated in FIG. 8B, an undesired inclination of the processing head 11 relative to the workpiece W in the θX direction is less likely to occur. Namely, the processing head 11 and the workpiece W have a proper positional relationship in a plane along the YZ plane.

However, as described above, the processing system SYSa in the first embodiment processes the workpiece W. There is a possibility that the surface of the workpiece W is not to be the planar surface by processing the workpiece W. Namely, there is a possibility that the surface of the workpiece W has a concave and / or convex surface. This is because there is a possibility that a height (a height in the Z axis direction) of a processed area FA1 of the surface of the workpiece W on which the processing process is already performed is different from a height of a non-processed area FA2 of the surface of the workpiece W on which the processing process is not performed. In this case, when the relative positional relationship between the workpiece W and the processing head 11 is controlled so that the distances D between the three or more irradiation areas WA and the processing head 11 are equal to each other, there is a possibility that a below described technical problem occurs.

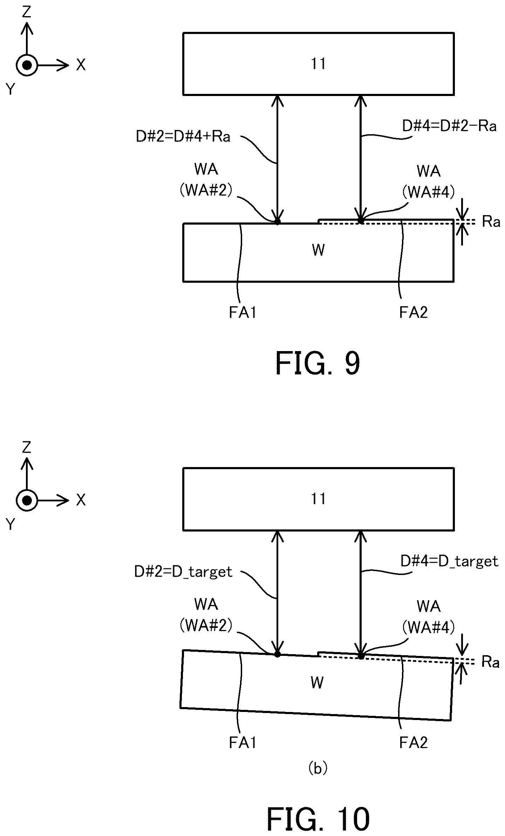

For example, as illustrated in FIG. 9 that is a cross-sectional view illustrating the processed area FA1 on which the removal processing is already performed and the non-processed area FA2 on which the removal processing is not performed, there is a possibility that the height of the processing area FA1 is lower than the height of the non-processed area FA2. As a result, there is a possibility that the distance D between the processed area FA1 and the processing head 11 (the distance D#2 in FIG. 9) is longer than the distance D between the non-processed area FA2 and the processing head 11 (the distance D#4 in FIG. 9), even though the processing head 11 is not inclined relative to the workpiece W as illustrated in FIG. 9. Specifically, there is a possibility that the distance D#2 between the processed area FA1 and the processing head 11 is longer than the distance D#4 between the non-processed area FA2 and the processing head 11 by a removed amount Ra that corresponds to a size in a thickness direction of the workpiece W removed by the removal processing (alternatively, by an amount based on the removed amount Ra). As another example, when the riblet structure is formed at the processed area FA1 by the removal processing, there is a possibility that the distance D#2 between the processed area FA1 and the processing head 11 is longer than a distance D between the processing head 11 and a virtual plane that is obtained by performing a fitting process on a part corresponding to a ridge of the riblet structure formed at the processed area FA1 (typically, a plane corresponding to a surface of the non-processed area FA2) by the removed amount Ra (alternatively, by the amount based on the removed amount Ra). When the relative positional relationship between the workpiece W and the processing head 11 is controlled so that the distance D#2 between the processed area FA1 and the processing head 11 is equal to the distance D#4 between the non-processed area FA2 and the processing head 11 in this situation, there is a possibility that the processing head 11 that has not been inclined relative to the workpiece W at first is inclined relative to the workpiece W as illustrated in FIG 10.

Alternatively, when the riblet structure is formed at the processed area FA1, there is a possibility that a height of a part corresponding to a groove of the riblet structure (namely, a part of the processed area FA1 at which the removal processing is actually performed in the processed area FA1) is lower than a height of the part corresponding to the ridge of the riblet structure (namely, a part of the processed area FA1 at which the removal processing is not actually performed in the processed area FA1) in the processed area FA1. Specifically, there is a possibility that a distance D between the part of the groove of the riblet structure and the processing head 11 is longer than a distance D between the part of the ridge of the riblet structure and the processing head 11 by the removed amount Ra (alternatively, by the amount based on the removed amount Ra). When the relative positional relationship between the workpiece W and the processing head 11 is controlled so that the distance D between the part of the groove of the riblet structure and the processing head 11 is equal to the distance D between the part of the ridge of the riblet structure and the processing head 11 in this situation, there is a possibility that the processing head 11 that has not been inclined relative to the workpiece W at first is inclined relative to the workpiece W.

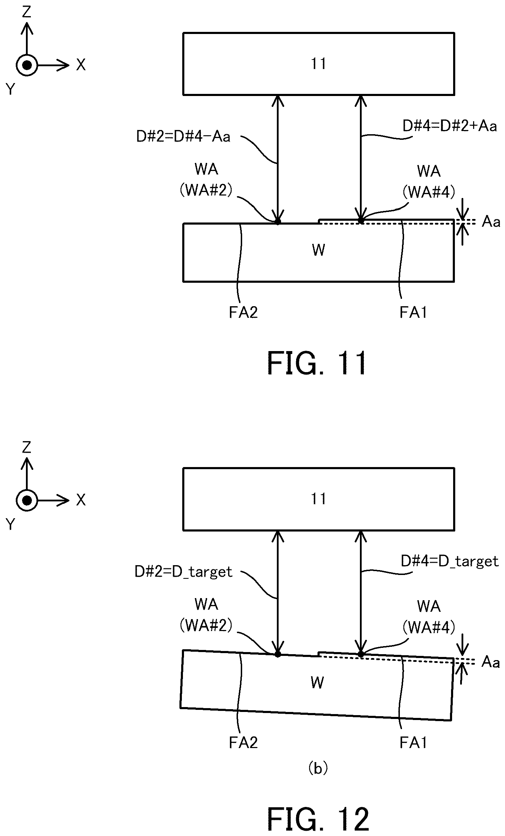

Similarly, for example, as illustrated in FIG. 11 that is a cross-sectional view illustrating the processed area FA1 on which the additive processing is already performed and the non-processed area FA2 on which the additive processing is not performed, there is a possibility that the height of the processing area FA1 is higher than the height of the non-processed area FA2. As a result, there is a possibility that the distance D between the processed area FA1 and the processing head 11 (the distance D#4 in FIG. 9) is shorter than the distance D between the non-processed area FA2 and the processing head 11 (the distance D#2 in FIG. 9), even though the processing head 11 is not inclined relative to the workpiece W. Specifically, there is a possibility that the distance D#4 between the processed area FA1 and the processing head 11 is shorter than the distance D#2 between the non-processed area FA2 and the processing head 11 by an added amount Aa that corresponds to a size in a thickness direction of the structural object added by the additive processing (alternatively, by an amount based on the added amount Aa). When the relative positional relationship between the workpiece W and the processing head 11 is controlled so that the distance D#4 between the processed area FA1 and the processing head 11 is equal to the distance D#2 between the non-processed area FA2 and the processing head 11 in this situation, there is a possibility that the processing head 11 that has not been inclined relative to the workpiece W at first is inclined relative to the workpiece W.

Alternatively, when the riblet structure is formed at the processed area FA1, there is a possibility that the height of the part corresponding to the ridge of the riblet structure (namely, a part of the processed area FA1 at which the additive processing is actually performed in the processed area FA1) is higher than the height of the part corresponding to the groove of the riblet structure (namely, a part of the processed area FA1 at which the additive processing is not actually performed in the processed area FA1) in the processed area FA1. Specifically, there is a possibility that the distance D between the part of the ridge of the riblet structure and the processing head 11 is shorter than the distance D between the part of the groove of the riblet structure and the processing head 11 by the added amount Aa (alternatively, by the amount based on the added amount Aa). When the relative positional relationship between the workpiece W and the processing head 11 is controlled so that the distance D between the part of the groove of the riblet structure and the processing head 11 is equal to the distance D between the part of the ridge of the riblet structure and the processing head 11 in this situation, there is a possibility that the processing head 11 that has not been inclined relative to the workpiece W at first is inclined relative to the workpiece W.

Thus, the control apparatus 5 may control the relative positional relationship between the workpiece W and the processing head 11 on the basis of the above described removed amount Ra and / or the added amount Aa in addition to the distance information. Specifically, the control apparatus 5 may correct the distance information on the basis of the removed amount Ra and / or the added amount Aa in order to control the relative positional relationship between the workpiece W and the processing head 11 on the basis of the above described removed amount Ra and / or the added amount Aa.

For example, as described above, the distance D between the processed area FA1 on which the removal processing is performed and the processing head 11 is longer than the distance D between the non-processed area FA2 on which the removal processing is not performed and the processing head 11 by the removed amount Ra (alternatively, by the amount based on the removed amount Ra). Thus, the control apparatus 5 may perform a removed amount reflection process for eliminating an effect of the removed amount Ra on the distance D calculated from the detected result of the measurement light ML. The removed amount reflection process may include a process that subtracts the removed amount Ra (alternatively, by the amount based on the removed amount Ra) from the distance D between the irradiation area WA located in the processed area FA1 and the processing head 11 and that does not subtract the removed amount Ra (alternatively, by the amount based on the removed amount Ra) from the distance D between the irradiation area WA located in the non-processed area FA2 and the processing head 11. Moreover, the removed amount reflection process may include a process that subtracts the removed amount Ra (alternatively, by the amount based on the removed amount Ra) from the distance D between the irradiation area WA located in the part of the groove of the riblet structure and the processing head 11 and that does not subtract the removed amount Ra (alternatively, by the amount based on the removed amount Ra) from the distance D between the irradiation area WA located in the part of the ridge of the riblet structure and the processing head 11. Then, the control apparatus 5 may control the relative positional relationship between the workpiece W and the processing head 11 so that the distances D on which the removed amount reflection process is performed are equal to each other. As a result, the undesired inclination of the processing head 11 relative to the workpiece W is less likely to occur, even when the removal processing is performed on at least a part of the workpiece W.

Similarly, for example, as described above, the distance D between the processed area FA1 on which the additive processing is performed and the processing head 11 is shorter than the distance D between the non-processed area FA2 on which the additive processing is not performed and the processing head 11 by the added amount Aa (alternatively, by the amount based on the added amount Aa). Thus, the control apparatus 5 performs an added amount reflection process for eliminating an effect of the added amount Aa on the distance D calculated from the detected result of the measurement light ML. The added amount reflection process may include a process that adds the added amount Aa (alternatively, by the amount based on the added amount Aa) to the distance D between the irradiation area WA located in the processed area FA1 and the processing head 11 and that does not add the added amount Aa (alternatively, by the amount based on the added amount Aa) to the distance D between the irradiation area WA located in the non-processed area FA2 and the processing head 11. Moreover, the added amount reflection process may include a process that that adds the added amount Aa (alternatively, by the amount based on the added amount Aa) to the distance D between the irradiation area WA located in the part of the ridge of the riblet structure and the processing head 11 and that does not add the added amount Aa (alternatively, by the amount based on the added amount Aa) to the distance D between the irradiation area WA located in the part of the groove of the riblet structure and the processing head 11. Then, the control apparatus 5 may control the relative positional relationship between the workpiece W and the processing head 11 so that the distances D on which the added amount reflection process is performed are equal to each other. As a result, the undesired inclination of the processing head 11 relative to the workpiece W is less likely to occur, even when the additive processing is performed on at least a part of the workpiece W.

Incidentally, considering that the distance D is calculated on the basis of the optical path difference information as described above, an operation for correcting the distance information may be regarded to be substantially equivalent to an operation for correcting the optical path information. Alternatively, the control apparatus 5 may directly correct the optical path difference information in addition to or instead of correcting the distance information. Namely, the control apparatus 5 may indirectly correct the distance information by directly correcting the optical path difference information. In this case, the removed amount reflection process may include a process that subtracts the removed amount Ra (alternatively, by the amount based on the removed amount Ra) from the difference between the length of the optical path OP#1-3 and the length of the optical paths OP#2-2 and OP#2-3 through the irradiation area WA located in the processed area FA1 and that does not subtract the removed amount Ra (alternatively, by the amount based on the removed amount Ra) from the difference between the length of the optical path OP#1-3 and the length of the optical paths OP#2-2 and OP#2-3 through the irradiation area WA. Moreover, the removed amount reflection process may include a process that subtracts the removed amount Ra (alternatively, by the amount based on the removed amount Ra) from the difference between the length of the optical path OP#1-3 and the length of the optical paths OP#2-2 and OP#2-3 through the irradiation area WA located in the part of the groove of the riblet structure and that does not subtract the removed amount Ra (alternatively, by the amount based on the removed amount Ra) from the difference between the length of the optical path OP#1-3 and the length of the optical paths OP#2-2 and OP#2-3 through the irradiation area WA located in the part of the ridge of the riblet structure. The added amount reflection process may include a process that adds the added amount Aa (alternatively, by the amount based on the added amount Aa) to the difference between the length of the optical path OP#1-3 and the length of the optical paths OP#2-2 and OP#2-3 through the irradiation area WA located in the processed area FA1 and that does not add the added amount Aa (alternatively, by the amount based on the added amount Aa) to the difference between the length of the optical path OP#1-3 and the length of the optical paths OP#2-2 and OP#2-3 through the irradiation area WA located in the non-processed area FA2. Moreover, the added amount reflection process may include a process that that adds the added amount Aa (alternatively, by the amount based on the added amount Aa) to the difference between the length of the optical path OP#1-3 and the length of the optical paths OP#2-2 and OP#2-3 through the irradiation area WA located in the part of the ridge of the riblet structure and that does not add the added amount Aa (alternatively, by the amount based on the added amount Aa) to the difference between the length of the optical path OP#1-3 and the length of the optical paths OP#2-2 and OP#2-3 through the irradiation area WA located in the part of the groove of the riblet structure. Then, the control apparatus 5 may calculate the distances D on the basis of the optical path difference information on which the removed amount reflection process or the added amount reflection process is performed. The distance D calculated here is substantially equal to the distance D on which the removed amount reflection process or the added amount reflection process is performed. Then, the control apparatus 5 may control the relative positional relationship between the workpiece W and the processing head 11 so that the calculated distances D are equal to each other.

When the removed amount reflection process and / the added amount reflection process is performed, the control apparatus 5 may determine whether the irradiation area WA that is irradiated with the measurement light ML is located in the processed area FA1 or is located in the non-processed area FA2.

For example, the processing head 11 processes the workpiece W under the control of the control apparatus 5. Therefore, it can be said that an information related to a position of the processed area FA1 on the workpiece W is an information known to the control apparatus 5. Thus, the control apparatus 5 may determine whether the irradiation area WA that is irradiated with the measurement light ML is located in the processed area FA1 or is located in the non-processed area FA2 on the basis of an information that is used to control the processing head 11 to process the workpiece W. Typically, the control apparatus 5 may determine whether the irradiation area WA that is irradiated with the measurement light ML is located in the processed area FA1 or is located in the non-processed area FA2 on the basis of an internal information that directly or indirectly indicates the position of the processed area FA1 on the workpiece W.

For example, the control apparatus 5 may determine whether the irradiation area WA that is irradiated with the measurement light ML is located in the processed area FA1 or is located in the non-processed area FA2 on the basis of a monitored result by a monitor apparatus that is configured to monitor the state of the surface of the workpiece. An imaging apparatus such as a camera is one example of the monitor apparatus. Note that a position measurement apparatus 6b described in the second embodiment may be used as the monitor apparatus.

For example, the control apparatus 5 may determine whether the irradiation area WA that is irradiated with the measurement light ML is located in the processed area FA1 or is located in the non-processed area FA2 on the basis of a relationship between the plurality of distances D corresponding to the plurality of irradiation areas WA (namely, on the basis of the distance information). Specifically, when (i) a plurality of distances D corresponding to a plurality of first irradiation areas WA of the plurality of irradiation areas WA are equal to each other, (ii) a plurality of distances D corresponding to a plurality of residual second irradiation areas WA, which are other than the plurality of first irradiation areas WA, of the plurality of irradiation areas WA are equal to each other, and (iii) a difference between the distance D corresponding to each of the plurality of first irradiation areas WA and the distance D corresponding to each of the plurality of second irradiation areas WA is equal to the removed amount Ra or the added amount Aa described above (alternatively, a constant value), there is a relatively high possibility that the plurality of first irradiation areas WA are located in either one of the processed area FA1 and the non-processed area FA2 and the plurality of second irradiation areas WA are located in the other one of the processed area FA1 and the non-processed area FA2. Especially, when the distance D corresponding to each of the plurality of first irradiation areas WA is longer by a constant value (for example, longer by the above describe removed amount Ra) than the distance D corresponding to each of the plurality of second irradiation areas WA in a situation where the processing head 11 performs the removal processing, there is a relatively high possibility that the plurality of first irradiation areas WA are located in the processed area FA1 and the plurality of second irradiation areas WA are located in the non-processed area FA2. On the other hand, when the distance D corresponding to each of the plurality of first irradiation areas WA is longer by a constant value (for example, longer by the above describe added amount Aa) than the distance D corresponding to each of the plurality of second irradiation areas WA in a situation where the processing head 11 performs the additive processing, there is a relatively high possibility that the plurality of first irradiation areas WA are located in the non-processed area FA2 and the plurality of second irradiation areas WA are located in the processed area FA1. I this manner, the control apparatus 5 may determine (in other word, estimate) whether the irradiation area WA that is irradiated with the measurement light ML is located in the processed area FA1 or is located in the non-processed area FA2 on the basis of the relationship between the plurality of distances D corresponding to the plurality of irradiation areas WA.

Moreover, there is a possibility that the surface of the workpiece W is not the planar surface due to a factor that is different from the processing of the workpiece W by the processing head 11. There is a possibility that the surface of the workpiece W is not the planar surface even when the processing head 11 does not performs the processing. For example, there is a possibility that the shape of the surface of the workpiece W is not originally the planar surface. Even in this case, there is a possibility that the above described technical problem occurs that the processing head 11 that has not been inclined relative to the workpiece W at first is inclined relative to the workpiece W. However, unlike the above described removed amount Ra and added amount Aa, the shape of the surface of the workpiece W is not necessarily an information known to the control apparatus 5. On the other hand, when a part, which is the planar surface, of the surface of the workpiece W is irradiated with the measurement light ML, there is a lower possibility that the above described technical problem occurs. Namely, when the measurement light ML is emitted while avoiding a part, which is not the planar surface, of the surface of the workpiece W, there is a lower possibility that the above described technical problem occurs. This is because the reason why the above described technical problem occurs is that a plurality of parts having different heights (namely, the concave and / or convex surface) of the surface of the workpiece W is irradiated with the measurement light ML.

Thus, the control apparatus 5 may eliminate at least one distance D, which may be regarded to be evidently an abnormal value compared to other distance D (for example, a difference between other distance D and which is evidently large), from the plurality of distances D that respectively correspond to the plurality of irradiation areas WA. The control apparatus 5 may control the positional relationship between the workpiece W and the processing head 11 on the basis of the distance D that is not eliminated, without using the eliminated distance D. As a result, the undesired inclination of the processing head 11 relative to the workpiece W is less likely to occur. Incidentally, when a difference between one distance D and another distance D is larger than a value determined in advance, one distance D may be determined to be the abnormal value and eliminated.

Alternatively, the control apparatus 5 may perform a process for increasing a possibility that the part of the surface of the workpiece W that is the planar surface is irradiated with the measurement light ML, in addition to or instead of eliminating the distance D that is the abnormal value (for example, a difference between other distance D and which is excessively large).

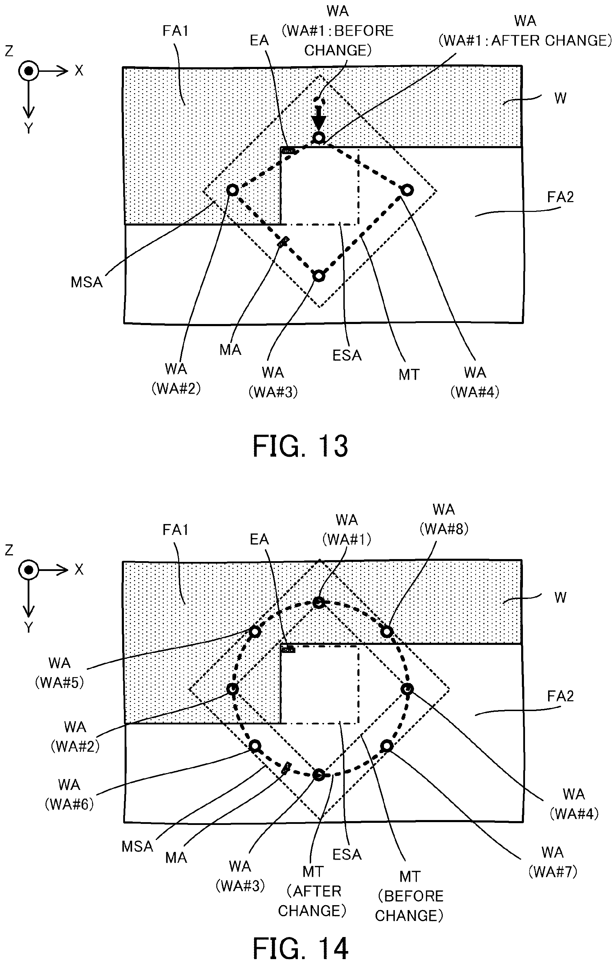

A process for changing a position of at least one of the three or more irradiation areas WA that are irradiated with the measurement light ML is one example of the process for increasing the possibility that the part of the surface of the workpiece W that is the planar surface is irradiated with the measurement light ML. In this case, the control apparatus 5 may change the position of at least one irradiation area WA on the workpiece W. More specifically, the control apparatus 5 may change the position of at least one irradiation area WA on the workpiece W along at least one of the X axis direction and the Y axis direction. For example, FIG. 13 is a planar view that illustrates an aspect in which the position of the irradiation area WA#1 is changed. When the position of at least one irradiation area WA is changed, a distribution aspect of the three or more irradiation areas WA on the workpiece W is also changed. Thus, the control apparatus 5 may change the distribution aspect of the three or more irradiation areas WA on the workpiece W. When the position of at least one irradiation area WA is changed, a trajectory connecting the three or more irradiation areas WA on the workpiece W is also changed. Thus, the control apparatus 5 may change the trajectory connecting the three or more irradiation areas WA on the workpiece W. As a result, the possibility that the part of the surface of the workpiece W that is the planar surface is irradiated with the measurement light ML becomes higher, compared to a case where the three or more irradiation areas WA are always fixed. Especially, when the position of at least one of the three or more irradiation areas WA is changed for each workpiece W placed on the workpiece W in a situation where a plurality of types of workpieces W are placed on the stage 32 in sequence, a possibility that each of the plurality of types of the workpieces W is irradiated with the measurement light ML becomes higher.

Note that the part of the surface of the workpiece W that is the planar surface may be determined by using another measurement apparatus that is different from the measurement apparatus using the measurement light ML (the measurement light source 113, the measurement optical system 114, the combining optical system 115 and the common optical system 116). Another measurement apparatus may be connected to the control apparatus 5. In this case, the control apparatus 5 may perform a control for determining the part of the surface of the workpiece W that is the planar surface by using an output from another measurement apparatus and changing the position of the irradiation area WA so that the irradiation area WA that is irradiated with the measurement light ML is located at the determined part.

The control apparatus 5 may change the position of at least one of the three or more irradiation areas WA by changing the irradiation position of the measurement light ML. In this case, the control apparatus 5 may change the irradiation position of the measurement light ML by controlling the Galvano mirror 1148. As described above, the irradiation area WA is irradiated with the pulsed light included in the measurement light ML. Thus, the control apparatus 5 may change the position of at least one of the three or more irradiation areas WA by changing the irradiation position of the pulsed light included in the measurement light ML. In this case, the control apparatus 5 may change the irradiation position of the pulsed light by controlling the Galvano mirror 1148. Alternatively, the control apparatus 5 may change the irradiation position of the pulsed light by controlling the measurement light source 113 to change an emitting frequency of the pulsed light (namely, change the emitting cycle), in addition to or instead of controlling the Galvano mirror 1148. This is because the change of the emitting frequency of the pulsed light results in the change of the irradiation position of the pulsed light in a situation where a moving speed of the target irradiation area MA (a sweeping speed of the measurement light ML by the Galvano mirror 1148) on the workpiece W is constant. For example, the control apparatus 5 may change the position of at least one of the three or more irradiation areas WA by changing a moving trajectory MT of the target irradiation area MA. In this case, the control apparatus 5 may change the moving trajectory MT by controlling the Galvano mirror 1148.

As described above, the measurement shot area MSA is irradiated with the measurement light ML Namely, the irradiation area WA is included in the measurement shot area MSA. In this case, the process for changing the position of at least one irradiation area WA on the workpiece W may include a process for changing the position of at least one irradiation area WA in the measurement shot area MSA. Namely, the control apparatus 5 may change the position of at least one irradiation area WA in the measurement shot area MSA. Moreover, the control apparatus 5 may change a position of the measurement shot area MSA itself on the workpiece W. In this case, the position of at least one irradiation area WA included in the measurement shot area MSA on the workpiece W is changed due to the change of the position of the measurement shot area MSA.

A process for changing the number of the irradiation areas WA is one example of the process for increasing the possibility that the part of the surface of the workpiece W that is the planar surface is irradiated with the measurement light ML. In this case, the control apparatus 5 may change the number of the irradiation areas WA. For example, the control apparatus 5 may change the number of the irradiation areas WA to increase. For example, FIG. 14 is a planar view that illustrates an example in which the number of the irradiation areas WA is changed from 4 to 8. Namely, FIG. 14 illustrates an example in which the number of the irradiation areas WA is changed in a situation where the irradiation areas WA#1 to WA#4 are irradiated with the measurement light ML so that the irradiation areas WA#5 to WA#8 are newly irradiated with the measurement light ML. As a result, the possibility that the part of the surface of the workpiece W that is the planar surface is irradiated with the measurement light ML becomes higher, compared to a case where the number of the irradiation areas WA is relatively small. Note that FIG. 14 also illustrates an aspect in which a shape of the moving trajectory MT of the target irradiation area MA is changed form a rectangular shape to a circular shape, as well as the number of the irradiation areas WA.

Note that the part of the surface of the workpiece W that is the planar surface may be determined by using another measurement apparatus described above and the number of the irradiation areas WA may be changed so that the irradiation area WA that is irradiated with the measurement light ML is located at the determined part.

The control apparatus 5 may change the number of the irradiation areas WA by controlling the sweeping speed of the measurement light ML by the Galvano mirror 1148. Namely, the control apparatus 5 may change the number of the irradiation areas WA by controlling the Galvano mirror 1148. Alternatively, the control apparatus 5 may change the number of the irradiation areas WA by controlling the measurement light source 113 to change the emitting frequency of the pulsed light (namely, change the emitting cycle), in addition to or instead of controlling the Galvano mirror 1148. This is because the change of the emitting frequency of the pulsed light results in the change of the number of the irradiation areas WA with which the workpiece W is irradiated per unit time in a situation where the moving speed of the target irradiation area MA (a sweeping speed of the measurement light ML by the Galvano mirror 1148) on the workpiece W is constant.

Note that the control apparatus 5 may change the position of at least one irradiation area WA and / or the number of the irradiation areas WA for the purpose that is different from the purpose of increasing the possibility that the part of the surface of the workpiece W that is the planar surface is irradiated with the measurement light ML.

When the processing head 11 irradiates the three or more irradiation areas WA with the measurement light ML in this manner, the control apparatus 5 is capable of properly controlling the relative positional relationship between the workpiece W and the processing head 11 in each of the Z axis direction, the θX direction and the θY direction.

However, the processing head 11 may irradiate two irradiation areas WA with the measurement light ML. Namely, the processing head 11 may irradiate two positions on the surface of the workpiece W with the measurement light ML. In this case, the control apparatus 5 is capable of properly controlling the relative positional relationship between the workpiece W and the processing head 11 in each of the Z axis direction and a direction around one axis that is perpendicular to the Z axis. Specifically, the control apparatus 5 is capable of properly controlling the relative positional relationship between the workpiece W and the processing head 11 in each of the Z axis direction and a direction around one axis that is perpendicular to both of the Z axis and an axis connecting the two irradiation area WA.

Alternatively, the processing head 11 may irradiate one irradiation area WA with the measurement light ML. Namely, the processing head 11 may irradiate one position on the surface of the workpiece W with the measurement light ML. In this case, the control apparatus 5 is capable of properly controlling the relative positional relationship between the workpiece W and the processing head 11 in the Z axis direction

As illustrated in FIG. 7 and FIG. 14, the processing head 11 may emit the measurement light ML so that the trajectory connecting the three or more irradiation areas WA surrounds the processing shot area ESA that is to be processed from now or that is being processed now (the processing shot area ESA to be processed or the processing shot area ESA being processed, and it is referred to as a target shot area ESA). The processing head 11 may emit the measurement light ML so that the moving trajectory MT of the target irradiation area MA surrounds the target shot area ESA, because the target irradiation area MA of the measurement light ML moves to pass through the three or more irradiation areas WA. As described above, the target irradiation area MA moves in the measurement shot area MSA. Thus, the processing head 11 may emit the measurement light ML in a state where the measurement shot area MSA overlaps with the target shot area ESA at least partially. In this case, there is a relatively higher possibility that plurality of irradiation areas WA distribute in a relatively wider range on the surface of the workpiece W, compared to a case where the trajectory connecting the three or more irradiation areas WA does not surround the target shot area ESA. Namely, there is a relatively higher possibility that the processing head 11 is capable of irradiating positions that distribute relatively widely on the surface of the workpiece W with the measurement light ML. As a result, the control apparatus 5 is capable of determine what the positional relationship between the workpiece W and the processing head 11 is on the basis of the distance information more accurately. This is because an range of the surface of the workpiece W the positional relationship of which is determinable relative to the processing head 11 on the basis of the distance information is limited to a relatively narrow range that is irradiated with the measurement light ML if the plurality of irradiation areas WA locally distribute in a relative narrow range on the surface of the workpiece W. Therefore, when positions that distribute in the relatively widely on the surface of the workpiece W are irradiated with the measurement light ML, the control apparatus 5 is capable of determine the positional relationship between the workpiece W and the processing head 11 on the basis of the distance information more properly.

FIG. 7 illustrates an example in which the moving trajectory MT of the target irradiation area MA has a rectangular shape. This rectangular moving trajectory MT is one example of the moving trajectory MT that is capable of surround the target shot area ESA. Additionally, at least one of a circular moving trajectory MT (see FIG. 14), an oval moving trajectory MT, a polygonal moving trajectory MT and a looped moving trajectory MT is one example of the moving trajectory MT that is capable of surround the target shot area ESA.

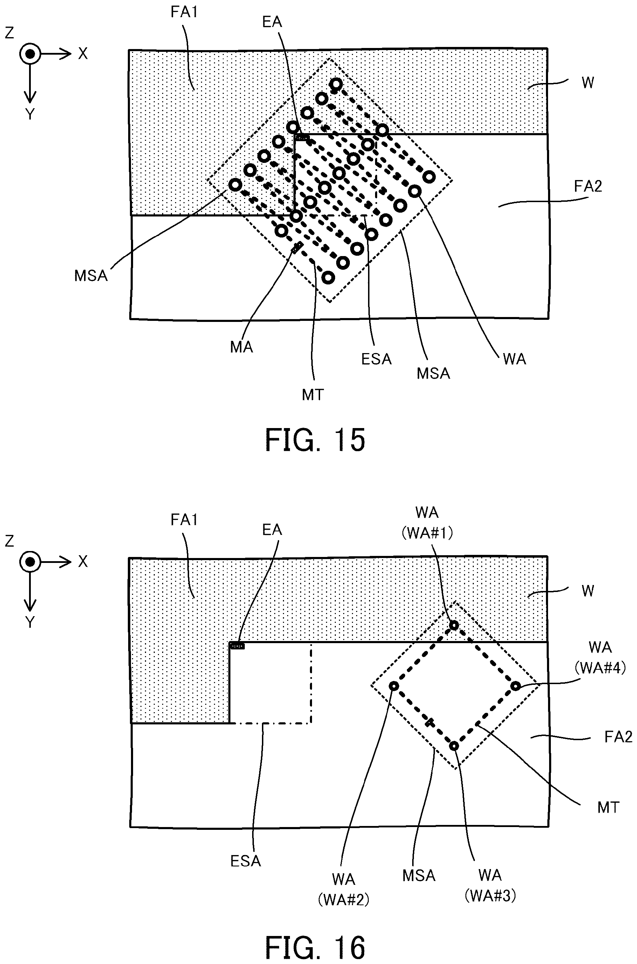

However, the moving trajectory MT may not surround the target shot area ESA. The trajectory connecting the three or more irradiation areas WA may not surround the target shot area ESA. At least a part of the moving trajectory MT may traverse the target shot area ESA. At least a part of the moving trajectory MT may be located in the target shot area ESA. At least a part of the moving trajectory MT may be located outside the target shot area ESA. For example, as illustrated in FIG. 15 that is a planar view illustrating another example of the moving trajectory MT, the moving trajectory MT may be a trajectory in which a trajectory along which the target irradiation area MA moves toward a first direction (it may be referred to as a scan direction) and a trajectory along which the target irradiation area Ma moves toward a direction including a direction component of a second direction (it may be referred to as a step direction) intersecting with the first direction are repeated alternately.

The processing head 11 may emit the measurement light ML so that at least one of the three or more irradiation areas WA is located in the target shot area ESA. Namely, the processing head 11 may irradiate the target shot area ESA with the measurement light ML one or more times. The processing head 11 may emit the measurement light ML so that at least one of the three or more irradiation areas WAis located near or around the target shot area ESA. Namely, the processing head 11 may irradiate a vicinity or a circumference of the target shot area ESA with the measurement light ML one or more times. The processing head 11 may emit the measurement light ML so that at least one of the three or more irradiation areas WA is located at a position that is away from the target shot area ESA along at least one of the X axis direction and the Y axis direction. Namely, the processing head 11 may irradiate the position that is away from the target shot area ESA along at least one of the X axis direction and the Y axis direction with the measurement light ML one or more times.

FIG. 7 and FIG. 13 to FIG. 14 illustrate an example in which each of the irradiation areas WA#1 to WA#4 is located near or around the target shot area ESA. Namely, FIG. 7 and FIG. 13 to FIG. 14 illustrate an example in which the processing head 11 irradiates the vicinity or the circumference of the target shot area ESA with the measurement light ML a plurality of times. Especially, FIG. 7 and FIG. 13 to FIG. 14 illustrate an example in which the irradiation area WA#1 is located at a position that is away from the target shot area ESA toward the -Y side, the irradiation area WA#2 is located at a position that is away from the target shot area ESA toward the -X side, the irradiation area WA#3 is located at a position that is away from the target shot area ESA toward the +Y side, and the irradiation area WA#4 is located at a position that is away from the target shot area ESA toward the +X side. Namely, FIG. 7 and FIG. 13 to FIG. 14 illustrate an example in which the processing head 11 irradiates each of the position that is away from the target shot area ESA toward the -Y side, the position at which the irradiation area WA#2 is away from the target shot area ESA toward the -X side, the position that is away from the target shot area ESA toward the +Y side, and the position that is away from the target shot area ESA toward the +X side with the measurement light ML. On the other hand, FIG. 15 illustrates an example in which a part of the plurality of irradiation areas WA is located near or around the target shot area ESA and other part of the plurality of irradiation areas WA is located in the target shot area ESA.

Alternatively, each of FIG. 7 and FIG. 13 to FIG. 15 illustrates whole of the target shot area ESA is included in the measurement shot area MSA. However, at least a part of the target shot area ESA may be located outside the measurement shot area MSA. For example, as illustrated in FIG. 16 that is a planar view illustrating one example of a positional relationship between the target shot area ESA and the measurement shot area MSA, whole of the target shot area ESA may be located outside the measurement shot area MSA. In this case, the position of the measurement shot area MSA may be set on the basis of the position of the target shot area ESA. The processing head 11 may irradiate a position that is determined on the basis of the position of the target shot area ESA with the measurement light ML. Alternatively, the position of the measurement shot area MSA may be set independently of the position of the target shot area ESA. The processing head 11 may irradiate a desired position on the workpiece W with the measurement light ML independently of the position of the target shot area ESA.

The processing head 11 may emit the measurement light ML so that at least one of the three or more irradiation areas WA is located at a position that is away along at least one of the X axis direction and the Y axis direction from an area affected by the processing light EL, for the purpose of avoiding the area affected by the processing light EL. Namely, the processing head 11 may irradiate the position that is away along at least one of the X axis direction and the Y axis direction from the area affected by the processing light EL with the measurement light ML, for the purpose of avoiding the area affected by the processing light EL. Typically, the measurement shot area MSA itself may be located at the position that is away along at least one of the X axis direction and the Y axis direction from an area affected by the processing light EL. In this case, the processing head 11 is capable of irradiating the workpiece W with the measurement light ML without being affected by the processing light EL. Namely, the processing head 11 is capable of irradiating the workpiece W with the measurement light ML that is not affected by the processing light EL. As a result, the control apparatus 5 is capable of calculating the distance D between the workpiece W and the processing head 11 more accurately. As a result, the control apparatus 5 is capable of controlling the relative positional relationship between the workpiece W and the processing head 11 more properly.

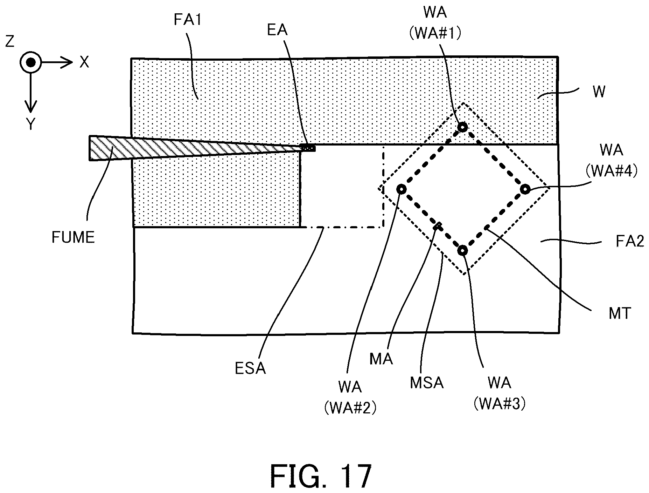

An area in which a fume (alternatively, other unnecessary substance) generated by the irradiation of the processing light EL to the workpiece W flows is one example of the area affected by the processing light EL. For example, FIG. 17 is a planar view that illustrates the workpiece W that is irradiated with the processing light EL. As illustrated in FIG. 17, there is a possibility that the fume (alternatively, other unnecessary substance) is generated when the workpiece W is irradiated with the processing light EL. There is a possibility that the fume prevent the workpiece W from being irradiated with the measurement light ML. Thus, the processing head 11 may emit the measurement light ML so that the optical path of the measurement light ML does not overlap with the fume. Specifically, the processing head 11 may emit the measurement light ML so that at least one of the three or more irradiation areas WA is located at a position that is away along at least one of the X axis direction and the Y axis direction from the area in which the fume flows. The measurement shot area MSA may be located at the position that is away along at least one of the X axis direction and the Y axis direction from the area in which the fume flows. In an example illustrated in FIG. 17, the processing head 11 emits the measurement light ML so that all of the irradiation areas WA#1 to WA#4 are located at a position that is away toward the +X side from the area in which the fume flows (namely, that is away toward a direction that is opposite to a direction toward which the fume flows from the processing shot area ESA). Namely, in the example illustrated in FIG. 17, the processing head 11 irradiates the position that is away toward the +X side from the area in which the fume flows with the measurement light ML. Especially, in the example illustrated in FIG. 17, the measurement shot area MSA itself is located at the position that is away toward the +X side from the area in which the fume flows (namely, that is away toward the direction that is opposite to the direction toward which the fume flows from the processing shot area

### ESA).

Incidentally, in the example illustrated in FIG. 17, a gas may be supplied along the surface of the workpiece W from a gas supply apparatus (not illustrated) that is located at the +X axis direction side from the processing shot area ESA. In this case, at least one of the irradiation areas WA may be located between the processing shot area ESA and the gas supply apparatus (especially, a gas supply port thereof) (between the processing shot area ESA and the gas supply apparatus (especially, the gas supply port thereof) viewed from an optical axis direction of the irradiation optical system).

An area that is affected by a heat generated by the irradiation of the processing light EL to the workpiece W is another example of the area affected by the processing light EL. Even in this case, the processing head 11 may emit the measurement light ML so that at least one of the three or more irradiation areas WA is located at a position that is away along at least one of the X axis direction and the Y axis direction from the area that is affected by the heat generated by the irradiation of the processing light EL to the workpiece W. Namely, the processing head 11 may irradiate the position that is away along at least one of the X axis direction and the Y axis direction from the area that is affected by the heat generated by the irradiation of the processing light EL to the workpiece W with the measurement light ML The measurement shot area MSA may be located at the position that is away along at least one of the X axis direction and the Y axis direction from the area that is affected by the heat generated by the irradiation of the processing light EL to the workpiece W.

Note that a shape information related to the shape of the workpiece W may be obtained from a calculated result of the distance D between the processing head 11 and each of the three or more irradiation areas WA by the processing head 11.

### (1-4-2) Second Alignment Operation

Next, the second alignment operation will be described. The second alignment operation is an operation for controlling the relative positional relationship between the workpiece W and the processing head 11 on the basis not only the above described optical path difference information (namely, the distance information related to the distance D calculated on the basis of the optical path difference information) but also the shape information related to the shape of the workpiece W.

When the second alignment operation is performed, the control apparatus 5 obtains the shape information related to the shape of the workpiece W. The shape information may include a model data related to a workpiece model WM that is a three-dimensional model of the workpiece W (for example, a CAD (Computer Aided Design) data). The control apparatus 5 may obtain the shape information from an apparatus outside the processing system SYSa. Alternatively, when the processing system SYSa includes a three-dimensional shape measurement apparatus, the control apparatus 5 may obtain the shape information from the three-dimensional shape measurement apparatus of the processing system SYSa. A contact type of three-dimensional shape measurement apparatus including a probe that is movable relative to the workpiece W and that is allowed to contact the workpiece W is one example of the three-dimensional shape measurement apparatus. A non-contact type of three-dimensional shape measurement apparatus is another example of the three-dimensional shape measurement apparatus. A pattern projection type of three-dimensional shape measurement apparatus, a light section type of three-dimensional shape measurement apparatus, a TOF (Time of Flight) type of three-dimensional shape measurement apparatus, a moire topography type of three-dimensional shape measurement apparatus and a holography interference type of three-dimensional shape measurement apparatus is one example of the non-contact-type of three-dimensional shape measurement apparatus. Incidentally, when the processing system SYSa includes the three-dimensional shape measurement apparatus, a positional relationship between the three-dimensional shape measurement apparatus and the processing head 11, especially, the common optical system 116 (especially, the fθ lens 1162) may be fixed. Moreover, when the three-dimensional shape measurement apparatus is an optical type of three-dimensional shape measurement apparatus, an arrangement relationship between an optical path of the optical type of three-dimensional shape measurement apparatus and the optical path AX of the optical system (especially, the common optical system 116 (especially, the fθ lens 1162)) of the processing head 11 may be fixed.

Furthermore, even when the second alignment operation is performed, the control apparatus 5 calculates the distance D between the processing head 11 and each of the three or more irradiation areas WA, as with the case where the first alignment operation is performed.

Then, the control apparatus 5 estimates the shape of the workpiece W (especially, a shape of a surface including an area that is irradiated with the measurement light ML of the surface of the workpiece W) on the basis of the distance information related to the calculated distances D. Note that an existing method may be used as a method of estimating a shape of an object on the basis of distances to a plurality of positions of the object is omitted, and thus, a detailed description thereof is omitted.

Then, the control apparatus 5 performs a matching process (for example, a shape matching process or a pattern matching process) between the shape of the workpiece W estimated from the distance information and the shape of the workpiece model WM indicated by the shape information. Specifically, the control apparatus 5 performs the matching process to identify a part of the surface of the workpiece W, whose shape is estimated from the distance information, corresponds to which part of the surface of the workpiece model WM indicated by the shape information. Then, the control apparatus 5 fits the workpiece model WM to at least a part of the surface of the workpiece W whose shape is estimated from the distance information on the basis of the result of the matching process. As a result, the control apparatus 5 determine the relative positional relationship between the processing head 11 and the workpiece model WM. Here, since the workpiece model WM is fitted to at least a part of the surface of the workpiece W, the relative positional relationship between the processing head 11 and the workpiece model WM is equivalent to the relative positional relationship between the processing head 11 and the workpiece W. Therefore, the control apparatus 5 determines the current relative positional relationship between the processing head 11 and the workpiece W. Especially, the control apparatus 5 may determine the current relative positional relationship between the processing head 11 and the workpiece W in each of the X axis direction, the Y axis direction, the Z axis direction, the θX direction, the θY direction and the θZ direction.

Then, the control apparatus 5 controls the relative positional relationship between the processing head 11 and the workpiece W on the basis of the current relative positional relationship between the processing head 11 and the workpiece W. Especially, the control apparatus 5 controls the relative positional relationship between the processing head 11 and the workpiece W in each of the X axis direction, the Y axis direction, the Z axis direction, the θX direction, the θY direction and the θZ direction. This is because the control apparatus 5 may determine the relative positional relationship between the processing head 11 and the workpiece W in each of the X axis direction, the Y axis direction, the Z axis direction, the θX direction, the θY direction and the θZ direction on the basis of the distance information and the shape information as described above.

According to the second alignment operation, the control apparatus 5 is capable of controlling the relative positional relationship between the processing head 11 and the workpiece W having any shape. Specifically, even when the workpiece W having any shape is placed on the stage 32, the control apparatus 5 is capable of controlling the relative positional relationship between the processing head 11 and the workpiece W. For example, the control apparatus 5 is capable of controlling the relative positional relationship between the processing head 11 and the workpiece W whose surface is not flat. For example, the control apparatus 5 is capable of controlling the relative positional relationship between the processing head 11 and a workpiece W whose surface includes at least one of an uneven surface, a curved surface and an inclined surface.

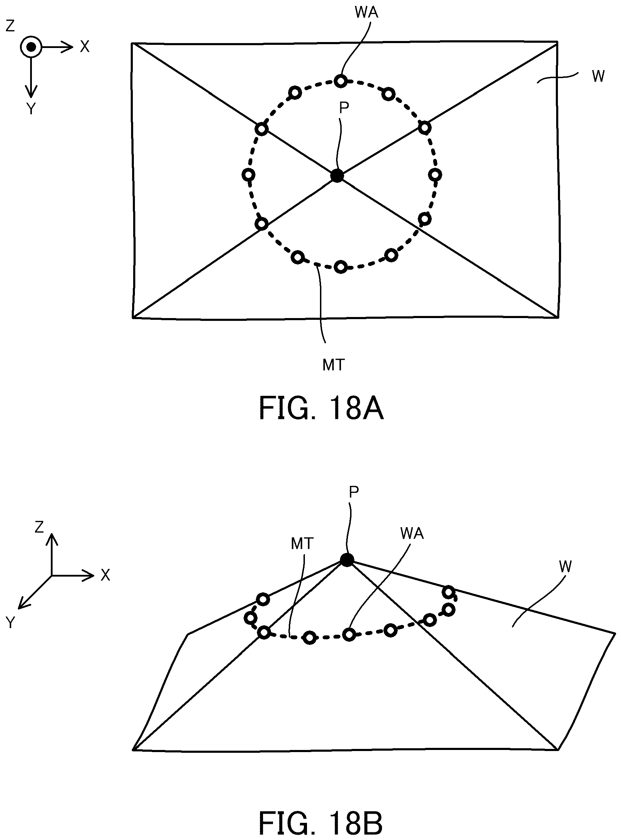

However, when only a part of the surface of the workpiece W that has few features (for example, a part that is merely flat) is irradiated with the measurement light ML, there is a possibility that the control apparatus 5 is not capable of properly completing the matching process. Specifically, there is a possibility that the control apparatus 5 is not capable of properly identify a part of the surface of the workpiece W, whose shape is estimated from the distance information, corresponds to which part of the surface of the workpiece model WM indicated by the shape information. Thus, the processing head 11 may irradiate a feature point of the surface of the workpiece W having a characteristic shape and / or a vicinity of the feature point with the measurement light ML. Namely, at least one irradiation area WA that is irradiated with the measuring light ML may be located at the feature point of the surface of the workpiece W having the characteristic shape and / or near the feature point. For example, as illustrated in FIG. 18A that is a top view illustrating one example of the workpiece W and FIG. 18B that is a perspective view illustrating one example of the workpiece W, when a vertex P of the workpiece W having a pyramidal shape is used as the feature point, the processing head 11 may irradiate the vertex P and / or the vicinity of the vertex P with the measurement light ML. Additionally, at least one of an edge, a corner, a concave point and a convex point of the workpiece W is one example of the feature point.

Incidentally, a part of the surface of the workpiece W having a characteristic property may be used as the feature point, in addition to or instead of the part of the surface of the workpiece W having the characteristic shape being used as the feature point. For example, a part of the surface of the workpiece W having a characteristic color (namely, a color different from that of another part) may be used as the feature point. The part having the characteristic color may include at least one of a part having a characteristic spectral transmittance and a part having a characteristic reflective property. For example, a part of the surface of the workpiece W having a characteristic refractive index (namely, a refractive index different from that of other part) may be used as the feature point.

However, there is a possibility that the control apparatus 5 is not capable of determining the position of the feature point of the workpiece W until the current relative positional relationship between the machining head 11 and the workpiece W is determined on the basis of the distance and shape information. Thus, the control apparatus 5 may increase a possibility that the feature point and / or the vicinity of the feature point is irradiated with the measurement light ML by performing the above described "process for increasing the possibility that the part of the surface of the workpiece W that is the planar surface is irradiated with the measurement light ML". Namely, the control apparatus 5 may increase the possibility that the feature point and / or the vicinity of the feature point is irradiated with the measurement light ML by changing the position of at least one irradiation area WA and / or change the number of irradiation areas WA.

When the feature point and / or the vicinity of the feature point is irradiated with the measurement light ML, the control apparatus 5 may control the relative positional relationship between the processing head 11 and the workpiece W based on the feature point of the workpiece W. Namely, the control apparatus 5 may control the relative positional relationship between the processing head 11 and the workpiece W so that a relative positional relationship between the feature point of the workpiece W and the processing head 11 (more specifically, a relative positional relationship between the processing head 11 and an area of the surface of the workpiece W that includes the feature point) becomes a predetermined positional relationship.

Note that the shape information related to the shape of the workpiece W may be obtained from the calculated result of the distance D between the processing head 11 and each of the three or more irradiation areas WA by the processing head 11.

### (1-4-3) Third Alignment Operation

Next, the third alignment operation will be described. The third alignment operation is an operation for controlling the relative positional relationship between the workpiece W and the processing head 11 on the basis not only the above described optical path difference information (namely, the distance information related to the distance D calculated on the basis of the optical path difference information) but also a processed trace information related to a processed trace of the workpiece W by the processing light EL.

Even when the third alignment operation is performed, the control apparatus 5 calculates the distance D between the processing head 11 and each of the three or more irradiation areas WA, as with the case where the first alignment operation is performed. As a result, the control apparatus 5 controls the relative positional relationship between the processing head 11 and the workpiece W in each of the Z axis direction, the θX direction and the θY direction on the basis of the distance information related to the calculated distances D.

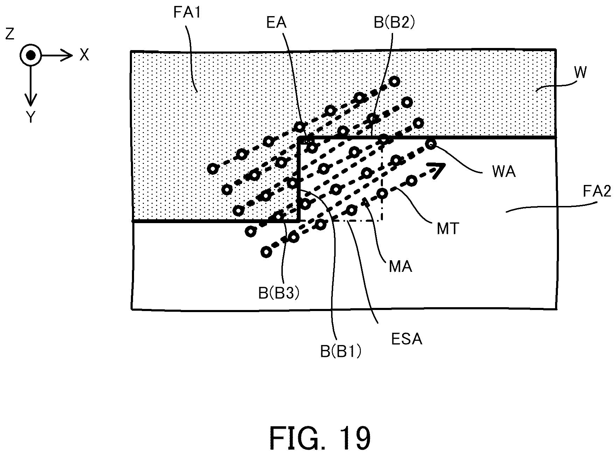

Furthermore, when the third alignment operation is performed, the control apparatus 5 determines a position of the processed trace of the workpiece W by the processing light EL on the basis of the distance information. For example, the control apparatus 5 may determine a position of the processed area FA1. Moreover, a position of the non-processed area FA2 indirectly indicates the position of the processed mark, because the area of the surface of the workpiece W other than the non-processed area FA2 is the processed area FA1. Thus, for example, the control apparatus 5 may determine the position of the non-processed area FA2 on the basis of the distance information. Moreover, a position of a boundary B (see FIG 19) between the processed area FA1 and the non-processed area FA2 also indirectly indicate the position of the processed trace, because the processed area FA1 is adjacent to the non-processed area FA2 through the boundary B. Thus, for example, the control apparatus 5 may determine the position of the boundary B between the processed area FA1 and the non-processed area FA2 on the basis of the distance information. Incidentally, as described with reference to FIG. 8 and FIG. 11, the distance D between the processed area FA1 and the processing head 11 is different from from the distance D between the non-processed area FA2 and the processing head 11 by a certain amount. Thus, the control apparatus 5 may determine on the basis of the distance information whether the irradiation area WA that is irradiated with the measurement light ML is located in the processed area FA1 or in the non-processed area FA2. Therefore, the control apparatus 5 may determine the position of the processed trace by using the result of this determination.

Considering that such a phenomenon that the distance D between the processed area FA1 and the processing head 11 is different from the distance D between the non-processed area FA2 and the processing head 11 by a certain amount is used to determine the position of the processed trace, the control apparatus 5 may control the processing head 11 so that both of the processed area FA1 and the non-processed area FA2 are irradiated with the measurement light ML For example, as illustrated in FIG. 19 that is a planar view illustrating the plurality of irradiation areas WA on the workpiece W when the third alignment operation is performed, the processing head 11 may emit the measurement light ML so that the target irradiation area MA moves to traverse the boundary B between the processed area FA1 and the non-processed area FA2. The processing head 11 may emit the measurement light ML so that the moving trajectory MT of the target irradiation area MA intersects with the boundary B between the processed area FA1 and the non-processed area FA2. As a result, both of the processed area FA1 and the non-processed area FA2 are properly irradiated with the measurement light ML.

Then, the control apparatus 5 controls the relative positional relationship between the processing head 11 and the workpiece W in each of the X axis direction, the Y axis direction and the θZ direction on the basis of the processed trace information related to the processed trace (typically, an information related to the determined position of the processed trace). Specifically, the processed trace forms a predetermined pattern on the surface of the workpiece W that is a surface along the XY plane. For example, in an example illustrated in FIG. 19, the processed trace forms a pattern that has a boundary B1 extending along the Y axis direction, a boundary B2 extending from the end part of the boundary B1 at the -Y side toward the +X side along the X axis direction, and a boundary B3 extending from an end part of the boundary B 1 at the +Y side toward the -X side along the X axis direction. The pattern of the processed trace is an information known to the control apparatus 5. This is because the pattern of processed trace is formed by the processing head 11 processing the workpiece W under the control of the control apparatus 5, as described above. Therefore, the control apparatus 5 may determine the current relative positional relationship between the processing head 11 and the workpiece W on the basis of the pattern of processed trace. Especially, the control apparatus 5 may determine the current relative positional relationship between the processing head 11 and the workpiece W in each of the X axis direction, the Y axis direction and the θZ direction on the basis of the pattern of the processed trace. This is because the pattern of processed trace is formed on the surface of the workpiece W along the XY plane. As a result, the control apparatus 5 may control the relative positional relationship between the processing head 11 and the workpiece W in each of the X axis direction, the Y axis direction and the θZ direction on the basis of the current relative positional relationship between the processing head 11 and the workpiece W determined on the basis of the processed trace information.

Incidentally, it can be said that the third alignment operation is an operation that substantially uses the processed trace of the workpiece W as the feature point of the workpiece W. For example, it can be said that the third alignment operation is an operation that substantially uses at least a part of the processed area FA1 and / or at least a part of the non-processed area FA2 as the feature point of the workpiece W. For example, it can be said that the third alignment operation is an operation that substantially uses a part of the workpiece W that is located at at least a part of the boundary B as the feature point of the workpiece W. In this case, it can be said that the third alignment operation is an operation in common with the second alignment operation in that it controls the relative positional relationship between the processing head 11 and the workpiece W by using the feature point of the workpiece W. However, the third alignment operation does not necessarily require the shape information related to the shape of the workpiece W.

Moreover, the processing system SYSa may perform the second alignment operation together with the third alignment operation. Specifically, the processing system SYSa may control the relative positional relationship between the processing head 11 and the workpiece W in each of the Z axis direction, the θX direction and the θY direction on the basis of at least one of the distance information and the shape information. The processing system SYSa may control the relative positional relationship between the processing head 11 and the workpiece W in each of the X axis direction, the Y axis direction and the θZ direction on the basis of at least one of the shape information and the processed trace information.

### (1-4-4) Fourth Alignment Operation

Next, the fourth alignment operation will be described. The fourth alignment operation is an operation for controlling the relative positional relationship between the workpiece W and the processing head 11 on the basis not only the above described optical path difference information (namely, the distance information related to the distance D calculated on the basis of the optical path difference information) but also a mark information related to an alignment mark AM formed at the workpiece W. Thus, the processing system SYSa may perform the fourth alignment operation on the workpiece W when the workpiece W at which the alignment mark AM is formed is placed on the stage 32. On the other hand, the processing system SYSa may not perform the fourth alignment operation on the workpiece W when the workpiece W at which the alignment mark AM is not formed is placed on the stage 32.

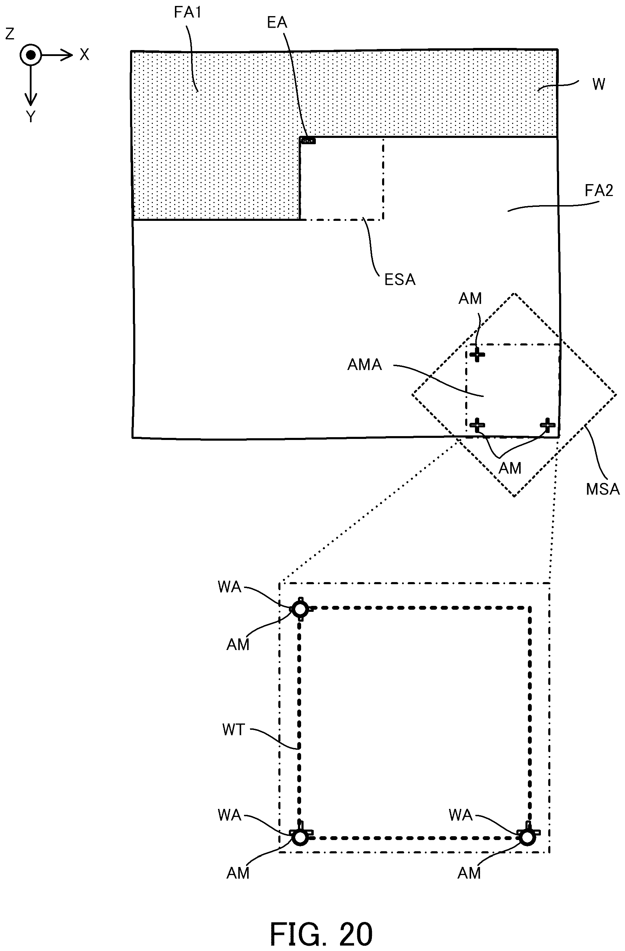

One example of the alignment mark AM is illustrated in FIG. 20. As illustrated in FIG. 20, the alignment mark AM may be formed at the surface of the workpiece W. The alignment mark AM may be formed in a mark area AMA of the surface of the workpiece W that is for forming the alignment mark AM. The mark area AMA may be processed or may not be processed by the processing light EL. At least three alignment marks AM are formed in the mark area AMA. For example, in the mark area AMA, at least three alignment marks AM including two alignment marks AM that are away from each other along the X axis direction (namely, positions in the X axis direction of which are different from each other). For example, in the mark area AMA, at least three alignment marks AM including two alignment marks AM that are away from each other along the Y axis direction (namely, positions in the Y axis direction of which are different from each other). However, two or less alignment marks AM may be formed in the mark area AMA. In an example illustrated in FIG. 19, three alignment marks AM are formed in the mark area AMA.

Even when the fourth alignment operation is performed, the control apparatus 5 calculates the distance D between the processing head 11 and each of the three or more irradiation areas WA, as with the case where the first alignment operation is performed. As a result, the control apparatus 5 controls the relative positional relationship between the processing head 11 and the workpiece W in each of the Z axis direction, the θX direction and the θY direction on the basis of the distance information related to the calculated distances D.

Furthermore, when the fourth alignment operation is performed, the control apparatus 5 determines positions of the alignment marks AM on the basis of the distance information. Thus, when the fourth alignment operation is performed, the processing head 11 irradiates the mark area AMA with the measurement light ML. The processing head 11 emits the measurement light ML in a state where the mark area AMA overlaps with the measurement shot area MSA at least partially.

Incidentally, in order to determine the position of the alignment mark AM on the basis of the distance information, the alignment mark AM may be a structural object (a convex or concave structural object) that protrudes by a certain protrusion amount or is depressed by a certain depression amount from the surface of the workpiece W along the Z axis direction. Moreover, the protrusion amount and / the depression amount may be an information known to the control apparatus 5. In this case, the control apparatus 5 may determine the position of the alignment mark AM on the basis of the distance information by using the same method used to determine the position of the processed trace on the basis of the distance information. Namely, the control apparatus 5 may determine on the basis of the distance information whether the surface of the workpiece W or the alignment mark AM is irradiated with the measurement light ML

Then, the control apparatus 5 controls the relative positional relationship between the processing head 11 and the workpiece W in each of the X axis direction, the Y axis direction and the θZ direction on the basis of the mark information related to the alignment marks AM (typically, an information related to the determined positions of the alignment marks AM). Specifically, the alignment marks AM are arranged in a predetermined arrangement pattern on the surface of the workpiece W that is a surface along the XY plane. This arrangement pattern is an information known to the control apparatus 5. In this case, the control apparatus 5 may determine a relative positional relationship between the processing head 11 and the alignment marks AM on the basis of the mark information (namely, on the basis of the actual positions of the alignment marks AM). Furthermore, the control apparatus 5 may determine the relative positional relationship between the processing head 11 and the workpiece W on the basis of the mark information, because the alignment marks AM are formed on the surface of the workpiece W. Especially, the control apparatus 5 may determine the current relative positional relationship between the processing head 11 and the workpiece W in each of the X axis direction, the Y axis direction and the θZ direction on the basis of the mark information. This is because the alignment marks AM are arranged in the predetermined arrangement pattern on the surface of the workpiece W along the XY plane. As a result, the control apparatus 5 may control the relative positional relationship between the processing head 11 and the workpiece W in each of the X axis direction, the Y axis direction and the θZ direction on the basis of the current relative positional relationship between the processing head 11 and the workpiece W determined on the basis of the mark information.

Moreover, it can be said that the fourth alignment operation is an operation that substantially uses the alignment mark AM, which is formed at the workpiece W in advance, as the feature point of the workpiece W. In this case, it can be said that the fourth alignment operation is an operation in common with the second alignment operation in that it controls the relative positional relationship between the processing head 11 and the workpiece W by using the feature point of the workpiece W. However, the fourth alignment operation does not necessarily require the shape information related to the shape of the workpiece W.

Moreover, the processing system SYSa may perform at least one of the second alignment operation and the third alignment information together with the fourth alignment operation. Specifically, the processing system SYSa may control the relative positional relationship between the processing head 11 and the workpiece W in each of the Z axis direction, the θX direction and the θY direction on the basis of at least one of the distance information and the shape information. The processing system SYSa may control the relative positional relationship between the processing head 11 and the workpiece W in each of the X axis direction, the Y axis direction and the θZ direction on the basis of at least one of the shape information, the processed trace information and the mark information.

Moreover, any index that is different from the alignment mark AM may be formed at the workpiece W. The processing system SYS is capable of performing a fourth alignment operation on the workpiece W at which any index is formed as long as any index is measurable by the measurement light ML.

### (1-5) Technical Effect of Processing SYSa

The above described processing system SYSa is capable of properly processing the workpiece W by using the processing light EL. Furthermore, the processing system SYSa is capable of properly measuring the workpiece W by using the measurement light ML. Especially, in the first embodiment, since the light frequency comb is used as the measurement light ML, a measurement accuracy of the workpiece W improves. However, a light that is different from the light frequency comb may be used as the measurement light ML

Moreover, the processing system SYSa is capable of properly controlling the relative positional relationship between the workpiece W and the processing head 11 on the basis of the difference between the optical paths (namely, the difference between the length of the optical path OP#1-3 and the length of the optical paths OP#2-2 and OP#2-3) calculated from the detected result of the measurement light ML. As a result, the processing head 11 is capable of properly processing the workpiece W. For example, the processing head 11 is capable of processing the workpiece W that is substantially stationary relative to the processing head 11. The processing head 11 is capable of processing the workpiece W in a state where it is substantially stationary relative to the workpiece W. Thus, the processing quality (for example, the processing accuracy) improves, compared to the case where the workpiece W that is not substantially stationary relative to the processing head 11 (for example, that moves) is processed.

### (2) Processing System SYSb in Second Embodiment

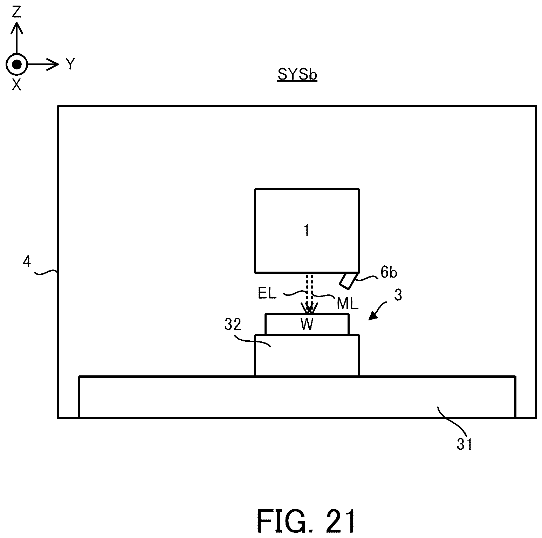

Next, with reference to FIG. 21, a processing system SYS in a second embodiment (in the below described description, the processing system SYS in the second embodiment is referred to as a "processing system SYSb") will be described. FIG. 21 is a cross-sectional view that schematically illustrates the structure of the processing system SYSb in the second embodiment.

As illustrated in FIG. 21, the processing system SYSb in the second embodiment is different from the above described processing system SYSa in the first embodiment in that it further includes a position measurement apparatus 6b. Another feature of the processing system SYSb may be same as another feature of the processing system SYSa.

The position measurement apparatus 6b measures the relative positional relationship between the workpiece W and the processing head 11. In the second embodiment, the position measurement apparatus 6b measures the position of the workpiece W relative to the processing head 11. In order to measure the position of the workpiece W relative to the processing head 11, the position measurement apparatus 6b may measure the workpiece W. Note that an operation for measuring the relative positional relationship between the workpiece W and the processing head 11 may be regarded to be substantially equivalent to an operation for measuring the relative positional relationship between the workpiece W and each optical system of the processing head 11, because the processing head 11 includes each optical system. Namely, an operation for measuring the position of the workpiece W relative to the processing head 11 is substantially measuring the position of the workpiece W relative to each optical system of the processing head 11. The operation for measuring the relative positional relationship between the workpiece W and the processing head 11 may be regarded to be substantially equivalent to an operation for measuring the relative positional relationship between the workpiece W and fθ lens 1162.

The position measurement apparatus 6b may be disposed at a position that is fixed relative to the processing head 11 (specially, each optical system of the processing head 11). The position measurement apparatus 6b may be disposed at a position whose relative position relative to the processing head 11 is fixed. The position measurement apparatus 6b may be disposed at a position at which the relative position between the processing head 11 and the position measurement apparatus 6b does not change even when the head driving system 12 moves the processing head 11. For example, FIG. 21 illustrates an example in which the position measurement apparatus 6b is attached to an external surface of the processing head 11 (for example, an external surface of the housing 117).

When the position measurement apparatus 6b is disposed at the position that is fixed relative to the processing head 11, an output from the position measurement apparatus 6b (namely, a measured result by the position measurement apparatus 6b) includes an information related to the position of the workpiece W relative to the processing head 11. Specifically, the measured result by the position measurement apparatus 6b includes an information related to the position of the workpiece W relative to the position measurement apparatus 6b. Namely, the measured result by the position measurement apparatus 6b includes an information related to the position of the workpiece W in a measurement coordinate system of the position measurement apparatus 6b. Here, when the position measurement apparatus 6b is disposed at the position that is fixed relative to the processing head 11, the information related to the position of the workpiece W relative to the position measurement apparatus 6b substantially includes an information related to the position of the workpiece W relative to the processing head 11 that is disposed at a position fixed relative to the position measurement apparatus 6b. Therefore, the control apparatus 5 is capable of properly determining the position of the position of the workpiece W relative to the processing head 11.

The position measurement apparatus 6b may be any type of measurement apparatus as long as it is configured to measure the workpiece W. For example, the position measurement apparatus 6b may include an imaging apparatus (namely, a camera) that is configured to capture an image of a surface of an object such as the workpiece W. The position measurement apparatus 6b may include an irradiation apparatus that irradiates the workpiece W with a measurement light that forms a predetermined pattern on the workpiece W and an imaging apparatus that captures an image of the pattern formed on the workpiece W by the measurement light. In this manner, the position measurement apparatus 6b may be a measurement apparatus that measures the workpiece W in a non-contact method (as one example, at least one of a light detection method, a sound wave detection method and an electric wave detection method).

The measured result by the position measurement apparatus 6b (namely, the information related to the position of the workpiece W relative to the processing head 11) may be used to control the processing system SYSa. Specifically, the measured result by the position measurement apparatus 6b may be used to control the processing apparatus 1. The measured result by the position measurement apparatus 6b may be used to control the processing head 11. The measured result by the position measurement apparatus 6b may be used to control the head driving system 12. The measured result by the position measurement apparatus 6b may be used to control the stage apparatus 3. The measured result by the position measurement apparatus 6b may be used to control the stage driving system 33.

For example, the control apparatus 5 may control the relative positional relationship between the workpiece W and the processing head 11 on the basis of the measured result by the position measurement apparatus 6b. For example, the control apparatus 5 may change the relative position of the target irradiation area EA relative to the workpiece W so that the target irradiation area EA is set at a desired position on the workpiece W (namely, it is irradiated with the processing light EL) on the basis of the measured result by the position measurement apparatus 6b. For example, the control apparatus 5 may change the relative position of the target irradiation area MA relative to the workpiece W so that the target irradiation area MA is set at a desired position on the workpiece W (namely, it is irradiated with the measurement light ML#2-2) on the basis of the measured result by the position measurement apparatus 6b.

Especially in the second embodiment, the control apparatus 5 may use the measured result by the position measurement apparatus 6b in addition to the distance information in performing the alignment operation for controlling the relative positional relationship between the workpiece W and the processing head 11.

When the measured result by the position measurement apparatus 6b is used for the alignment operation, the position measurement apparatus 6b may measure the position of the above described processed trace. In this case, the position measurement apparatus 6b may measure the relative positional relationship between the workpiece W and the processing head 11 in each of the X axis direction and the Y axis direction. Namely, the position measurement apparatus 6b may measure the relative positional relationship between the workpiece W and the processing head 11 in each of the X axis direction and the Y axis direction each of which intersects with the Z axis that is an axis connecting the workpiece W and the processing head 11 (especially, an axis connecting the workpiece W and the fθ lens 1162, substantially, an axis along the optical axis AX of the fθ lens 1162). Furthermore, the position measurement apparatus 6b may measure the relative positional relationship between the workpiece W and the processing head 11 in the θZ direction. Namely, the position measurement apparatus 6b may measure the relative positional relationship between the workpiece W and the processing head 11 in a rotational direction around the Z axis that is the axis connecting the workpiece W and the processing head 11 (especially, the axis connecting the workpiece W and the fθ lens 1162, substantially, the axis along the optical axis AX of the fθ lens 1162). The reason is already described in the above described third alignment operation. As a result, the control apparatus 5 may control the relative positional relationship between the processing head 11 and the workpiece W in each of the X axis direction, the Y axis direction, the Z axis direction, the θX direction, the θY direction and the θZ direction. For example, the control apparatus 5 may control the relative positional relationship between the processing head 11 and the workpiece W in each of the Z axis direction, the θX direction and the θY direction on the basis of the distance information and control the relative positional relationship between the processing head 11 and the workpiece W in each of the X axis direction, the Y axis direction and the θZ direction on the basis of the measured result by the position measurement apparatus 6b (namely, an information that may be regarded to be substantially equivalent to the above described processed trace information).

Alternatively, the position measurement apparatus 6b may measures the position of the above described alignment mark AM in addition to or instead of measuring the position of the processed trace. Even in this case, the position measurement apparatus 6b may measure the relative positional relationship between the workpiece W and the processing head 11 in each of the X axis direction, the Y axis direction and the θZ direction. The reason is already described in the above described fourth alignment operation. As a result, the control apparatus 5 may control the relative positional relationship between the processing head 11 and the workpiece W in each of the X axis direction, the Y axis direction, the Z axis direction, the θX direction, the θY direction and the θZ direction. For example, the control apparatus 5 may control the relative positional relationship between the processing head 11 and the workpiece W in each of the Z axis direction, the θX direction and the θY direction on the basis of the distance information and control the relative positional relationship between the processing head 11 and the workpiece W in each of the X axis direction, the Y axis direction and the θZ direction on the basis of the measured result by the position measurement apparatus 6b (namely, an information that may be regarded to be substantially equivalent to the above described mark information).

Incidentally, the position measurement apparatus 6b is attached to the external surface of the processing head 11 in the second embodiment, however, a part of the position measurement apparatus 6b may be attached to an inside of the processing head 11 (an inside of the housing 117) and whole of the position measurement apparatus 6b may be attached to the inside of the processing head 11 (the inside of the housing 117).

The processing system SYSb in the second embodiment described above is capable of achieving an effect that is same as the effect achievable by the processing system SYSa in the first embodiment described above. Furthermore, the processing system SYSb in the seventh embodiment is capable of processing the workpiece W by not only the detected results by the detectors 1143 and 1146 but also the detected result by the position measurement apparatus 6b. Thus, the processing system SYSb is capable of processing the workpiece W more properly. For example, the processing system SYSb is capable of processing the workpiece W more accurately.

### (3) Modified Example

In the above described description, the processing head 11 irradiates each of three or more irradiation areas WA on the workpiece W with the measurement light ML by deflecting the single measurement light ML by using the Galvano mirror 1148. However, the processing head 11 may emits three or more measurement lights ML with which three of more irradiation areas WA are irradiated, respectively. For example, it may include three or more light sources and / or three or more optical systems that respectively emit three or more measurement lights ML with which three of more irradiation areas WA are irradiated, respectively.

In the above described description, the processing head 11 includes the processing light source 111 and the measurement light source 113 in the housing 117. However, the processing head 11 may not include at least one of the processing light source 111 and the measurement light source 113 in the housing 117. The processing head 11 may emit, toward the workpiece W, the processing light EL emitted from the processing light source 111 disposed outside the housing 117 or outside the processing head 11. In this case, the processing light EL emitted from the external processing light source 111 may enter the processing optical system 112 in the housing 117 from an outside of the housing 117 through a light transmitting member such as an optical fiber. The processing head 11 may emit, toward the workpiece W, the measurement light ML emitted from the measurement light source 113 disposed outside the housing 117 or outside the processing head 11. In this case, the measurement light ML emitted from the external measurement light source 113 may enter the measurement optical system 114 in the housing 117 from the outside of the housing 117 through a light transmitting member such as an optical fiber.

In the above described description, the processing head 11 includes the processing optical system 112 and the measurement optical system 114 in the housing 117. However, the processing head 11 may not include at least one of the processing optical system 112 and the measurement optical system 114 in the housing 117. The processing head 11 may emit, toward the workpiece W, the processing light EL emitted from the processing optical system 112 disposed outside the housing 117 or outside the processing head 11. In this case, the processing light EL emitted from the external processing optical system 112 may enter the combining optical system 115 in the housing 117 from an outside of the housing 117 through a light transmitting member such as an optical fiber. The processing head 11 may emit, toward the workpiece W, the measurement light ML emitted from the measurement optical system 114 disposed outside the housing 117 or outside the processing head 11. In this case, the measurement light ML emitted from the external measurement optical system 114 may enter the combining optical system 115 in the housing 117 from the outside of the housing 117 through a light transmitting member such as an optical fiber. However, when the measurement optical system 114 is disposed outside the housing 117 or outside the processing head 11, the measurement optical system 114 may be disposed at a position that is fixed relative to the processing head 11 (especially, each optical system and the housing 117 of the processing head 11).

In the above described description, the processing head 11 irradiates the workpiece W with the processing light EL and the measurement light ML combined by using the combining optical system 115. However, the processing head 11 irradiates the workpiece W with the processing light EL and the measurement light ML without combining the processing light EL and the measurement light ML Namely, an optical path of the processing light EL from the processing light source 111 to the workpiece W may be optically separated from an optical path of the measurement light ML from the measurement light source 113 to the workpiece W. Namely, the processing head 11 may include an optical system for irradiating the workpiece W with the processing light EL and an optical system for irradiating the workpiece W with the measurement light ML in a state where both systems are optically separated. In this case, the processing head 11 may include, as the optical system for irradiating the workpiece W with the processing light EL, the above described processing optical system 112 and an irradiation optical system that has a structure same as the above described common optical system 116 and that irradiates the workpiece W with the processing light EL emitted from the processing optical system 112. The processing head 11 may include, as the optical system for irradiating the workpiece W with the measurement light ML, the above described measurement optical system 114 and an irradiation optical system that has a structure same as the above described common optical system 116 and that irradiates the workpiece W with the measurement light ML emitted from the measurement optical system 114. However, the optical system for irradiating the workpiece W with the measurement light ML may be disposed at a position that is fixed relative to the processing head 11 (especially, each optical system and the housing 117 of the processing head 11).

Note that an interferometer in a Michelson type, a Linnik type or the like, a digital holography measurement apparatus (for example, an apparatus disclosed in US9,494,411B), a multicolor confocal measurement apparatus (for example, an apparatus disclosed in US10,180,355B), a stereo camera, a TOF type of distance measurement apparatus, or an apparatus obtaining by combining at least two of these apparatuses may be used as the measurement apparatus using the measurement light ML.

The processing system SYS may separately include a processing head that irradiates the workpiece W with the processing light EL but does not irradiate the workpiece W with the measurement light ML and a measurement head that irradiates the workpiece W with the measurement light ML but does not irradiate the workpiece W with the processing light EL. However, the measurement head (especially, an optical system of the measurement head) may be disposed at a position that is fixed relative to the processing head (especially, each optical system and the housing 117 of the processing head).

In the above described description, the control apparatus 5 calculates the distance D between the processing head 11 and the workpiece W on the basis of the detected result of the measurement light ML with which the workpiece W is irradiated through the measurement optical system 114, the combining optical system 115 and the common optical system 116. However, a method of calculating the distance is not limited to this example. The processing head 11 (especially, the measurement optical system 114, the combining optical system 115 and the common optical system 116) may have any structure as long as the distance between the processing head 11 and the workpiece W is calculatable by using the measurement light ML For example, the processing head 11 may include a light reception part that optically receives the measurement light ML from the workpiece W instead of the measurement optical system 114, and the control apparatus 5 may calculate the distance between the processing head 11 and the workpiece W on the basis of a received result by the light reception part by using a distance measurement method such as a Time Of Flight method and the like.

In the above described description, the processing system SYS forms the riblet structure on the surface of the workpiece W. However, the processing system SYS may form any structure having any shape on the surface of the workpiece W. Even in this case, any structure having any shape is formable by means of the control apparatus 5 controlling the processing head 11 and so on so that the surface of the workpiece W is swept with the processing lights EL along the sweeping path based on the structure that should be formed. A fine texture structure (typically, a concave and convex structure) that is formed regularly or irregularly in a micro / nano-meter order is one example of any structure. This fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function and so on.

In the above described description, the processing system SYS forms, on the workpiece W, the riblet structure for reducing the resistance of the surface of the workpiece W to the fluid. However, the processing system SYS may form, on the workpiece W, another structure that is different from the riblet structure for reducing the resistance of the surface to the fluid. For example, the processing system SYS may form, on the workpiece W, a riblet structure for reducing a noise generated when the fluid and the surface of the workpiece W relatively move. For example, the processing system SYS may form, on the workpiece W, a structure for generating a swirl in a flow of the fluid on the surface of the workpiece W. For example, the processing system SYS may form, on the workpiece W, a structure for giving a hydrophobic properly to the workpiece W.

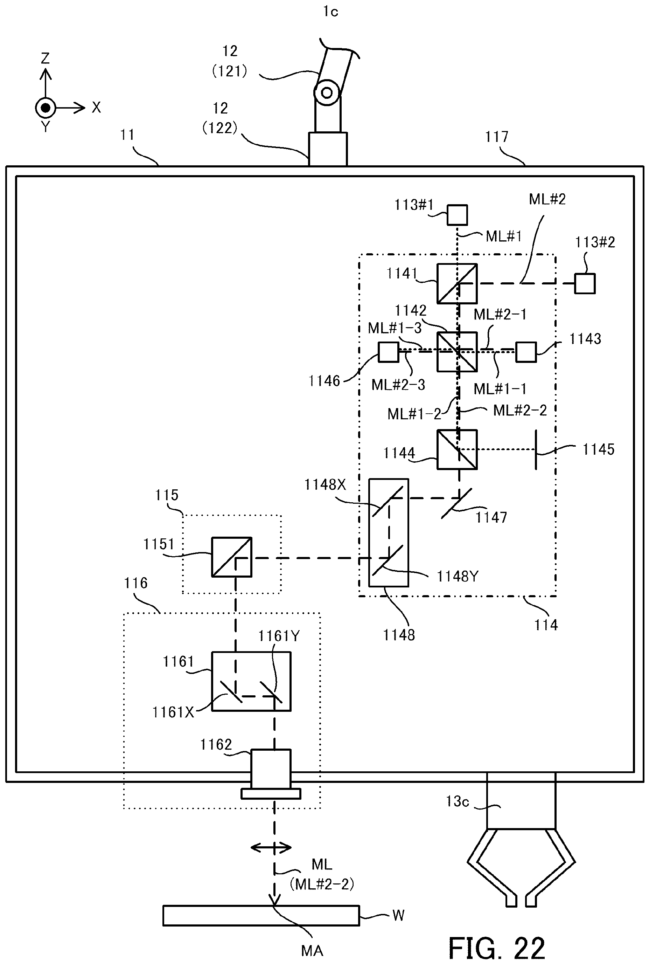

In the above described description, the processing system SYS that processes the workpiece W by the processing light EL is described. Namely, in the above description, an example in which processing system SYS includes the processing head 11. However, the processing system SYS may include an end effector in addition to or instead of the processing head 11. For example, as illustrated in FIG. 22 that illustrated one example of a structure of a processing apparatus 1c including the end effector, the processing system SYS may include the processing apparatus 1c including an end effector 13c. In an example illustrated in FIG. 22, the end effector 13c is attached to a head 11c, and the second driving system 122 connects the end effector 13c and the first driving system 121 through the head 11c. However, the end effector 13c may be attached to the second driving system 122 without using the head 11c. This processing system SYS including the end effector 13c may be referred to as a robot system. It can be said that the robot system is a system that performs a process using the end effector 13c on the workpiece W.

Note that the head 11c may be different from the processing head 11 in that it may not include a component related to the processing light EL (specifically, the processing light source 111 and the processing optical system 112). Furthermore, when the head 11c does not include the component related to the processing light EL, the head 11c may not combine the processing light EL and the measurement light ML and thus may not include the combining optical system 115. However, the head 11c may include the component related to the processing light EL and the combining optical system 115.

The processing system SYS including the end effector 13c may also perform the above described alignment operation. Namely, the processing system SYS including the end effector 13c may also perform the alignment operation for irradiating the workpiece W with a measurement light ML, calculating the distance D between the end effector 13c and the workpiece W on the basis of the detected result of the measurement light ML and controlling a relative positional relationship between the workpiece W and the end effector 13c on the basis of the distance information related to the calculated distance D.

When the processing system SYS includes the end effector 13c, a direction in which the end effector 13c is disposed relative to the workpiece W may be same as a direction in which the common optical system 116 (especially, the fθ lens 1162) is disposed relative to the workpiece W. In an example illustrated in FIG. 22, both of the end effector 13c and the common optical system 116 (especially, the fθ lens 1162) are disposed at a position closer to the +Z side than the workpiece W. Namely, both of the end effector 13c and the common optical system 116 (especially, the fθ lens 1162) are disposed above the workpiece W.

Note that the end effector may be a member that has a function to directly affect (namely, act on) the workpiece W (alternatively, any object, the same applies to this paragraph). In this case, the end effector 13c may be referred to as an affection member that acts on the workpiece W. At least one of a robot hand, a gripper and a vacuum head is one example of the member that has the function to directly affect the workpiece W. Moreover, the end effector 13c may be a member that obtains a property of the workpiece W (namely, any information related to the workpiece W). In this case, the end effector 13c may be referred to as an obtaining member that obtains the property of the workpiece W. Here, the property of the workpiece W may include at least one of a state of workpiece W, a size of workpiece W, a shape of the workpiece W, a position of the workpiece W, a position of a feature point of the workpiece W, an attitude of the workpiece W, a surface characteristic (for example, at least one of a reflection factor, a spectral reflection factor, a surface roughness, a color and so on) of the workpiece W, a hardness of the workpiece W and so on. At least one of a measurement apparatus that measures the workpiece W, a detection apparatus that detects a characteristic of the workpiece W and an imaging apparatus that captures an image of the workpiece W is one example of the member that obtains the property of the workpiece W. Note that the processing head 11 and the position measurement apparatus 6b may be regarded to be some types of end effectors.

In the above described description, the processing light source 111 and the measurement light source 113 are separate light sources. However, a single light source may be used as each of the processing light source 111 and the measurement light source 113. In this case, a light generated by the single light source is used as the processing light EL and is also used as the measurement light ML.

In the above described description, the Galvano mirror is used as the irradiation position change optical system. However, a polygonal mirror or a MEMS mirror may be used as the irradiation position change optical system in addition to or instead of the Galvano mirror. A position adjustment optical system that is configured to change the irradiation position of the light may be used as the irradiation position change optical system in addition to or instead of the Galvano mirror. The position adjustment optical system that is used to change the irradiation position of the processing light EL may include a parallel plate that is configured to incline with respect to the propagating direction of the processing light EL in order to adjust the position of the processing light EL on a plane perpendicular to the optical path of the processing light EL (for example, to set it to be any position). The position adjustment optical system that is used to change the irradiation position of the measurement light ML may include a parallel plate that is configured to incline with respect to the propagating direction of the measurement light ML in order to adjust the position of the measurement light ML on a plane perpendicular to the optical path of the measurement light ML (for example, to set it to be any position).

In the above described description, the fθ lens 1162 whose projection characteristic is fθ is used as the irradiation optical system that irradiates the workpiece W with the processing light EL and /or the measurement light ML However, an optical system having another projection characteristic may be used as the irradiation optical system. Moreover, the irradiation optical system is not limited to a dioptric type of optical system (a dioptric optical system), and may be a reflective- dioptric type of optical system (a catadioptric optical system) or may be a reflective type of optical system (a catoptric optical system).

In the above described description, the head driving system 12 is the robot. However, the head driving system 12 is not limited to the robot as long as it is configured to move the processing head 11. For example, the head driving system 12 may be a flying object that is configured to fly at a position that is away from the workpiece W while supporting the processing head 11, for example. At least one of an airplane, a drone, a helicopter, a balloon and an airship is one example of the flying object.

### (9) Supplementary Note

Regarding the above described embodiment, below described supplementary notes are further disclosed.

### [Supplementary Note 1]

A process system that performs a processing process on an object by irradiating at least a part of the object with a processing light from a processing light source,
the process system including:
a division optical system that divides a measurement light from a measurement light source into a first light propagating on a first optical path and a second light propagating on a second optical path;
an irradiation optical system that irradiates a surface of the object with the processing light and irradiates the surface of the object with the second light;
a position change apparatus that changes a relative positional relationship between the object and the irradiation optical system;
a detection apparatus that detects an interfering light generated by an interference between the first light and a third light, which propagates on a third optical path, of a light generated due to the second light with which the surface of the object is irradiated; and
a control apparatus that controls the position change apparatus by using an output from the detection apparatus.

### [Supplementary Note 2]

The process system according to the Supplementary Note 1, wherein
the control apparatus controls the position change apparatus by using a measured amount related to a difference between a length of the second and third optical paths obtained from the output from the detection apparatus and a length of the first optical path.

### [Supplementary Note 3]

The process system according to the Supplementary Note 1 or 2, wherein
the control apparatus controls the position change apparatus on the basis of the output from the detection apparatus to maintain the relative positional relationship between the object and the irradiation optical system in a predetermined positional relationship.

### [Supplementary Note 4]

The process system according to any one of the Supplementary Notes 1 to 3, wherein
the irradiation optical system irradiates a plurality of parts of the surface of the object with the second light.

### [Supplementary Note 5]

The process system according to the Supplementary Note 4, wherein
the irradiation optical system irradiates a first part of the plurality of parts of the surface of the object with the second light along a first direction and irradiates a second part, which is different from the first part, of the plurality of parts of the surface of the object with the second light along a second direction,
the detection apparatus detects a first interfering light generated by an interference between the first light and the third light that is generated from the first part due to the second light emitted along the first direction and detects a second interfering light generated by an interference between the first light and the third light that is generated from the second part due to the second light emitted along the second direction,
the control apparatus controls the position change apparatus by using a first measured amount related to the difference obtained from a first detected result of the first interfering light from the detected apparatus and a second measured amount related to the difference obtained from a second detected result of the second interfering light from the detected apparatus.

### [Supplementary Note 6]

The process system according to the Supplementary Note 5, wherein
the control apparatus controls the position change apparatus on the basis of the output from the detection apparatus to maintain the relative positional relationship between the object and the irradiation optical system along each of a direction along an optical axis of the irradiation optical system and a rotational direction around an intersecting axis along an intersecting direction that intersects with the optical axis in a predetermined positional relationship.

### [Supplementary Note 7]

The process system according to the Supplementary Note 6, wherein
the irradiation optical system irradiates a third part, which is different from the first and second parts, of the plurality of parts of the surface of the object with the second light along a third direction,
the detection apparatus detects a third interfering light generated by an interference between the first light and the third light that is generated from the third part due to the second light emitted along the third direction,
in the case where the intersecting axis is a first intersecting axis, the control apparatus controls the position change apparatus by using the first measured amount, the second measured amount and a third measured amount related to the difference obtained from a third detected result of the third interfering light from the detected apparatus to maintain the relative positional relationship between the object and the irradiation optical system along a rotational direction around a second intersecting axis that intersects with the optical axis and the first intersecting axis in a predetermined positional relationship.

### [Supplementary Note 8]

The process system according to any one of the Supplementary Notes 1 to 7 further including an irradiation position change optical system that changes an irradiation position of the second light on the surface of the object.

### [Supplementary Note 9]

The process system according to the Supplementary Note 8, wherein
the irradiation position change optical system changes the irradiation position of the second light so that a positional relationship relative to a position that is irradiated with the processing light on the object is changed.

### [Supplementary Note 10]

The process system according to the Supplementary Note 8 or 9, wherein
the irradiation position change optical system changes the position that is irradiated with the processing light on the object.

### [Supplementary Note 11]

The process system according to any one of the Supplementary Notes 8 to 10, wherein
the irradiation optical system irradiates a plurality of parts of the surface of the object with the second light,
the irradiation position change optical system changes the irradiation position of the second light on the surface of the object so that a distribution of the plurality of parts that are irradiated with the second light is changed.

### [Supplementary Note 12]

The process system according to any one of the Supplementary Notes 8 to 11, wherein
the irradiation optical system irradiates a plurality of parts of the surface of the object with the second light,
the irradiation position change optical system changes the irradiation position of the second light on the surface of the object so that a trajectory connecting the plurality of parts that are irradiated with the second light is changed.

### [Supplementary Note 13]

The process system according to any one of the Supplementary Notes 8 to 12, wherein
the irradiation optical system irradiates a plurality of parts of the surface of the object with the second light,
the irradiation position change optical system changes the irradiation position of the second light on the surface of the object so that the number of the plurality of parts that are irradiated with the second light is changed.

### [Supplementary Note 14]

The process system according to any one of the Supplementary Notes 8 to 13, wherein
the irradiation position change optical system changes the irradiation position of the second light on the surface of the object by deflecting the second light.

### [Supplementary Note 15]

The process system according to any one of the Supplementary Notes 8 to 14, wherein
the second light includes a pulsed light,
the irradiation position change optical system changes an irradiation position of the pulsed light on the surface of the object.

### [Supplementary Note 16]

The process system according to the Supplementary Note 15, wherein
the irradiation position change optical system changes the irradiation position of the pulsed light on the surface of the object by changing a sweeping speed by which the surface of the object is swept with the second light.

### [Supplementary Note 17]

The process system according to any one of the Supplementary Notes 8 to 16, wherein
the irradiation optical system irradiates a plurality of parts of the surface of the object with the second light,
the irradiation position change optical system changes the irradiation position of the second light on the surface of the object so that the plurality of parts that are irradiated with the second light in sequence.

### [Supplementary Note 18]

The process system according to any one of the Supplementary Notes 8 to 17, wherein
the processing light and the second light entering the irradiation position change optical system enters the irradiation optical system.

### [Supplementary Note 19]

The process system according to any one of the Supplementary Notes 8 to 18 further including:
a processing optical system that emits, toward the irradiation position change optical system, the processing light that is from the processing light source; and
a measurement optical system that includes the division optical system and an optical member for forming the first optical path and that emits the second light toward the irradiation position change optical system.

### [Supplementary Note 20]

The process system according to the Supplementary Note 19, wherein
the measurement optical system includes the detection apparatus.

### [Supplementary Note 21]

The process system according to any one of the Supplementary Notes 1 to 20 further including:
a processing optical system that emits, toward the irradiation optical system, the processing light that is from the processing light source; and
a measurement optical system that includes the division optical system and an optical member for forming the first optical path and that emits the second light toward the irradiation optical system.

### [Supplementary Note 22]

The process system according to any one of the Supplementary Notes 1 to 21, wherein
the second light includes a pulsed light,
an irradiation position of the second light on the surface of the object is changed by changing an emitting cycle of the pulsed light.

### [Supplementary Note 23]

The process system according to any one of the Supplementary Notes 1 to 22, wherein
the irradiation optical system emits the processing light in a direction that is same as a direction in which the second light is emitted.

### [Supplementary Note 24]

The process system according to any one of the Supplementary Notes 1 to 23, wherein
a part of the surface of the object that is irradiated with the second light is located at an irradiation position of the processing light on the surface of the object or near or around the irradiation position of the processing light.

### [Supplementary Note 25]

The process system according to any one of the Supplementary Notes 1 to 24, wherein
the irradiation optical system irradiates a plurality of parts of the surface of the object with the second light,
the plurality parts are located so that a trajectory connecting the plurality of parts that are irradiated with the second light surrounds an irradiation position of the processing light on the surface of the object.

### [Supplementary Note 26]

The process system according to any one of the Supplementary Notes 1 to 25, wherein
a part of the surface of the object that is irradiated with the second light is located at a position that is away from an irradiation position of the processing light on the surface of the object along the surface of the object.

### [Supplementary Note 27]

The process system according to any one of the Supplementary Notes 1 to 26, wherein
a part of the surface of the object that is irradiated with the second light is located at a feature point of the object or near the feature point.

### [Supplementary Note 28]

The process system according to the Supplementary Note 27, wherein
the feature point includes a part of the object having a characterized shape.

### [Supplementary Note 29]

The process system according to the Supplementary Note 27 or 28, wherein
the feature point includes an index formed at the object.

### [Supplementary Note 30]

The process system according to any one of the Supplementary Notes 27 to 29, wherein
the feature point includes a processed trace by the processing process.

### [Supplementary Note 31]

The process system according to the Supplementary Note 30, wherein
the feature point is located at a border between a part of the surface of the object on which the processing process is already performed and a part of the surface of the object on which the processing process is not performed.

### [Supplementary Note 32]

The process system according to any one of the Supplementary Notes 27 to 31, wherein
the control apparatus controls the position change apparatus to maintain a relative positional relationship between the feature point of the object and the irradiation optical system in a predetermined positional relationship.

### [Supplementary Note 33]

The process system according to any one of the Supplementary Notes 1 to 32, wherein
the control apparatus controls the position change apparatus by using a measured amount related to a difference between a length of the second and third optical paths obtained from the output from the detection apparatus and a length of the first optical path and a shape information related to a shape of the object to maintain the relative positional relationship between the object and the irradiation optical system in a predetermined positional relationship.

### [Supplementary Note 34]

The process system according to the Supplementary Note 33, wherein
the control apparatus determines the relative positional relationship between the object and the irradiation optical system on the basis of the measured amount and the shape information, and controls the position change apparatus on the basis of the determined positional relationship to maintain the relative positional relationship between the object and the irradiation optical system in a predetermined positional relationship.

### [Supplementary Note 35]

The process system according to the Supplementary Note 33 or 34, wherein
the control apparatus determines the relative positional relationship between the object and the irradiation optical system in each of a first direction along an optical axis of the irradiation optical system, a second direction along a first intersecting axis that intersects with the optical axis, a third direction along a second intersecting axis that intersects with each of the optical axis and the first intersecting axis, a first rotational direction around the optical axis, a second rotational direction around the first intersecting direction and a third rotational direction around the second intersecting direction on the basis of the measured amount and the shape information, and controls the position change apparatus on the basis of the determined positional relationship to maintain the relative positional relationship between the object and the irradiation optical system in each of the first to third directions and the first to third rotational directions in a predetermined positional relationship.

### [Supplementary Note 36]

The process system according to any one of the Supplementary Notes 1 to 35, wherein
the control apparatus controls the position change apparatus by using a measured amount related to a difference between a length of the second and third optical paths obtained from the output from the detection apparatus and a length of the first optical path and a processed amount of the object by the processing process to maintain the relative positional relationship between the object and the irradiation optical system in a predetermined positional relationship.

### [Supplementary Note 37]

The process system according to the Supplementary Note 36, wherein
the processing process includes a removal process for removing a part of the object,
the control apparatus performs a removed amount reflection process that corrects the measured amount related to a removed part on which the removal process is already performed and that does not correct the measured amount related to a non-removed part on which the removal process is not performed, and controls the position change apparatus on the basis of the measured amount on which the removed amount reflection process to maintain the relative positional relationship between the object and the irradiation optical system in a predetermined positional relationship.

### [Supplementary Note 38]

The process system according to the Supplementary Note 37, wherein
the correction of the measured amount related to the removed part includes a subtraction of the measured amount.

### [Supplementary Note 39]

The process system according to the Supplementary Note 37 or 38, wherein
a predetermined positional relationship includes a positional relationship in which the measured amount on which the removed amount reflection process is performed is constant.

### [Supplementary Note 40]

The process system according to any one of the Supplementary Notes 36 to 39, wherein
the processing process includes an additive process for adding a structural object to the obj ect,
the control apparatus performs an added amount reflection process that corrects the measured amount related to an added part on which the additive process is already performed and that does not correct the measured amount related to a non-added part on which the additive process is not performed, and controls the position change apparatus on the basis of the measured amount on which the additive amount reflection process to maintain the relative positional relationship between the object and the irradiation optical system in a predetermined positional relationship.

### [Supplementary Note 41]

The process system according to the Supplementary Note 40, wherein
the correction of the measured amount related to the added part includes an addition of the measured amount.

### [Supplementary Note 42]

The process system according to the Supplementary Note 40 or 41, wherein
a predetermined positional relationship includes a positional relationship in which the measured amount on which the added amount reflection process is performed is constant.

### [Supplementary Note 43]

The process system according to any one of the Supplementary Notes 1 to 42 further including a position measurement apparatus that measures the relative positional relationship between the object and the irradiation optical system,
the control apparatus controls the position change apparatus by using a measured amount related to a difference between a length of the second and third optical paths obtained from the output from the detection apparatus and a length of the first optical path and a measured result by the position measurement apparatus to maintain the relative positional relationship between the object and the irradiation optical system in a predetermined positional relationship.

### [Supplementary Note 44]

The process system according to the Supplementary Note 43, wherein
the position measurement apparatus measures the relative positional relationship between the object and the irradiation optical system in a direction that intersects with an axis connecting the object and the irradiation optical system.

### [Supplementary Note 45]

The process system according to the Supplementary Note 43 or 44, wherein
the position measurement apparatus includes an imaging apparatus that captures an image of the surface of the obj ect.

### [Supplementary Note 46]

The process system according to any one of the Supplementary Notes 43 to 45, wherein
the control apparatus controls the position change apparatus on the basis of the measured amount to maintain the relative positional relationship between the object and the irradiation optical system in a part of a first direction along an optical axis of the irradiation optical system, a second direction along a first intersecting axis that intersects with the optical axis, a third direction along a second intersecting axis that intersects with each of the optical axis and the first intersecting axis, a first rotational direction around the optical axis, a second rotational direction around the first intersecting direction and a third rotational direction around the second intersecting direction in a predetermined positional relationship.
the control apparatus controls the position change apparatus on the basis of the measured result by the position measurement apparatus to maintain the relative positional relationship between the object and the irradiation optical system in another part of the first to third directions and the first to third rotational directions in a predetermined positional relationship.

### [Supplementary Note 47]

The process system according to the Supplementary Note 46, wherein
the control apparatus controls the position change apparatus on the basis of the measured amount to maintain the relative positional relationship between the object and the irradiation optical system in each of the first direction, the second rotational direction and the third rotational direction in a predetermined positional relationship.
the control apparatus controls the position change apparatus on the basis of the measured result by the position measurement apparatus to maintain the relative positional relationship between the object and the irradiation optical system in each of the second direction, the third direction and the first rotational direction in a predetermined positional relationship.

### [Supplementary Note 48]

The process system according to any one of the Supplementary Notes 1 to 47, wherein
the irradiation optical system irradiates the object with the second light in at least a part of a period at which the process system performs the processing process,
the control apparatus controls the position change apparatus in at least a part of the period at which the process system performs the processing process,

### [Supplementary Note 49]

A process system that performs a processing process on an object by irradiating at least a part of the object with a processing light from a processing light source,
the process system including:
a division optical system that divides a measurement light from a measurement light source into a first light propagating on a first optical path and a second light propagating on a second optical path;
an irradiation optical system that irradiates at least a part of a surface of the object with the processing light and irradiates the surface of the object with the second light;
a position change apparatus that changes a relative positional relationship between the object and a condensed position of the processing light;
a detection apparatus that detects an interfering light generated by an interference between the first light and a third light, which propagates on a third optical path, of a light generated due to the second light with which the surface of the object is irradiated; and
a control apparatus that controls the position change apparatus by using an output from the detection apparatus.

### [Supplementary Note 50]

The process system according to the Supplementary Note 49, wherein
the control apparatus controls the position change apparatus by using a measured amount related to a difference between a length of the second and third optical paths obtained from the output from the detection apparatus and a length of the first optical path.

### [Supplementary Note 51]

The process system according to the Supplementary Note 49 or 50, wherein
the position change apparatus includes a focus change member that is disposed between the processing light source and the irradiation optical system and that changes the condensed position of the processing light in an optical axis direction of the irradiation optical system.

### [Supplementary Note 52]

A process system that performs at least one process of a process using an affection member that affects an object and a process using an obtaining member that obtains an information of the object,
the process system including:
a division optical system that divides a measurement light from a measurement light source into a first light propagating on a first optical path and a second light propagating on a second optical path;
an irradiation optical system that irradiates a surface of the object with the second light;
a detection apparatus that detects an interfering light generated by an interference between the first light and a third light, which propagates on a third optical path, of a light generated due to the second light with which the surface of the object is irradiated;
a position change apparatus that changes a relative positional relationship between the object and at least one of the affection member and the obtaining member; and
a control apparatus that controls the position change apparatus by using an output from the detection apparatus.

### [Supplementary Note 53]

The process system according to the Supplementary Note 52, wherein
the control apparatus controls the position change apparatus by using a measured amount related to a difference between a length of the second and third optical paths obtained from the output from the detection apparatus and a length of the first optical path.

### [Supplementary Note 54]

The process system according to the Supplementary Note 53, wherein
the irradiation optical system irradiates a first part of the surface of the object with the second light along a first direction and irradiates a second part, which is different from the first part, of the surface of the object with the second light along a second direction,
the detection apparatus detects a first interfering light generated by an interference between the first light and the third light that is generated from the first part due to the second light emitted along the first direction and detects a second interfering light generated by an interference between the first light and the third light that is generated from the second part due to the second light emitted along the second direction,
the control apparatus controls the position change apparatus by using a first measured amount related to the difference obtained from a first detected result of the first interfering light from the detected apparatus and a second measured amount related to the difference obtained from a second detected result of the second interfering light from the detected apparatus.

### [Supplementary Note 55]

The process system according to any one of the Supplementary Notes 52 to 54, wherein
the control apparatus controls the position change apparatus on the basis of a measured amount related to a difference between a length of the second and third optical paths obtained from the output from the detection apparatus and a length of the first optical path to maintain the relative positional relationship between the object and at least one of the affection member and the obtaining member in a predetermined positional relationship.

### [Supplementary Note 56]

The process system according to any one of the Supplementary Notes 52 to 55, wherein
a direction in which the affection member or the obtaining member is disposed relative to the object is same direction as a direction in which the irradiation optical system is disposed relative to the obj ect.

### [Supplementary Note 57]

The process system according to the Supplementary Note 56 further including a position measurement apparatus the relative positional relationship between the object and at least one of the affection member and the obtaining member in a direction that intersects with an axis connecting the object and at least one of the affection member and the obtaining member.

### [Supplementary Note 58]

The process system according to the Supplementary Note 57, wherein
the control apparatus controls the position change apparatus on the basis of a measured amount related to a difference between a length of the second and third optical paths obtained from the output from the detection apparatus and a length of the first optical path and a measured result by the position measurement apparatus to maintain the relative positional relationship between the object and the affection member or the obtaining member in a predetermined positional relationship.

### [Supplementary Note 59]

The process system according to any one of the Supplementary Notes 1 to 58, wherein
the first light includes a light frequency com that is a coherent reference light having a synchronized phase,
the second light includes a light frequency com that is a measuring light,
the process system includes a reference surface to which the first light from the division optical system enters,
the detection apparatus detects an interfering signal based on an interfering light generated by an interference between the third light generated from the object due to the second light with which the object is irradiated and the first light returned from the reference surface.

### [Supplementary Note 60]

A robot system including:
a support part that supports the process system according to the Supplementary Notes 1 to 59 in a state where at least a part of the process system is movable relative to the object; and
a driving part that drives at least a part of the process system through the support part.

### [Supplementary Note 61]

The process system according to the Supplementary Note 60, wherein
the driving part has an articulated structure.

### [Supplementary Note 62]

A process system that performs a processing process on an object by irradiating at least a part of the object with a processing light from a processing light source,
the process system including:
a combining optical system that combines an optical path of a measurement light from a measurement light source and an optical path of the processing light from the processing light source;
an irradiation optical system that irradiates the object with the processing light and the measurement light that are from the combining optical system;
a position change apparatus that changes a relative positional relationship between the object and a condensed position of the processing light from the irradiation optical system;
an light reception apparatus that optically receives, through the irradiation optical system, a light generated due to the measurement light with which a surface of the object is irradiated; and
a control apparatus that controls the position change apparatus by using an output from the light reception apparatus.

### [Supplementary Note 63]

The process system according to the Supplementary Note 62, wherein
the control apparatus calculates a positional relationship between the irradiation optical system and the object by using the output from the light reception apparatus and controls the position change apparatus by using the positional relationship.

### [Supplementary Note 64]

The process system according to the Supplementary Note 62 or 63, wherein
the control apparatus calculates a position information of the object from the output from the light reception apparatus.

### [Supplementary Note 65]

The process system according to any one of the Supplementary Notes 62 to 64, wherein
the control apparatus calculates a position information of the irradiation optical system from the output of the light reception apparatus.

### [Supplementary Note 66]

The process system according to any one of the Supplementary Notes 62 to 65, wherein
the control apparatus calculates a distance information between the irradiation optical system and the object by using the output from the light reception apparatus and controls the position change apparatus by using the distance information.

### [Supplementary Note 67]

The process system according to the Supplementary Note 66, wherein
a plurality of positions of the surface of the object are irradiated with the measurement light,
the control apparatus calculates a plurality of distance information.

### [Supplementary Note 68]

The process system according to the Supplementary Note 67, wherein
the control apparatus controls the position change apparatus by using the plurality of distance information.

### [Supplementary Note 69]

The process system according to any one of the Supplementary Notes 62 to 68, wherein
the position change apparatus changes the condensed position of the processing light in an optical axis direction of the irradiation optical system.

### [Supplementary Note 70]

The process system according to any one of the Supplementary Notes 62 to 69, wherein
the position change apparatus changes the condensed position of the processing light in a direction that intersects with an optical axis direction of the irradiation optical system.

### [Supplementary Note 71]

The process system according to any one of the Supplementary Notes 62 to 70, wherein
the position change apparatus changes a relative positional relationship between the object and the irradiation optical system.

### [Supplementary Note 72]

A process system that performs a processing process on an object by irradiating at least a part of the object with a processing light from a processing light source,
the process system including:
a combining optical system that combines an optical path of a measurement light from a measurement light source and an optical path of the processing light from the processing light source;
an irradiation optical system that irradiates the object with the processing light and the measurement light that are from the combining optical system;
an light reception apparatus that optically receives, through the irradiation optical system, a light generated due to the measurement light with which a surface of the object is irradiated; and
a control apparatus that obtains a shape information of the object on the basis of an output from the light reception apparatus.

### [Supplementary Note 73]

The process system according to the Supplementary Note 72, wherein
a plurality of positions of the surface of the object are irradiated with the measurement light,
the control apparatus calculates a plurality of distance information between the irradiation optical system and the object.

### [Supplementary Note 74]

The process system according to the Supplementary Note 73, wherein
the control apparatus obtains the shape information of the object by using the plurality of distance information.

### [Supplementary Note 75]

The process system according to the Supplementary Note 73 or 74, wherein
the control apparatus performs a matching between a model information indicating a shape of the object and the plurality of distance information that are calculated by using the output from the light reception apparatus.

### [Supplementary Note 76]

A process system that is a processing apparatus for processing an object by irradiating the object with a processing light from a processing light source,
the process system including:
a combining optical system that combines an optical path of the processing light from the processing light source and an optical path of a measurement light from a measurement light source;
an irradiation optical system that irradiates the object with the processing light and the measurement light that are through the combining optical system;
a position change apparatus that changes a relative positional relationship between the object and the irradiation optical system;
an light reception apparatus that optically receives a light generated due to the measurement light with which a surface of the object is irradiated; and
a control apparatus that controls the position change apparatus,
the control apparatus controlling the position change apparatus so as to change the relative positional relationship so that the irradiation optical system is allowed to irradiate the surface of the object with the measurement light and then to maintain the relative positional relationship by using an output from the light reception apparatus.

### [Supplementary Note 77]

The process system according to the Supplementary Note 76 irradiating the object with the processing light through the irradiation optical system after maintaining the relative positional relationship.

### [Supplementary Note 78]

The process system according to the Supplementary Note 76 or 77, wherein
the position change apparatus changes a relative positional relationship between the object and a condensed position of the processing light from the irradiation optical system.

### [Supplementary Note 79]

The process system according to the Supplementary Note 78, wherein
the position change apparatus includes a Galvano mirror.

### [Supplementary Note 80]

The process system according to any one of the Supplementary Notes 77 to 79, wherein
the control apparatus changes the relative positional relationship by controlling the position change apparatus after the surface of the object is irradiated with the processing light.

### [Supplementary Note 81]

The process system according to any one of the Supplementary Notes 77 to 80, wherein
the control apparatus controls the position change apparatus by using the output from the light reception apparatus so that the relative positional relationship is fixed in at least a part of a period at which the surface of the object is irradiated with the processing light.

### [Supplementary Note 82]

A process system that performs a processing process on an object by irradiating at least a part of the object with a processing light from a processing light source,
the process system including:
a combining optical system that combines an optical path of a measurement light from a measurement light source and an optical path of the processing light from the processing light source;
an irradiation optical system that irradiates the object with the processing light and the measurement light that are from the combining optical system;
an light reception apparatus that optically receives, through the irradiation optical system, a light generated due to the measurement light with which a surface of the object is irradiated; and
a control apparatus that calculates a positional relationship between the irradiation optical system and the object by using an output from the light reception apparatus,
a plurality of positions of the surface of the object being irradiated with the measurement light.

### [Supplementary Note 83]

The process system according to the Supplementary Note 82 further including a position change apparatus that changes a relative positional relationship between the object and a condensed position of the processing light from the irradiation optical system.

### [Supplementary Note 84]

The process system according to the Supplementary Note 83, wherein
the control apparatus controls the position change apparatus by using the output from the light reception apparatus.

### [Supplementary Note 85]

The process system according to the Supplementary Note 83 or 84, wherein
the position change apparatus changes a relative positional relationship between the object and the irradiation optical system.

### [Supplementary Note 86]

The process system according to any one of the Supplementary Notes 83 to 85, wherein
the control apparatus calculates a positional relationship between the irradiation optical system and the object by using the output from the light reception apparatus and controls the position change apparatus by using the positional relationship.

### [Supplementary Note 87]

The process system according to any one of the Supplementary Notes 83 to 86, wherein
the control apparatus calculates a distance information between the irradiation optical system and the object by using the output from the light reception apparatus and controls the position change apparatus by using the distance information.

### [Supplementary Note 88]

The process system according to any one of the Supplementary Notes 82 to 87, wherein
the plurality of positions that are irradiated with the measurement light are located outside an area that is irradiated with the processing light.

### [Supplementary Note 89]

The process system according to any one of the Supplementary Notes 82 to 88, wherein
when the object is a first object, a position of the measurement light with which the first object is irradiated is different from a position of the measurement light with which a second object different from the first object is irradiated.

### [Supplementary Note 90]

A process system that performs a processing process on an object by irradiating at least a part of the object with a processing light from a processing light source,
the process system including:
a combining optical system that combines an optical path of a measurement light from a measurement light source and an optical path of the processing light from the processing light source;
an irradiation optical system that irradiates the object with the processing light and the measurement light that are from the combining optical system;
an light reception apparatus that optically receives, through the irradiation optical system, a light generated due to the measurement light with which a surface of the object is irradiated;
a distance change apparatus that changes a distance between a condensed position of the irradiation optical system and a surface of the object; and
a control apparatus that calculates a distance information between the irradiation optical system and the object by using an output from the light reception apparatus and controls the distance change apparatus by using the distance information.

### [Supplementary Note 91]

The process system according to the Supplementary Note 90 further including a position change apparatus that changes a relative positional relationship between the object and the irradiation optical system,
the control apparatus controlling the position change apparatus.

### [Supplementary Note 92]

The process system according to the Supplementary Note 91, wherein
a plurality of positions of the surface of the object are irradiated with the measurement light,
the control apparatus calculates a plurality of distance information.

### [Supplementary Note 93]

The process system according to the Supplementary Note 92, wherein
the control apparatus controls the position change apparatus by using the plurality of distance information.

### [Supplementary Note 94]

The process system according to the Supplementary Note 93, wherein
the control apparatus controls the position change apparatus to change an attitude of the irradiation optical system around an axis intersecting with an optical axis of the irradiation optical system.

### [Supplementary Note 95]

A process system that performs a processing process on an object by irradiating at least a part of the object with a processing light from a processing light source,
the process system including:
a combining optical system that combines an optical path of a measurement light from a measurement light source and an optical path of the processing light from the processing light source;
an irradiation optical system that irradiates the object with the processing light and the measurement light that are from the combining optical system;
an light reception apparatus that optically receives, through the irradiation optical system, a light generated due to the measurement light with which a surface of the object is irradiated; and
a control apparatus that calculates a positional relationship between the irradiation optical system and the object by using an output from the light reception apparatus,
a position on the surface of the object that is irradiated with the measurement light being located outside an area that is irradiated with the processing light.

### [Supplementary Note 96]

A process system that performs a processing process on an object by irradiating at least a part of the object with a processing light from a processing light source,
the process system including:
an irradiation optical system that irradiates the object with the processing light;
a measurement apparatus that irradiates a surface of the object, on which the processing process is already performed, with a measurement light and that optically receives a light generated due to the irradiated measurement light; and
a correction apparatus that corrects an output from the measurement apparatus on the basis of a processed amount by the processing process.

### [Supplementary Note 97]

A process system that performs a processing process on an object by irradiating at least a part of the object with a processing light from a processing light source,
the process system including:
a combining optical system that combines an optical path of a measurement light from a measurement light source and an optical path of the processing light from the processing light source;
an irradiation optical system that irradiates the object with the processing light and the measurement light that are from the combining optical system;
an light reception apparatus that optically receives, through the irradiation optical system, a light generated due to the measurement light with which a surface of the object is irradiated; and
a control apparatus that performs a matching between a model information indicating a shape of the object and a distance information between the irradiation optical system and the object that is calculated by using an output from the light reception apparatus.

### [Supplementary Note 98]

A process system that performs a processing process on an object by irradiating at least a part of the object with a processing light from a processing light source,
the process system including:
an irradiation optical system that irradiates the object with the processing light;
a measurement apparatus that irradiates a surface of the object, on which the processing process is already performed, with a measurement light and that optically receives a light generated due to the irradiated measurement light; and
a determination apparatus that determines whether or not a position that is irradiated with the measurement light from the measurement apparatus is in an area that is irradiated with the processing light.

### [Supplementary Note 99]

The process system according to the Supplementary Note 98 further including a monitor apparatus that monitors the surface of the object,
the determination apparatus determines on the basis of a monitored result by the monitor apparatus whether or not the position that is irradiated with the measurement light is in the area that is irradiated with the processing light.

### [Supplementary Note 100]

A process system that performs a processing process on an object by irradiating at least a part of the object with a processing light from a processing light source,
the process system including:
an irradiation optical system that irradiates the object with the processing light; and
a measurement apparatus that irradiates a surface of the object, on which the processing process is already performed, with a measurement light and that optically receives a light generated due to the irradiated measurement light,
the measurement apparatus measuring processed trace on the object by the processing light.

### [Supplementary Note 101]

A process system that performs a processing process on an object by irradiating at least a part of the object with a processing light from a processing light source,
the process system including:
an irradiation optical system that irradiates the object with the processing light; and
a measurement apparatus that irradiates a surface of the object, on which the processing process is already performed, with a measurement light and that optically receives a light generated due to the irradiated measurement light,
the measurement apparatus measuring an alignment mark on the object.

### [Supplementary Note 102]

The process system according to the Supplementary Note 101, wherein
the measurement apparatus irradiates the surface of the object with the measurement light through the irradiation optical system and optically receives the light generated due to the measurement light through the irradiation optical system.

### [Supplementary Note 103]

The process system according to the Supplementary Note 101 or 102, wherein
the measurement apparatus includes an imaging apparatus that captures an image of the surface of the obj ect.

### [Supplementary Note 104]

A process system that performs a processing process on an object by irradiating at least a part of the object with a processing light from a processing light source,
the process system including:
an irradiation optical system that irradiates the object with the processing light;
a measurement apparatus that irradiates a surface of the object, on which the processing process is already performed, with a measurement light and that optically receives a light generated due to the irradiated measurement light; and
a fluid supply apparatus that supplies a fluid from a supply port along the surface of the object that is irradiated with the processing light,
a part between an area on the surface of the object with which the processing light is irradiated and the supply port being irradiated with the measurement light from the measurement apparatu.

### [Supplementary Note 105]

A control apparatus that controls a process system.
the process system performing a processing process on an object by irradiating at least a part of the object with a processing light from a processing light source,
the process system including:
   a division optical system that divides a measurement light from a measurement light source into a first light propagating on a first optical path and a second light propagating on a second optical path;
   an irradiation optical system that irradiates a surface of the object with the processing light and irradiates the surface of the object with the second light;
   a position change apparatus that changes a relative positional relationship between the object and the irradiation optical system; and
   a detection apparatus that detects an interfering light generated by an interference between the first light and a third light, which propagates on a third optical path, of a light generated due to the second light with which the surface of the object is irradiated,
   the control apparatus controlling the position change apparatus by using an output from the detection apparatus.

### [Supplementary Note 106]

A control apparatus that controls a process system.
the process system performing a processing process on an object by irradiating at least a part of the object with a processing light from a processing light source,
the process system including:
   a division optical system that divides a measurement light from a measurement light source into a first light propagating on a first optical path and a second light propagating on a second optical path;
   an irradiation optical system that irradiates at least a part of a surface of the object with the processing light and irradiates the surface of the object with the second light;
   a position change apparatus that changes a relative positional relationship between the object and a condensed position of the processing light; and
   a detection apparatus that detects an interfering light generated by an interference between the first light and a third light, which propagates on a third optical path, of a light generated due to the second light with which the surface of the object is irradiated,
   the control apparatus controlling the position change apparatus by using an output from the detection apparatus.

### [Supplementary Note 107]

A control apparatus that controls a process system,
the process system performing at least one process of a process using an affection member that affects an object and a process using an obtaining member that obtains an information of the object,
the process system including:
   a division optical system that divides a measurement light from a measurement light source into a first light propagating on a first optical path and a second light propagating on a second optical path;
   an irradiation optical system that irradiates a surface of the object with the second light;
   a detection apparatus that detects an interfering light generated by an interference between the first light and a third light, which propagates on a third optical path, of a light generated due to the second light with which the surface of the object is irradiated; and
   a position change apparatus that changes a relative positional relationship between the object and at least one of the affection member and the obtaining member,
   the control apparatus controlling the position change apparatus by using an output from the detection apparatus.

### [Supplementary Note 108]

A process system that performs a processing process on an object by irradiating at least a part of the object with a processing light from a processing light source,
the process system including:
a division optical system that divides a measurement light from a measurement light source into a first light propagating on a first optical path and a second light propagating on a second optical path;
an irradiation optical system that irradiates a surface of the object with the processing light and irradiates the surface of the object with the second light;
a position change apparatus that changes a relative positional relationship between the object and the irradiation optical system;
a detection apparatus that detects an interfering light generated by an interference between the first light and a third light, which propagates on a third optical path, of a light generated due to the second light with which the surface of the object is irradiated; and
a reception apparatus that receives a control signal for controlling the position change apparatus by using an output from the detection apparatus.

### [Supplementary Note 109]

A process system that performs a processing process on an object by irradiating at least a part of the object with a processing light from a processing light source,
the process system including:
a division optical system that divides a measurement light from a measurement light source into a first light propagating on a first optical path and a second light propagating on a second optical path;
an irradiation optical system that irradiates at least a part of a surface of the object with the processing light and irradiates the surface of the object with the second light;
a position change apparatus that changes a relative positional relationship between the object and a condensed position of the processing light;
a detection apparatus that detects an interfering light generated by an interference between the first light and a third light, which propagates on a third optical path, of a light generated due to the second light with which the surface of the object is irradiated; and
a reception apparatus that receives a control signal for controlling the position change apparatus by using an output from the detection apparatus.

### [Supplementary Note 110]

A process system that performs at least one process of a process using an affection member that affects an object and a process using an obtaining member that obtains an information of the object,
the process system including:
a division optical system that divides a measurement light from a measurement light source into a first light propagating on a first optical path and a second light propagating on a second optical path;
an irradiation optical system that irradiates a surface of the object with the second light;
a detection apparatus that detects an interfering light generated by an interference between the first light and a third light, which propagates on a third optical path, of a light generated due to the second light with which the surface of the object is irradiated;
a position change apparatus that changes a relative positional relationship between the object and at least one of the affection member and the obtaining member; and
a reception apparatus that receives a control signal for controlling the position change apparatus by using an output from the detection apparatus.

### [Supplementary Note 111]

A computer program that is executable by a computer for controlling a process system,
the process system performing a processing process on an object by irradiating at least a part of the object with a processing light from a processing light source,
the process system including:
   a division optical system that divides a measurement light from a measurement light source into a first light propagating on a first optical path and a second light propagating on a second optical path;
   an irradiation optical system that irradiates a surface of the object with the processing light and irradiates the surface of the object with the second light;
   a position change apparatus that changes a relative positional relationship between the object and the irradiation optical system; and
   a detection apparatus that detects an interfering light generated by an interference between the first light and a third light, which propagates on a third optical path, of a light generated due to the second light with which the surface of the object is irradiated,
   the computer program allowing the computer to execute a process for controlling the position change apparatus by using an output from the detection apparatus.

### [Supplementary Note 112]

A computer program that is executable by a computer for controlling a process system,
the process system performing a processing process on an object by irradiating at least a part of the object with a processing light from a processing light source,
the process system including:
   a division optical system that divides a measurement light from a measurement light source into a first light propagating on a first optical path and a second light propagating on a second optical path;
   an irradiation optical system that irradiates at least a part of a surface of the object with the processing light and irradiates the surface of the object with the second light;
   a position change apparatus that changes a relative positional relationship between the object and a condensed position of the processing light;
   a detection apparatus that detects an interfering light generated by an interference between the first light and a third light, which propagates on a third optical path, of a light generated due to the second light with which the surface of the object is irradiated; and
   the computer program allowing the computer to execute a process for controlling the position change apparatus by using an output from the detection apparatus.

### [Supplementary Note 113]

A computer program that is executable by a computer for controlling a process system,
the process system performing at least one process of a process using an affection member that affects an object and a process using an obtaining member that obtains an information of the object,
the process system including:
   a division optical system that divides a measurement light from a measurement light source into a first light propagating on a first optical path and a second light propagating on a second optical path;
   an irradiation optical system that irradiates a surface of the object with the second light;
   a detection apparatus that detects an interfering light generated by an interference between the first light and a third light, which propagates on a third optical path, of a light generated due to the second light with which the surface of the object is irradiated;
   a position change apparatus that changes a relative positional relationship between the object and at least one of the affection member and the obtaining member; and
   the computer program allowing the computer to execute a process for controlling the position change apparatus by using an output from the detection apparatus.

The feature of each embodiment described above is allowed to be combined appropriately. A part of the feature of each embodiment described above may not be used. The feature of each embodiment described above may be allowed to be replaced by the feature of other embodiment, if needed. Moreover, the disclosures of all publications and United States patents that are cited in each embodiment described above are incorporated in the disclosures of the present application by reference if it is legally permitted.

The present invention is allowed to be changed, if desired, without departing from the essence or spirit of the invention which can be read from the claims and the entire specification, and a process system, a robot system, a control apparatus and a computer program each of which involves such changes, are also intended to be within the technical scope of the present invention.

### Description of Reference Codes

- 1: processing apparatus
- 11: processing head
- 111: processing light source
- 112: processing optical system
- 113: measurement light source
- 114: measurement optical system
- 115: combining optical system
- 116: common optical system
- 12: head driving system
- 5: control apparatus
- EL: processing light
- ML: measurement light
- SYS: processing system

## Claims

1. A process system that performs a processing process on an obj ect by irradiating at least a part of the object with a processing light from a processing light source,
the process system comprising:
a combining optical system that combines an optical path of a measurement light from a measurement light source and an optical path of the processing light from the processing light source;
an irradiation optical system that irradiates the object with the processing light and the measurement light that are from the combining optical system;
a position change apparatus that changes a relative positional relationship between the object and a condensed position of the processing light from the irradiation optical system;
an light reception apparatus that optically receives, through the irradiation optical system, a light generated due to the measurement light with which a surface of the object is irradiated; and
a control apparatus that controls the position change apparatus by using an output from the light reception apparatus.

2. The process system according to claim 1, wherein
the control apparatus calculates a positional relationship between the irradiation optical system and the object by using the output from the light reception apparatus and controls the position change apparatus by using the positional relationship.

3. The process system according to claim 1 or 2, wherein
the control apparatus calculates a position information of the object from the output from the light reception apparatus.

4. The process system according to any one of claims 1 to 3, wherein
the control apparatus calculates a position information of the irradiation optical system from the output of the light reception apparatus.

5. The process system according to any one of claims 1 to 4, wherein
the control apparatus calculates a distance information between the irradiation optical system and the object by using the output from the light reception apparatus and controls the position change apparatus by using the distance information.

6. The process system according to claim 5, wherein
a plurality of positions of the surface of the object are irradiated with the measurement light,
the control apparatus calculates a plurality of distance information.

7. The process system according to claim 6, wherein
the control apparatus controls the position change apparatus by using the plurality of distance information.

8. The process system according to any one of claims 1 to 7, wherein
the position change apparatus changes the condensed position of the processing light in an optical axis direction of the irradiation optical system.

9. The process system according to any one of claims 1 to 8, wherein
the position change apparatus changes the condensed position of the processing light in a direction that intersects with an optical axis direction of the irradiation optical system.

10. The process system according to any one of claims 1 to 9, wherein
the position change apparatus changes a relative positional relationship between the object and the irradiation optical system.

11. A process system that performs a processing process on an obj ect by irradiating at least a part of the object with a processing light from a processing light source,
the process system comprising:
a combining optical system that combines an optical path of a measurement light from a measurement light source and an optical path of the processing light from the processing light source;
an irradiation optical system that irradiates the object with the processing light and the measurement light that are from the combining optical system;
an light reception apparatus that optically receives, through the irradiation optical system, a light generated due to the measurement light with which a surface of the object is irradiated; and
a control apparatus that obtains a shape information of the object on the basis of an output from the light reception apparatus.

12. The process system according to claim 11, wherein
a plurality of positions of the surface of the object are irradiated with the measurement light,
the control apparatus calculates a plurality of distance information between the irradiation optical system and the object.

13. The process system according to claim 12, wherein
the control apparatus obtains the shape information of the object by using the plurality of distance information.

14. The process system according to claim 12 or 13, wherein
the control apparatus performs a matching between a model information indicating a shape of the object and the plurality of distance information that are calculated by using the output from the light reception apparatus.

15. A process system that is a processing apparatus for processing an object by irradiating the object with a processing light from a processing light source,
the process system comprising:
a combining optical system that combines an optical path of the processing light from the processing light source and an optical path of a measurement light from a measurement light source;
an irradiation optical system that irradiates the object with the processing light and the measurement light that are through the combining optical system;
a position change apparatus that changes a relative positional relationship between the object and the irradiation optical system;
an light reception apparatus that optically receives a light generated due to the measurement light with which a surface of the object is irradiated; and
a control apparatus that controls the position change apparatus,
the control apparatus controlling the position change apparatus so as to change the relative positional relationship so that the irradiation optical system is allowed to irradiate the surface of the object with the measurement light and then to maintain the relative positional relationship by using an output from the light reception apparatus.

16. The process system according to claim 15 irradiating the object with the processing light through the irradiation optical system after maintaining the relative positional relationship.

17. The process system according to claim 15 or 16, wherein
the position change apparatus changes a relative positional relationship between the object and a condensed position of the processing light from the irradiation optical system.

18. The process system according to claim 17, wherein
the position change apparatus includes a Galvano mirror.

19. The process system according to any one of claims 16 to 18, wherein
the control apparatus changes the relative positional relationship by controlling the position change apparatus after the object is processed by the processing light.

20. The process system according to any one of claims 16 to 19, wherein
the control apparatus controls the position change apparatus by using the output from the light reception apparatus so that the relative positional relationship is fixed in at least a part of a period at which the object is irradiated with the processing light.

21. A process system that performs a processing process on an obj ect by irradiating at least a part of the object with a processing light from a processing light source,
the process system comprising:
a combining optical system that combines an optical path of a measurement light from a measurement light source and an optical path of the processing light from the processing light source;
an irradiation optical system that irradiates the object with the processing light and the measurement light that are from the combining optical system;
an light reception apparatus that optically receives, through the irradiation optical system, a light generated due to the measurement light with which a surface of the object is irradiated; and
a control apparatus that calculates a positional relationship between the irradiation optical system and the object by using an output from the light reception apparatus,
a plurality of positions of the surface of the object being irradiated with the measurement light.

22. The process system according to claim 21 further comprising a position change apparatus that changes a relative positional relationship between the object and a condensed position of the processing light from the irradiation optical system.

23. The process system according to claim 22, wherein
the control apparatus controls the position change apparatus by using the output from the light reception apparatus.

24. The process system according to claim 22 or 23, wherein
the position change apparatus changes a relative positional relationship between the object and the irradiation optical system.

25. The process system according to any one of claims 22 to 24, wherein
the control apparatus calculates a positional relationship between the irradiation optical system and the object by using the output from the light reception apparatus and controls the position change apparatus by using the positional relationship.

26. The process system according to any one of claims 22 to 25, wherein
the control apparatus calculates a distance information between the irradiation optical system and the object by using the output from the light reception apparatus and controls the position change apparatus by using the distance information.

27. The process system according to any one of claims 21 to 26, wherein
the plurality of positions that are irradiated with the measurement light are located outside an area that is irradiated with the processing light.

28. The process system according to any one of claims 21 to 27, wherein
when the object is a first object, a position of the measurement light with which the first object is irradiated is different from a position of the measurement light with which a second object different from the first object is irradiated.

29. A process system that performs a processing process on an object by irradiating at least a part of the object with a processing light from a processing light source,
the process system comprising:
a combining optical system that combines an optical path of a measurement light from a measurement light source and an optical path of the processing light from the processing light source;
an irradiation optical system that irradiates the object with the processing light and the measurement light that are from the combining optical system;
an light reception apparatus that optically receives, through the irradiation optical system, a light generated due to the measurement light with which a surface of the object is irradiated;
a distance change apparatus that changes a distance between a condensed position of the irradiation optical system and a surface of the object; and
a control apparatus that calculates a distance information between the irradiation optical system and the object by using an output from the light reception apparatus and controls the distance change apparatus by using the distance information.

30. The process system according to claim 29 further comprising a position change apparatus that changes a relative positional relationship between the object and the irradiation optical system,
the control apparatus controlling the position change apparatus.

31. The process system according to claim 30, wherein
a plurality of positions of the surface of the object are irradiated with the measurement light,
the control apparatus calculates a plurality of distance information.

32. The process system according to claim 3, wherein
the control apparatus controls the position change apparatus by using the plurality of distance information.

33. The process system according to claim 32, wherein
the control apparatus controls the position change apparatus to change an attitude of the irradiation optical system around an axis intersecting with an optical axis of the irradiation optical system.

34. A process system that performs a processing process on an obj ect by irradiating at least a part of the object with a processing light from a processing light source,
the process system comprising:
a combining optical system that combines an optical path of a measurement light from a measurement light source and an optical path of the processing light from the processing light source;
an irradiation optical system that irradiates the object with the processing light and the measurement light that are from the combining optical system;
an light reception apparatus that optically receives, through the irradiation optical system, a light generated due to the measurement light with which a surface of the object is irradiated; and
a control apparatus that calculates a positional relationship between the irradiation optical system and the object by using an output from the light reception apparatus,
a position on the surface of the object that is irradiated with the measurement light being located outside an area that is irradiated with the processing light.
